# EUROPEAN PATENT APPLICATION

(11) **EP 4 529 045 A1**
(43) Date of publication of application: **26.03.2025**
(21) Application number: 23807301.9
(22) Date of filing: 30.03.2023
(51) Int. Cl.: H04B 10/077, H04J 14/02, H04J 14/08

(54) **OPTICAL COMMUNICATION SYSTEM, COMMUNICATION CONTROL DEVICE, AND OPTICAL PATH OPENING METHOD**

(30) Priority: 18.05.2022 WO PCT/JP2022/020660
(71) Applicant: NIPPON TELEGRAPH AND TELEPHONE CORPORATION, Chiyoda-ku, Tokyo 100-8116 (JP)
(72) Inventor: KANEKO Shin, Musashino-shi, Tokyo 180-8585 (JP); KANI Junichi, Musashino-shi, Tokyo 180-8585 (JP); SHIBATA Naotaka, Musashino-shi, Tokyo 180-8585 (JP); KIMURA Yasutaka, Musashino-shi, Tokyo 180-8585 (JP); KANAI Takuya, Musashino-shi, Tokyo 180-8585 (JP); SONE Yoshiaki, Musashino-shi, Tokyo 180-8585 (JP); KITAMURA Kei, Musashino-shi, Tokyo 180-8585 (JP)
(74) Representative: Brevalex
(86) International application number: PCT/JP2023/013200
(87) International publication number: WO 2023/223686

(57) **Abstract**

An optical communication system includes a communication control unit configured to control opening of an optical path between any of a plurality of first communication devices and any of a plurality of second communication devices, and an optical multiplexing/demultiplexing unit configured to multiplex/demultiplex signal light of a control signal transferred between each of the plurality of first communication devices and the communication control unit after the optical path is opened, and the communication control unit controls reception timings of an uplink control signal transmitted from each of the plurality of first communication devices to the communication control unit to be different from each other by permitting each of the plurality of first communication devices to transmit the uplink control signal on the basis of each round trip time of signal light reciprocating between the communication control unit and each of the plurality of first communication devices.

## Description

### Technical Field

The present invention relates to an optical communication system, a communication control apparatus and an optical path opening method.
This application claims priority based on PCT/JP2022/020660 filed in Japan on May 18, 2022, the content of which is incorporated herein by reference.

### Background Art

In order to realize a new network infrastructure that enables high speed, large capacity, remarkably low delay, and low power consumption, which cannot be realized in communication through a current network, research on an All Photonics Network (APN) based on photonics technology has progressed (see, for example, NPL 1). An APN provides end-to-end and full-mesh optical path connection utilizing wavelengths, thereby allowing a high-speed, large-capacity, function-specific wavelength-dedicated network to be flexibly provided while reducing delay to the utmost.

In an APN, in a case where a new subscriber device is connected to a network, a subscriber device management control unit in an APN controller recognizes that the subscriber device is connected. The subscriber device management control unit newly dispenses a wavelength from among unused wavelengths to the subscriber device, and instructs the subscriber device to set the wavelength. At the same time, a light distribution control unit in the APN controller selects an optimal path of signal light in accordance with a communication partner (for example, another subscriber device) of the subscriber device, and sets the transmission path of signal light (hereinafter referred to as an "optical path") using a light distribution means in a photonic gateway (hereinafter referred to as "Ph-GW"). In this way, automatic opening of an end-to-end optical path is realized.

In this way, in a conventional optical communication system, the light distribution control unit in the Ph-GW sets inter-port connection by the light distribution means so that the subscriber device during initial connection can communicate with the subscriber device management control unit. Upon completion of registration, authentication, wavelength setting, and the like of the subscriber device, the light distribution control unit changes the setting of inter-port connection by the light distribution means, and opens an optical path for directly connecting a subscriber device newly connected to a network and another subscriber device serving as a communication partner of the subscriber device. However, in the configuration of the conventional optical communication system, a communication path between the subscriber device and the subscriber device management control unit is cut off after the optical path is opened once. Therefore, as it is, there is no control channel for transferring a control signal to be transmitted and received between the subscriber device management control unit and the subscriber device.

Consequently, a method in which an optical multiplexing/demultiplexing means for multiplexing/demultiplexing signal light carrying a main signal and signal light carrying a control signal is newly provided on an optical fiber transmission line and the subscriber device management control unit is newly provided with a management control port for communicating with the subscriber device after the optical path is opened can be considered. The management control port for communication with the subscriber device after the optical path is opened and the optical multiplexing/demultiplexing means are connected to each other, so that even after the optical path is opened, the optical communication system can transfer an uplink control signal from the subscriber device to the subscriber device management control unit and a downlink control signal from the subscriber device management control unit to the subscriber device.

### Citation List

### Non Patent Literature

NPL 1: Takuya Kanai, Kazuaki Honda, Yasunari Tanaka, Shin Kaneko, Kazutaka Hara, Junichi Kani, Tomoaki Yoshida, "Photonic Gateway for All-Photonics Network," IEICE General Conference, B-8-20, March 2021

### Summary of Invention

### Technical Problem

However, in a case where the subscriber device management control unit is provided with the management control port for communication with the subscriber device after the optical path is opened as described above, the same number of management control ports as the number of optical paths are required. This results in an increase in the scale of the configuration of the subscriber device management control unit.

An object of the present invention is to provide a technique that makes it possible to transmit and receive a control signal between the subscriber device management control unit and the subscriber device before and after the optical path is opened while suppressing an increase in the scale of the configuration of the subscriber device management control unit.

### Solution to Problem

According to an aspect of the present invention, there is provided an optical communication system including: a communication control unit configured to control opening of an optical path between any of a plurality of first communication devices and any of a plurality of second communication devices; and an optical multiplexing/demultiplexing unit configured to multiplex/demultiplex signal light of a control signal transferred between each of the plurality of first communication devices and the communication control unit after the optical path is opened, wherein the communication control unit controls reception timings of an uplink control signal transmitted from each of the plurality of first communication devices to the communication control unit to be different from each other by permitting each of the plurality of first communication devices to transmit the uplink control signal on the basis of each round trip time of signal light reciprocating between the communication control unit and each of the plurality of first communication devices.

In addition, according to an aspect of the present invention, there is provided a communication control device(apparatus) configured to control opening of an optical path between any of a plurality of first communication devices and any of a plurality of second communication devices, wherein the communication control device includes a control unit configured to control reception timings of an uplink control signal transmitted from each of the plurality of first communication devices to its own device to be different from each other by permitting each of the plurality of first communication devices to transmit the uplink control signal on the basis of each round trip time of signal light reciprocating between its own device and each of the plurality of first communication devices.

In addition, according to an aspect of the present invention, there is provided an optical path opening method executed by a computer of an optical communication system having a communication control unit configured to control opening of an optical path between any of a plurality of first communication devices and any of a plurality of second communication devices, and an optical multiplexing/demultiplexing unit configured to multiplex/demultiplex signal light of a control signal transferred between each of the plurality of first communication devices and the communication control unit after the optical path is opened, the method including: an acquisition step of acquiring information indicating each round trip time of signal light reciprocating between the communication control unit and each of the plurality of first communication devices; and a control step of controlling reception timings of an uplink control signal transmitted from each of the plurality of first communication devices to the communication control unit to be different from each other by permitting each of the plurality of first communication devices to transmit the uplink control signal on the basis of the round trip time.

In addition, according to an aspect of the present invention, there is provided an optical path opening method executed by a computer of a communication control device(apparatus) configured to control opening of an optical path between any of a plurality of first communication devices and any of a plurality of second communication devices, the method including: an acquisition step of acquiring information indicating each round trip time of signal light reciprocating between the communication control device and each of the plurality of first communication devices; and a control step of controlling reception timings of an uplink control signal transmitted from each of the plurality of first communication devices to the communication control device to be different from each other by permitting each of the plurality of first communication devices to transmit the uplink control signal on the basis of the round trip time.

### Advantageous Effects of Invention

According to the present invention, it is possible to transmit and receive a control signal between the subscriber device management control unit and the subscriber device before and after the optical path is opened while suppressing an increase in the scale of the configuration of the subscriber device management control unit.

### Brief Description of Drawings

[Fig. 1]

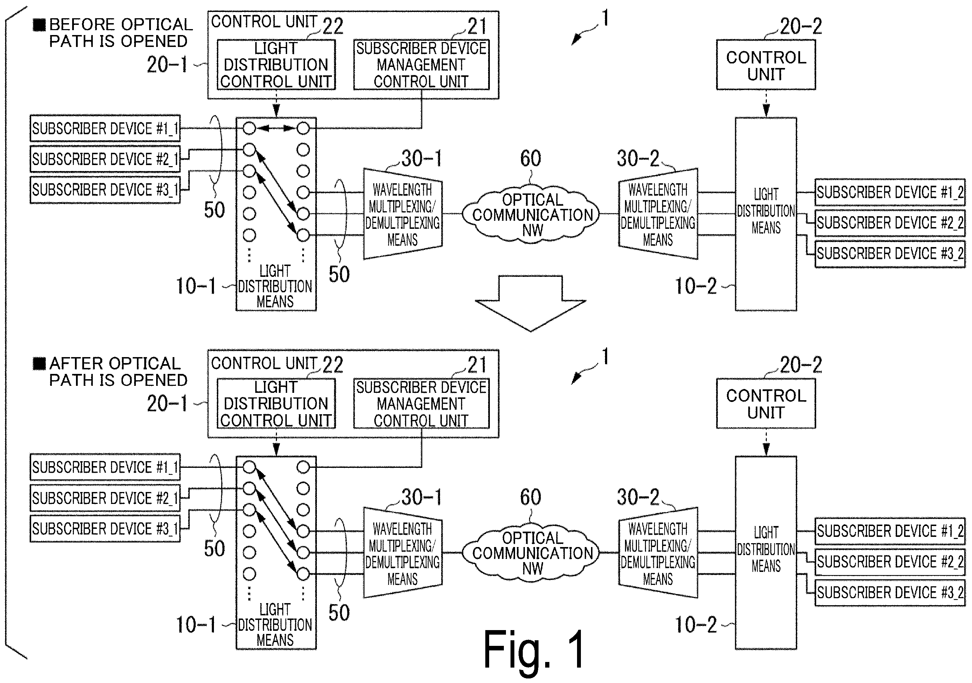

   Fig. 1 is a diagram illustrating an optical path opening method in a conventional optical communication system 1.
[Fig. 2]

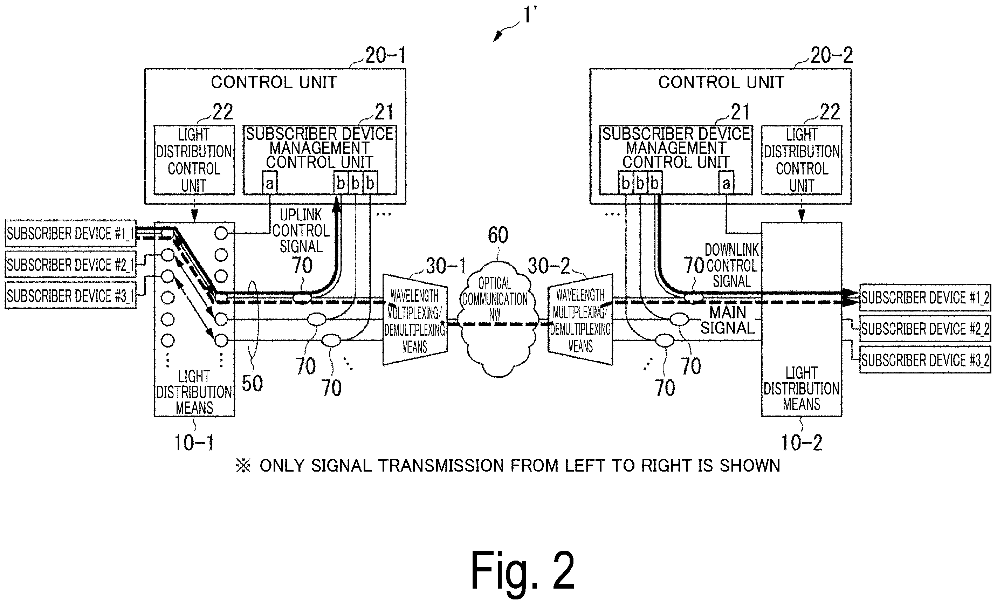

   Fig. 2 is an overall configuration diagram of a conventional optical communication system 1'.
[Fig. 3]

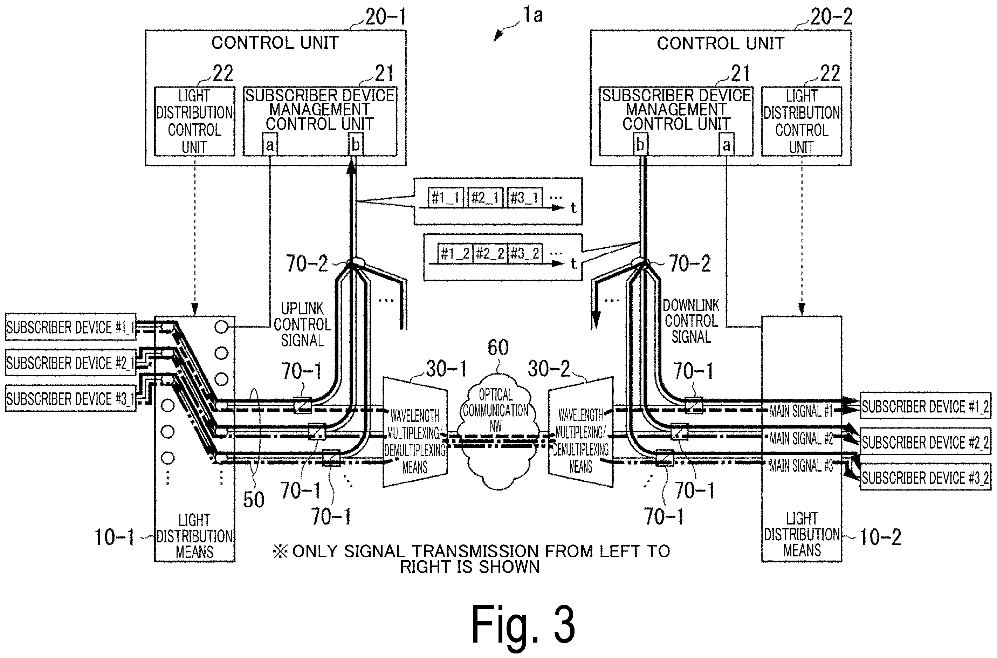

   Fig. 3 is an overall configuration diagram of an optical communication system 1a in a first embodiment of the present invention.
[Fig. 4]

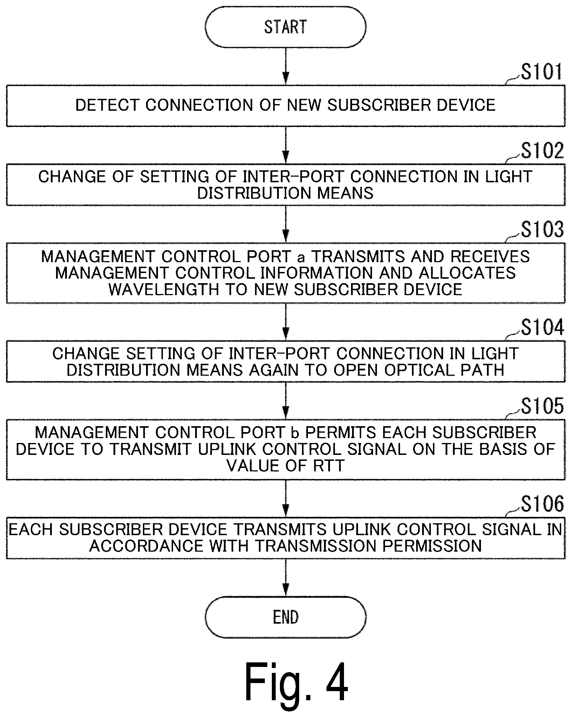

   Fig. 4 is a flowchart illustrating operations of an optical communication system 1a in the first embodiment of the present invention.
[Fig. 5]

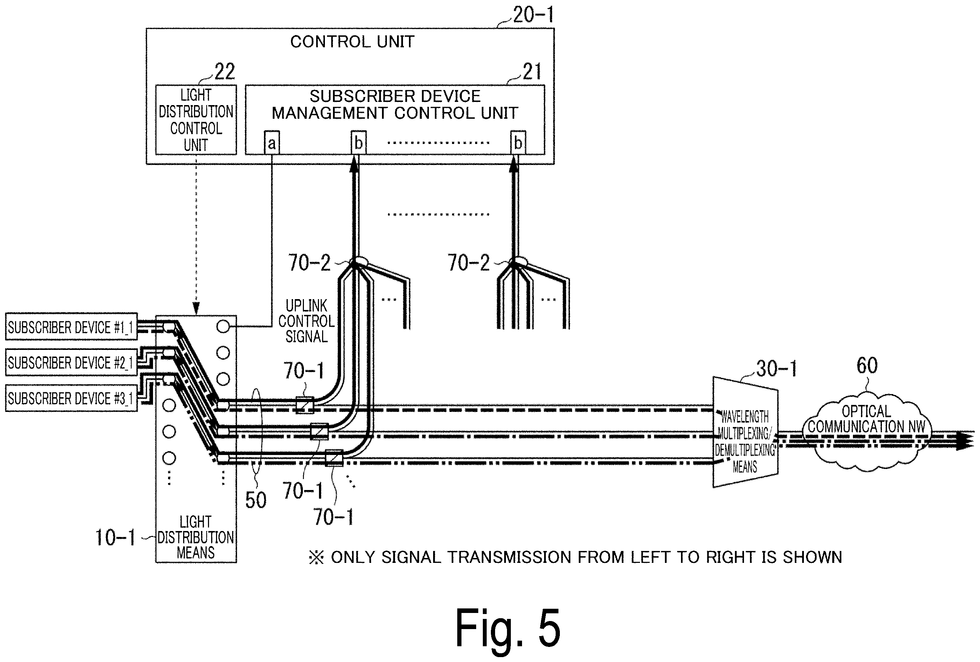

   Fig. 5 is a diagram illustrating a method of adding a management control port b of a subscriber device management control unit 21 in the first embodiment of the present invention.
[Fig. 6]

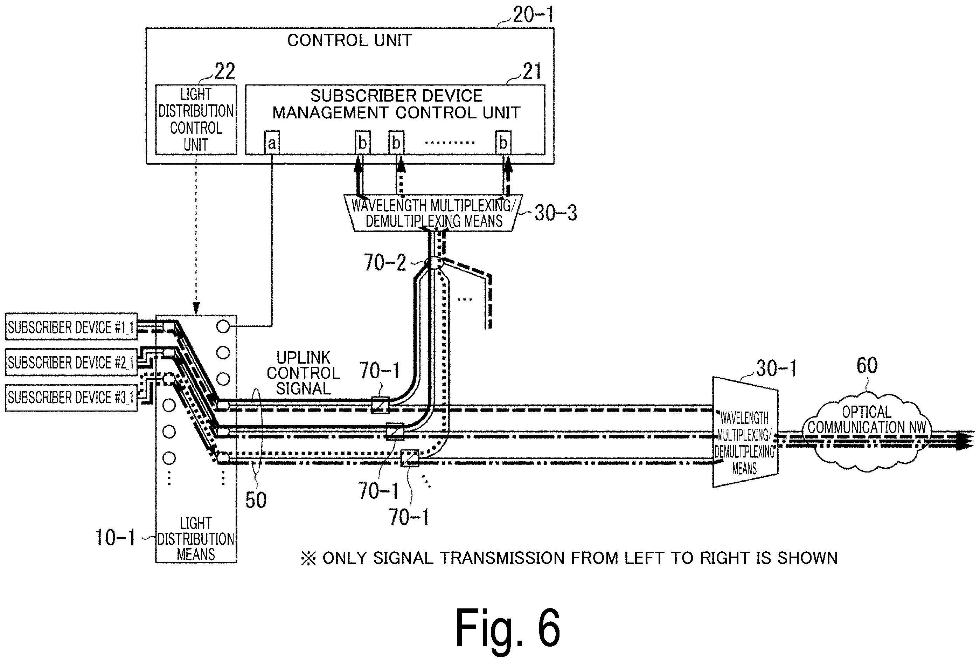

   Fig. 6 is a diagram illustrating a method of adding the management control port b of the subscriber device management control unit 21 in the first embodiment of the present invention.
[Fig. 7]

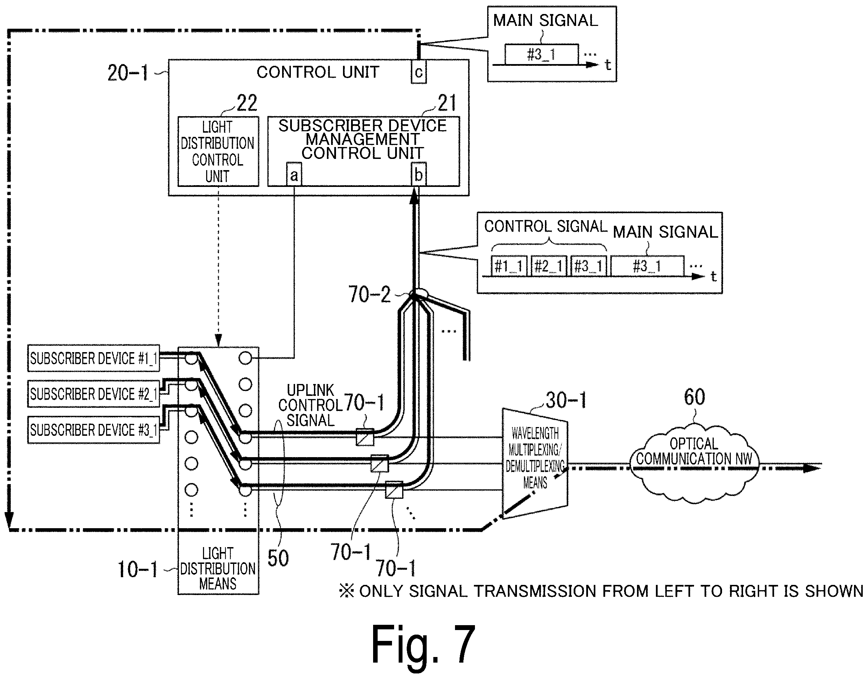

   Fig. 7 is a diagram illustrating a configuration of an optical communication system in a first modification example of the first embodiment of the present invention.
[Fig. 8]

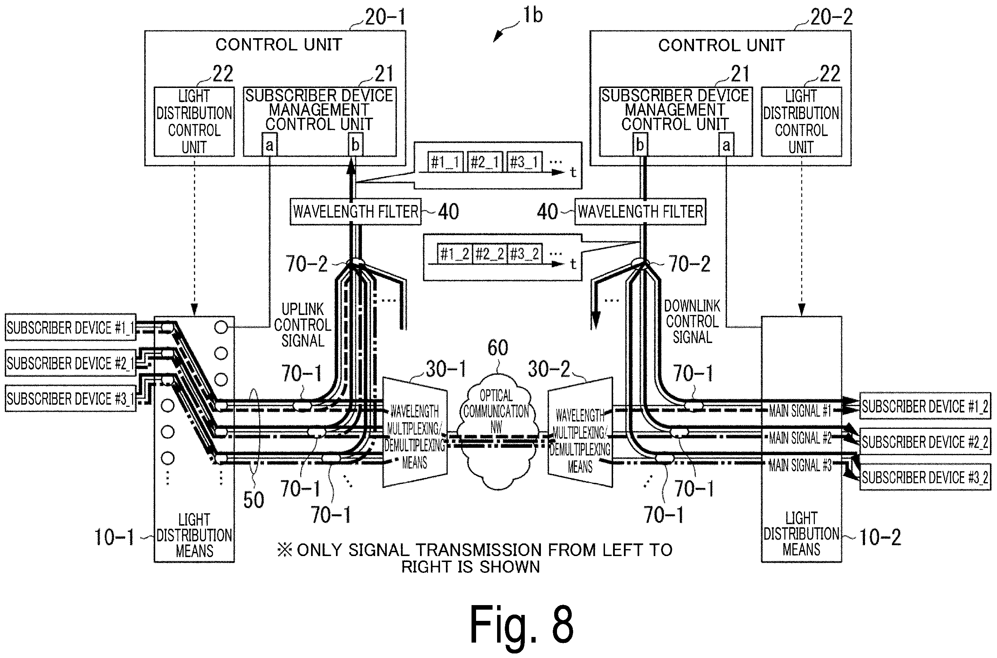

   Fig. 8 is a diagram illustrating a configuration of the optical communication system in the first modification example of the first embodiment of the present invention.
[Fig. 9]

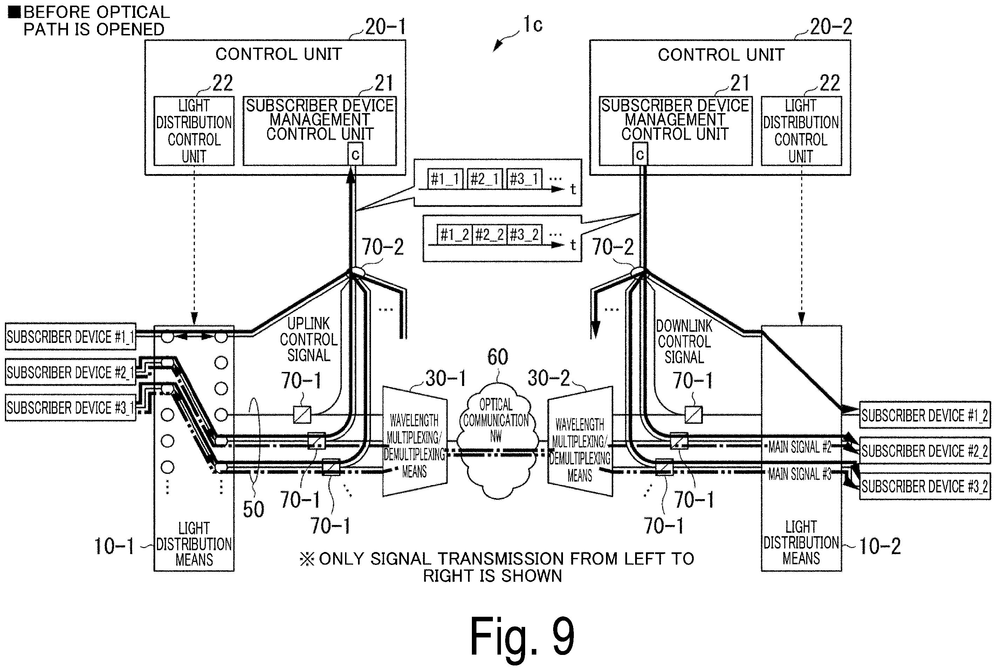

   Fig. 9 is a diagram illustrating a configuration of an optical communication system 1c in a second embodiment of the present invention.
[Fig. 10]

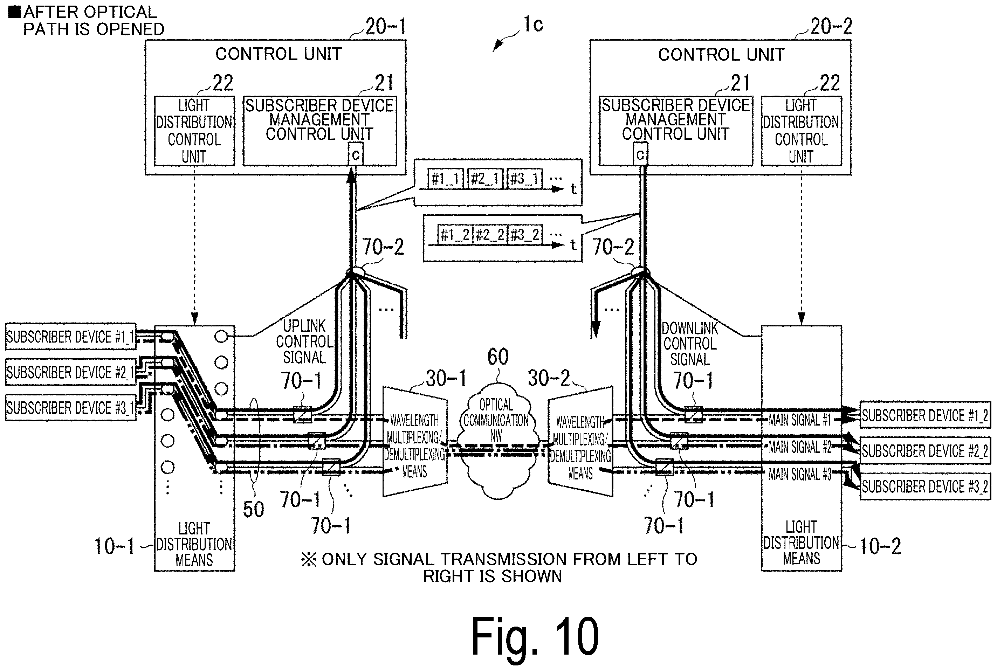

   Fig. 10 is a diagram illustrating a configuration of the optical communication system 1c in the second embodiment of the present invention.
[Fig. 11]

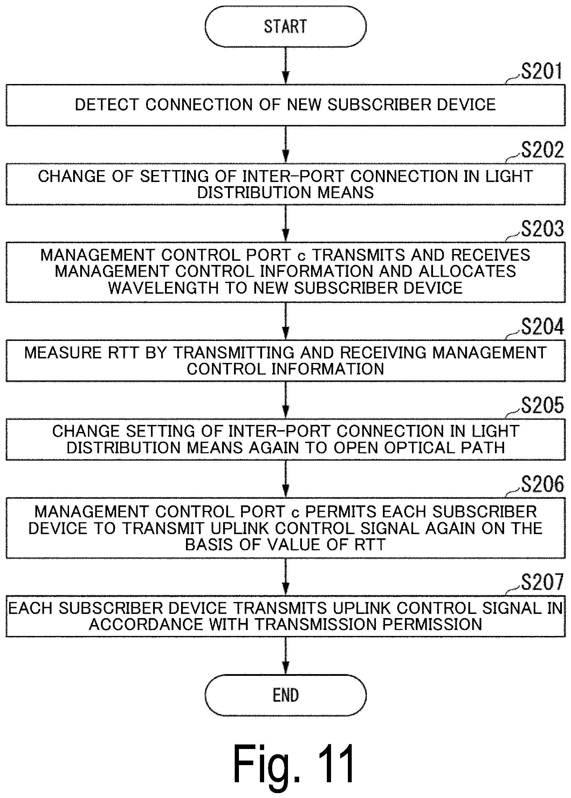

   Fig. 11 is a flowchart illustrating operations of the optical communication system 1c in the second embodiment of the present invention.
[Fig. 12]

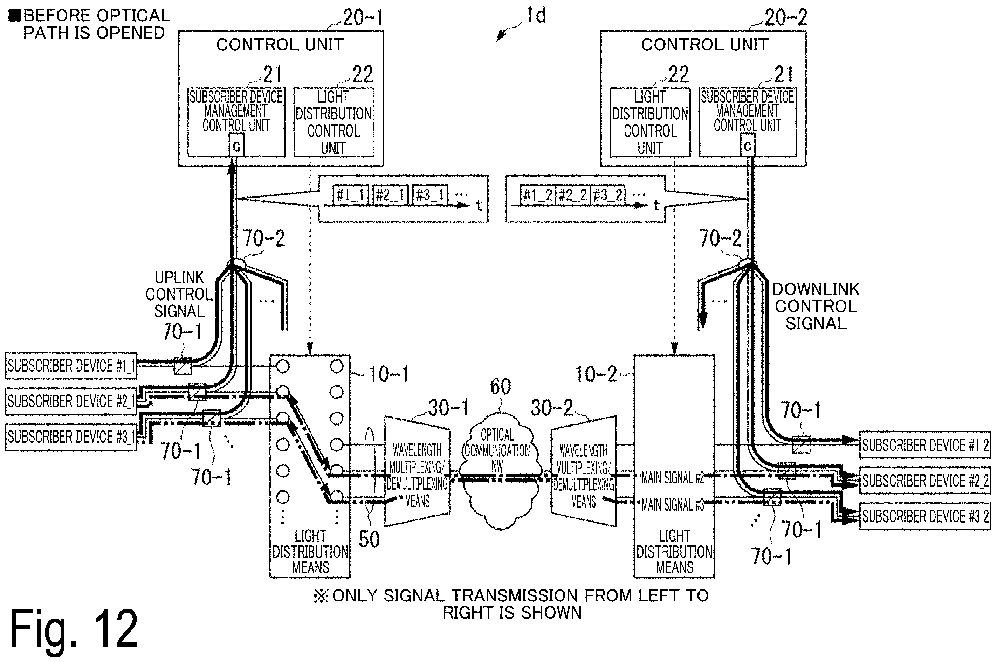

   Fig. 12 is a diagram illustrating a configuration of an optical communication system 1d in a first modification example of the second embodiment of the present invention.
[Fig. 13]

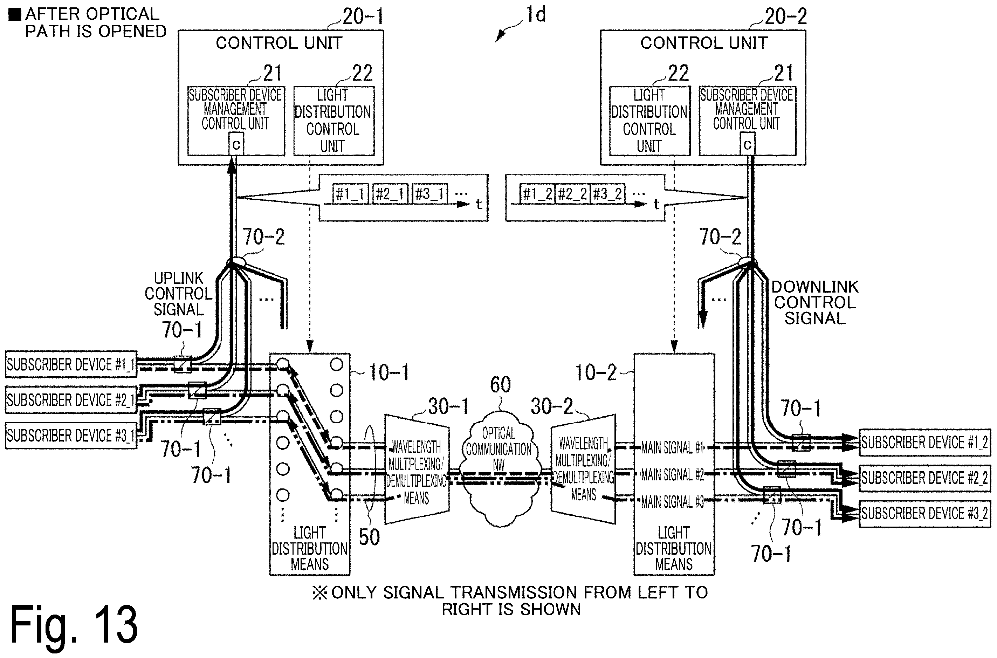

   Fig. 13 is a diagram illustrating a configuration of the optical communication system 1d in the first modification example of the second embodiment of the present invention.
[Fig. 14]

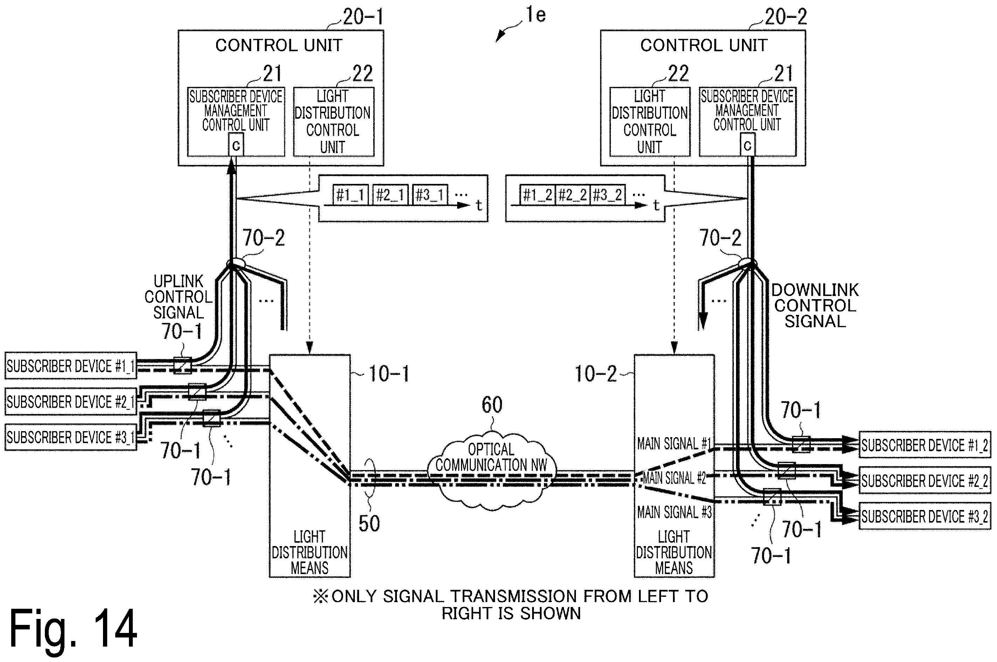

   Fig. 14 is a diagram illustrating a configuration of an optical communication system 1e in a second modification example of the second embodiment of the present invention.
[Fig. 15]

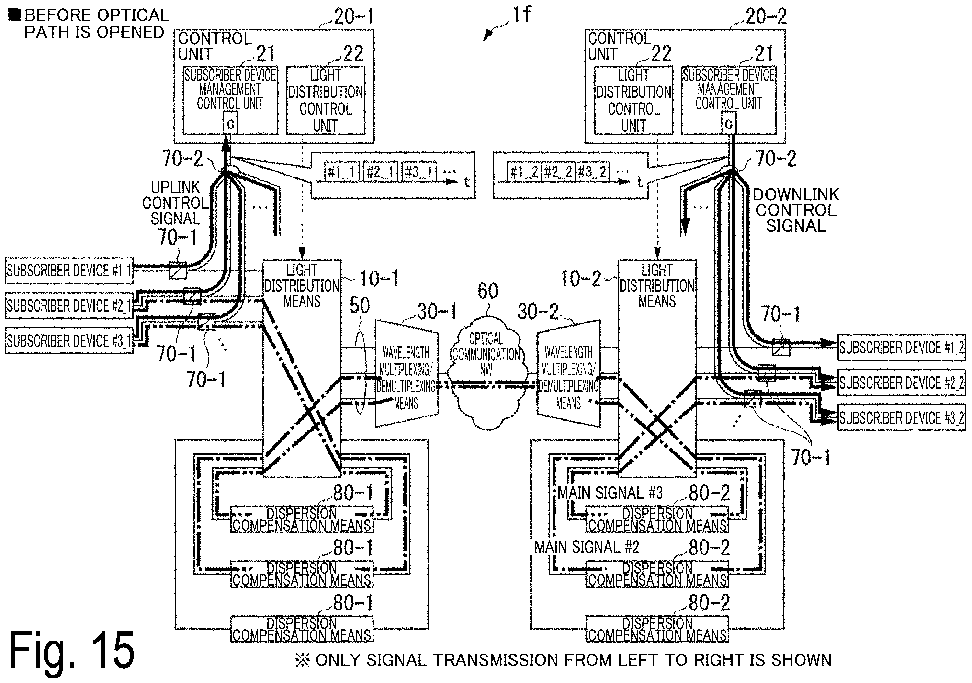

   Fig. 15 is a diagram illustrating a configuration of an optical communication system 1f in a third embodiment of the present invention.
[Fig. 16]

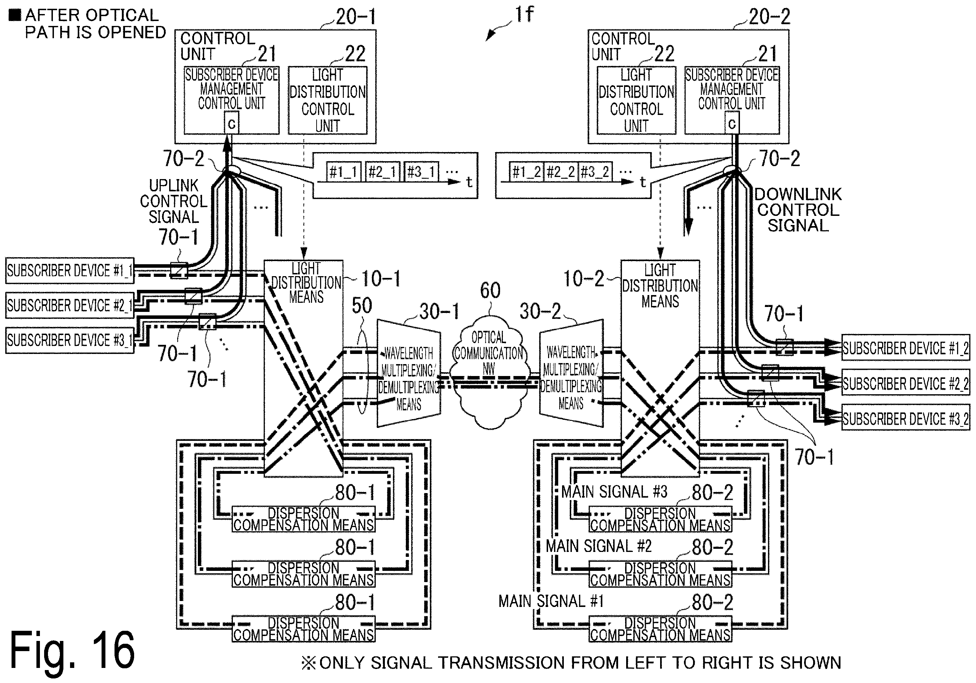

   Fig. 16 is a diagram illustrating a configuration of the optical communication system 1f in the third embodiment of the present invention.
[Fig. 17]

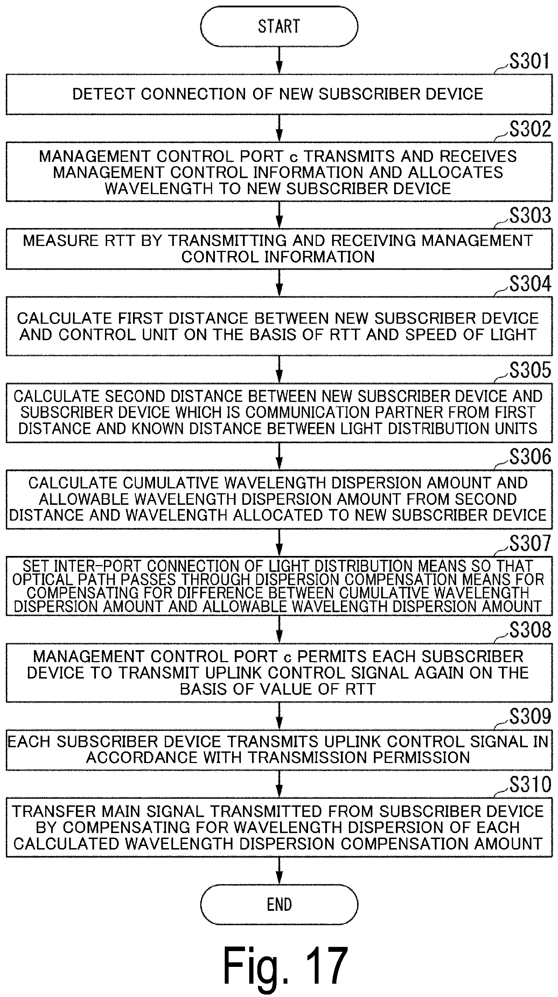

   Fig. 17 is a flowchart illustrating operations of the optical communication system 1f in the third embodiment of the present invention.
[Fig. 18]

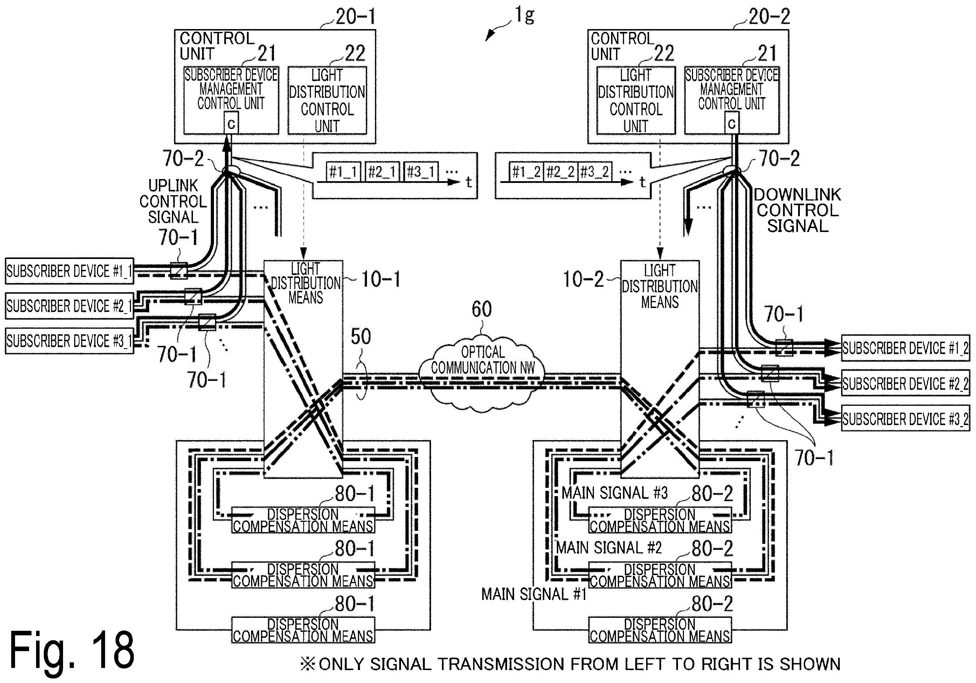

   Fig. 18 is a diagram illustrating a configuration of an optical communication system 1g in a modification example of the third embodiment of the present invention.
[Fig. 19]

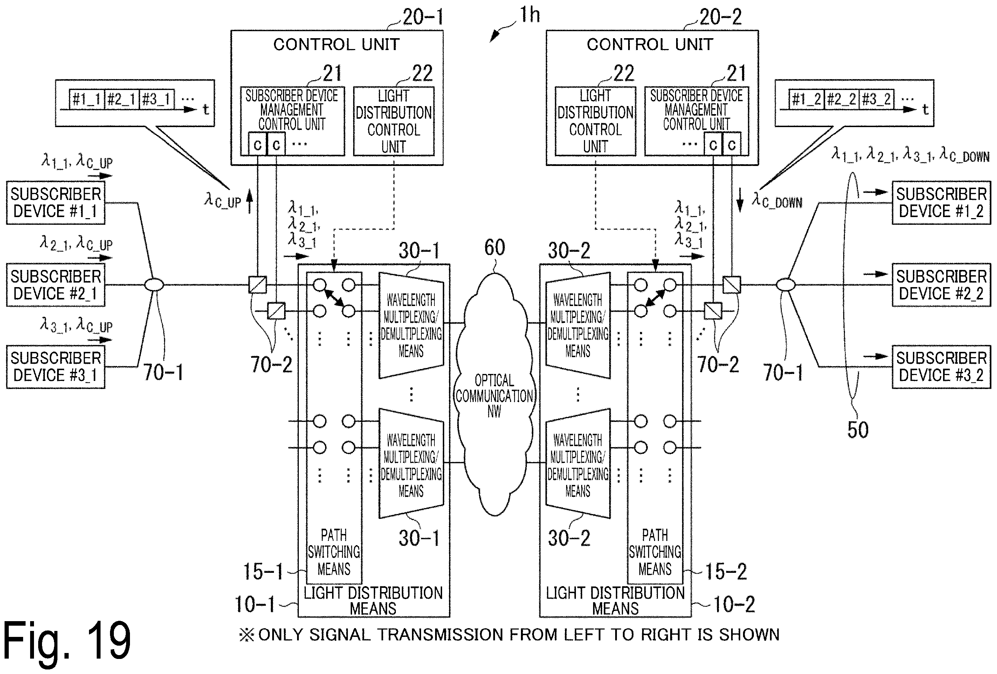

   Fig. 19 is an overall configuration diagram of an optical communication system 1h in a fourth embodiment of the present invention.
[Fig. 20]

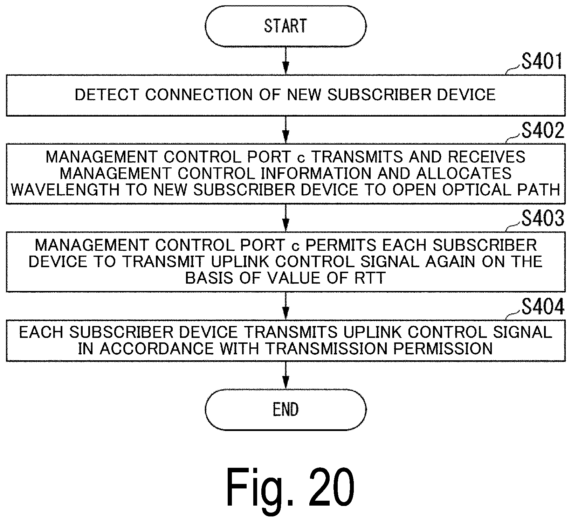

   Fig. 20 is a flowchart illustrating operations of the optical communication system 1h in the fourth embodiment of the present invention.
[Fig. 21]

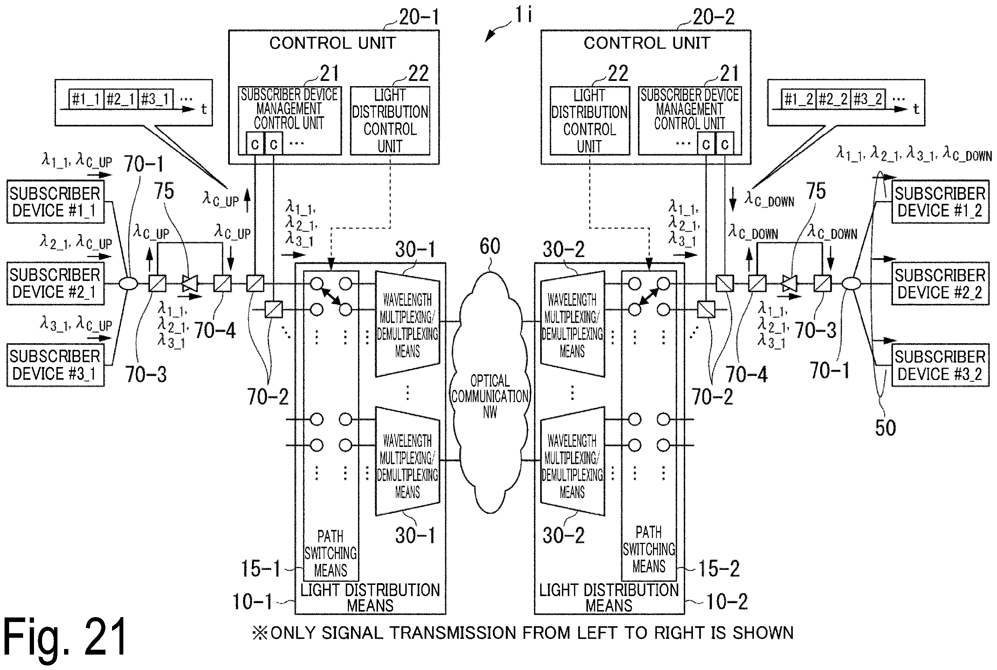

   Fig. 21 is an overall configuration diagram of an optical communication system 1i in a fifth embodiment of the present invention.
[Fig. 22]

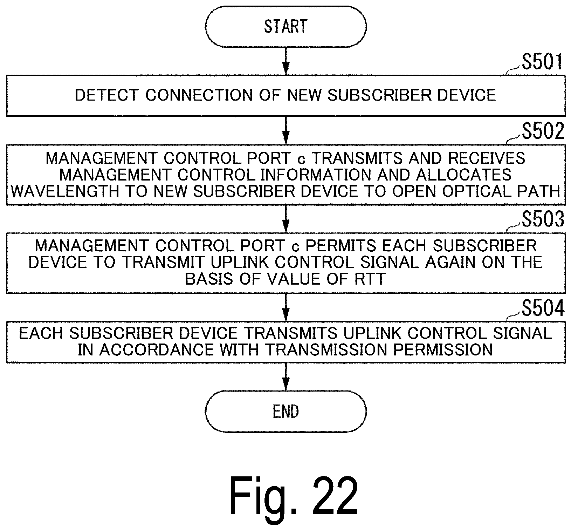

   Fig. 22 is a flowchart illustrating operations of the optical communication system 1i in the fifth embodiment of the present invention.
[Fig. 23]

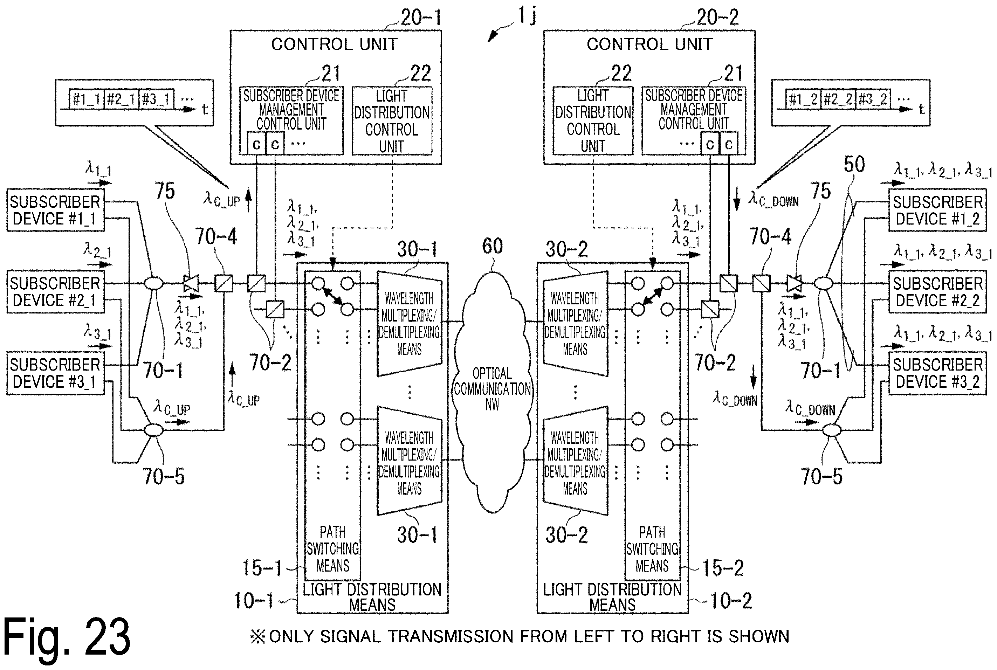

   Fig. 23 is an overall configuration diagram of an optical communication system 1j in a first modification example of the fifth embodiment of the present invention.
[Fig. 24]

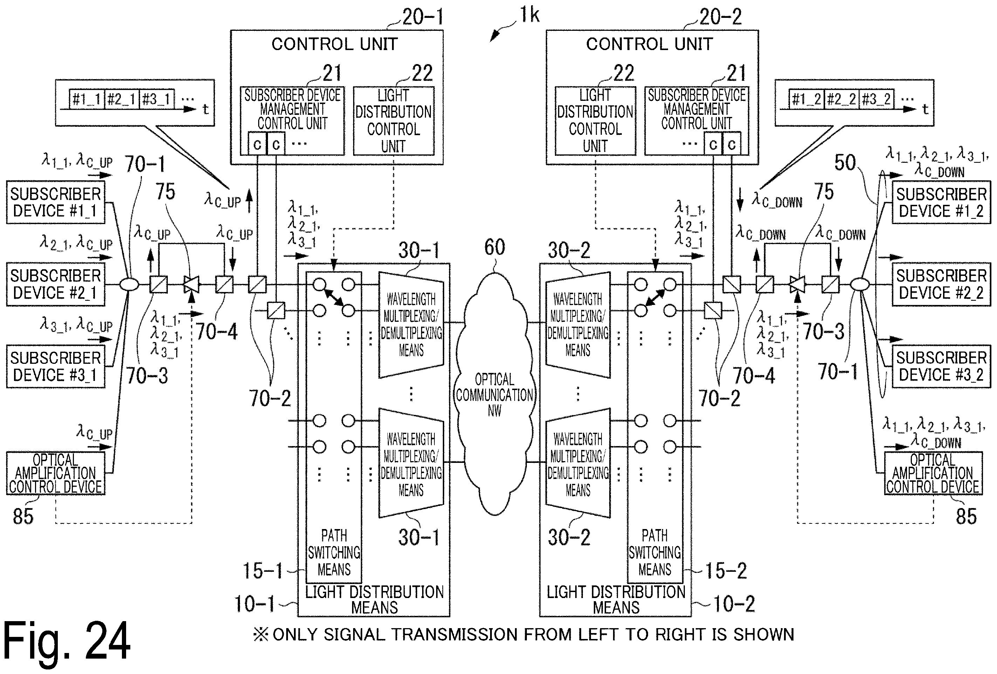

   Fig. 24 is an overall configuration diagram of an optical communication system 1k in a second modification example of the fifth embodiment of the present invention.
[Fig. 25]

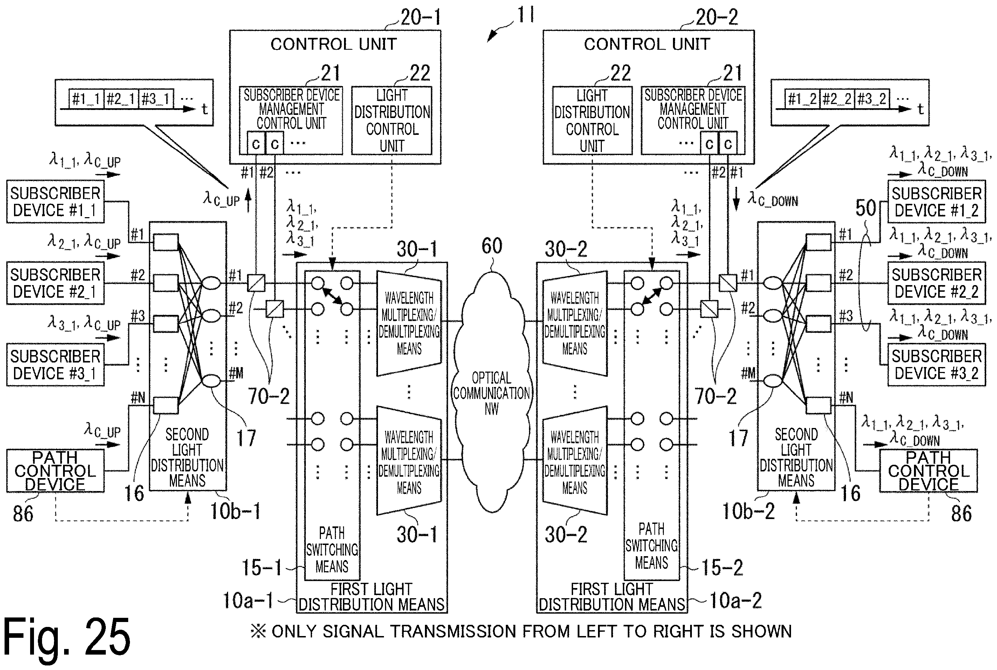

   Fig. 25 is an overall configuration diagram of an optical communication system 1l in a sixth embodiment of the present invention.
[Fig. 26]

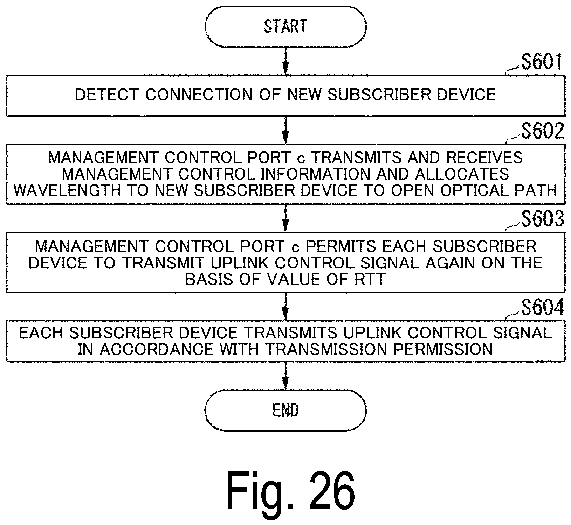

   Fig. 26 is a flowchart illustrating operations of the optical communication system 1l in the sixth embodiment of the present invention.
[Fig. 27]

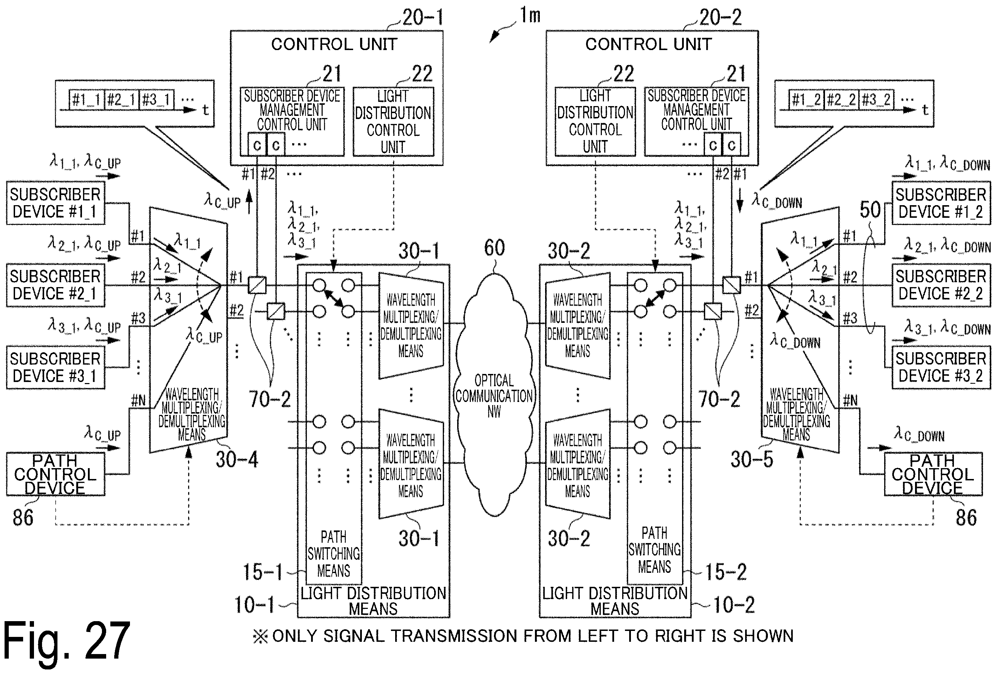

   Fig. 27 is an overall configuration diagram of an optical communication system 1m in a seventh embodiment of the present invention.
[Fig. 28]

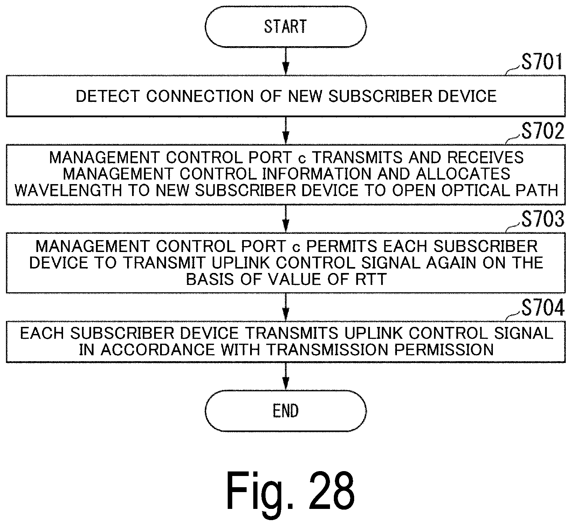

   Fig. 28 is a flowchart illustrating operations of the optical communication system 1m in the seventh embodiment of the present invention.

### Description of Embodiments

Hereinafter, an optical communication system, a communication control apparatus and an optical path opening method of an embodiment will be described with reference to the accompanying drawings.

Hereinafter, in order to make the description easier to understand, the configuration of an optical communication system 1 which is an example of a conventional optical communication system will be first described as a target for comparison with the optical communication system of the embodiment. Fig. 1 is a diagram illustrating an optical path opening method in a conventional optical communication system 1.

As shown in Fig. 1, the conventional optical communication system 1 is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of optical fiber transmission lines 50, and an optical communication network (NW) 60. The control unit 20-1 and the control unit 20-2 are each configured to include a subscriber device management control unit 21 and a light distribution control unit 22.

The light distribution means 10-1 and the light distribution means 10-2 are constituted by using, for example, optical switches or the like. The control unit 20-1 and the control unit 20-2 are constituted by using, for example, processors such as a central processing unit (CPU).

Hereinafter, as an example, an optical path opening method in a case where the subscriber device #k_1 is newly connected to a network and is communicatively connected to the subscriber device #k_2 serving as a communication partner through the optical fiber transmission line 50, the light distribution means 10-1, and the like will be described. Meanwhile, conversely, an optical path opening method in a case where the subscriber device #k_2 is newly connected to a network and is connected to the subscriber device #k_1 serving as a communication partner through the optical fiber transmission line 50, the light distribution means 10-2, and the like is also the same as the configuration to be described below.

The light distribution means 10-1 includes a plurality of ports. The light distribution means 10-1 is connected to the plurality of optical fiber transmission lines 50. The light distribution means 10-1 outputs an optical signal which is input from each port to a port with which a connection relationship is set as a connection port for the port. Meanwhile, the connection relationship between the plurality of ports can be arbitrarily changed and set.

The subscriber device #k_1 is connected to the light distribution means 10-1 through the optical fiber transmission line 50. As shown in the upper diagram in Fig. 1, the light distribution control unit 22 changes the setting of inter-port connection by the light distribution means 10-1 in order to allow the subscriber device #k_1 and the subscriber device management control unit 21 to communicate with each other during initial connection of the subscriber device #k_1 to the network.

During initial connection of the subscriber device #k_1 to the network, a management control signal required for registration and authentication of the subscriber device #k_1 to the network is exchanged between the subscriber device #k_1 and the subscriber device management control unit 21. In addition, during initial connection of the subscriber device #k_1 to the network, a management control signal for instructing a light emission wavelength used by the subscriber device #k_1 is transmitted from the subscriber device management control unit 21 to the subscriber device #k_1. For example, an auxiliary management and control channel (AMCC) or the like can be used as a channel for transmitting and receiving such a management control signal.

Next, as shown in the lower diagram in Fig. 1, upon completion of registration, authentication, wavelength setting, and the like of the subscriber device #k_1 to the network, in order for the optical signal transmitted from the subscriber device #k_1 to be transferred to the subscriber device #k_2 serving as a communication partner, the light distribution control unit 22 changes the setting of inter-port connection by the light distribution means 10-1 again. This makes it possible for the optical communication system 1 to open an optical path directly connecting the subscriber device #k_1 and the subscriber device #k_2.

However, in such a configuration of the conventional optical communication system 1, a communication path between the subscriber device #k_1 and the subscriber device management control unit 21 is cut off after the optical path is opened once. Therefore, as shown in the lower diagram in Fig. 1, as it is, there is no control channel for transmitting a downlink control signal transmitted from the subscriber device management control unit 21 to the subscriber device #k_1 or transmitting an uplink control signal transmitted from the subscriber device #k_1 to the subscriber device management control unit 21. In this case, the subscriber device management control unit 21 cannot monitor the state of the optical path and the state of the subscriber device #k_1, control switching of the optical path, and the like.

Consequently, a method in which an optical multiplexing/demultiplexing means 70 is provided on the optical fiber transmission line 50 to multiplex/demultiplex an optical signal carrying the main signal and an optical signal carrying the control signal, and the subscriber device management control unit 21 is provided with a management control port for communication with the subscriber device #k_1 after the optical path is opened can be considered. The management control port for communication with the subscriber device #k_1 after the optical path is opened and the optical multiplexing/demultiplexing means 70 are then connected to each other, so that the optical communication system 1 can transfer an uplink control signal from the subscriber device #k_1 to the subscriber device management control unit 21 and a downlink control signal from the subscriber device management control unit 21 to the subscriber device #k_1 not only before the optical path is opened but also after the optical path is opened.

Hereinafter, the overall configuration of an optical communication system 1' which is an example of a conventional optical communication system will be described. Fig. 2 is an overall configuration diagram of the conventional optical communication system 1'. As shown in Fig. 2, the conventional optical communication system 1' is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of optical fiber transmission lines 50, an optical communication network (NW) 60, and a plurality of optical multiplexing/demultiplexing means 70. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The optical multiplexing/demultiplexing means 70 is constituted by using, for example, an optical filter or the like. The control unit 20-1 and the control unit 20-2 are constituted by using processors such as, for example, CPUs.

Meanwhile, in the following description, among the components included in the conventional optical communication system 1' shown in Fig. 2, components having the same configuration as the components included in the conventional optical communication system 1 shown in Fig. 1 described above are denoted by the same reference numerals, and thus the description thereof may be omitted.

Meanwhile, Fig. 2 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 2, the optical multiplexing/demultiplexing means 70 is provided in each of the plurality of optical fiber transmission lines 50. The optical multiplexing/demultiplexing means 70 is constituted by using, for example, an optical coupler or the like. The subscriber device management control unit 21 is provided with a management control port a which is a management control port for communication with the subscriber device #k_1 before the optical path is opened and a management control port b which is a management control port for communication with the subscriber device #k_1 after the optical path is opened. The optical multiplexing/demultiplexing means 70 and the management control port b are then connected to each other, so that the conventional optical communication system 1' can transfer an uplink control signal from the subscriber device #k_1 to the subscriber device management control unit 21 and a downlink control signal from the subscriber device management control unit 21 to the subscriber device #k_1 even after the optical path is opened.

The conventional optical communication system 1' shown in Fig. 2 controls the wavelength of an optical signal carrying the downlink control signal and the wavelength of an optical signal carrying the main signal to be different wavelengths from each other. This makes it possible for the conventional optical communication system 1' to avoid interference between the main signal and the downlink control signal during reception even in a case where the frequency band of the downlink control signal and the frequency band of the main signal overlap each other. Specifically, in the conventional optical communication system 1', the subscriber device #k_1 separates the downlink control signal and the main signal having different wavelengths from each other, and detects and demodulates the downlink control signal and the main signal. This makes it possible for the subscriber device #k_1 to receive both the downlink control signal and the main signal.

Before the optical path is opened and after the optical path is opened, the subscriber device management control unit 21 transmits a downlink control signal addressed to the same subscriber device #k_1 from a different management control port. Specifically, the subscriber device management control unit 21 transmits the downlink control signal addressed to the subscriber device #k_1 from the management control port a before the optical path is opened, and transmits the downlink control signal addressed to the subscriber device #k_1 from the management control port b after the optical path is opened.

In the case of the conventional optical communication system 1' shown in Fig. 2, the same number of management control ports b (that is, management control ports for communication with the subscriber device #k_1 after the optical path is opened) as the number of optical paths to be opened are required. This results in an increase in the scale of the configuration of the subscriber device management control unit 21. An optical communication system in an embodiment of the present invention capable of solving such a problem will be described below.

### <First embodiment>

### [Configuration of optical communication system]

Hereinafter, a configuration of an optical communication system 1a in a first embodiment will be described. Fig. 3 is an overall configuration diagram of the optical communication system 1a in the first embodiment of the present invention.

As shown in Fig. 3, the optical communication system 1a in the first embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of optical fiber transmission lines 50, an optical communication network (NW) 60, a plurality of first optical multiplexing/demultiplexing means 70-1, and a plurality of second optical multiplexing/demultiplexing means 70-2. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The first optical multiplexing/demultiplexing means 70-1 and the second optical multiplexing/demultiplexing means 70-2 are constituted by using, for example, an optical filter or the like. The control unit 20-1 and the control unit 20-2 are constituted by using processors such as, for example, CPUs.

Meanwhile, in the following description, among components included in the optical communication system 1a in the first embodiment shown in Fig. 3, components having the same configurations as the components included in the conventional optical communication system 1 shown in Fig. 1 described above and the components included in the conventional optical communication system 1' shown in Fig. 2 described above are denoted by the same reference numerals, and thus the description thereof may be omitted.

Meanwhile, Fig. 3 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 3, the optical communication system 1a in the first embodiment differs from the conventional optical communication system 1a' shown in Fig. 2 described above in that the plurality of first optical multiplexing/demultiplexing means 70-1 and the plurality of second optical multiplexing/demultiplexing means 70-2 are provided.

The subscriber device #k_1 outputs an uplink control signal to be transmitted to the control unit 20-1 at a wavelength different from that of a carrier carrying the main signal. In addition, the subscriber device management control unit 21 of the control unit 20-2 outputs a downlink control signal to be transmitted to the subscriber device #k_2 at a wavelength different from that of a carrier carrying the main signal.

As shown in Fig. 3, the first optical multiplexing/demultiplexing means 70-1 is provided in each of the plurality of optical fiber transmission lines 50. The first optical multiplexing/demultiplexing means 70-1 is constituted by using, for example, an optical filter or the like. The subscriber device management control unit 21 is provided with a management control port a which is a management control port for communication with the subscriber device #k_1 before the optical path is opened and a management control port b which is a management control port for communication with the subscriber device #k_1 after the optical path is opened. The first optical multiplexing/demultiplexing means 70-1 and the management control port b are then connected to each other, so that the optical communication system 1a in the first embodiment can transfer an uplink control signal from the subscriber device #k_1 to the subscriber device management control unit 21 and a downlink control signal from the subscriber device management control unit 21 to the subscriber device #k_1 even after the optical path is opened.

The first optical multiplexing/demultiplexing means 70-1 transfers an uplink control signal transferred from the subscriber device #k_1 to the subscriber device management control unit 21 of the control unit 20-1 to the second optical multiplexing/demultiplexing means 70-2 after the optical path is opened. In addition, the first optical multiplexing/demultiplexing means 70-1 wavelength-multiplexes signal light including the downlink control signal transferred from the subscriber device management control unit 21 of the control unit 20-2 to the subscriber device #k_2 and signal light including a main signal after the optical path is opened.

The second optical multiplexing/demultiplexing means 70-2 is connected to the plurality of first optical multiplexing/demultiplexing means 70-1. The second optical multiplexing/demultiplexing means 70-2 multiplexes the uplink control signal input from the plurality of first optical multiplexing/demultiplexing means 70-1 and outputs it to the management control port b of the subscriber device management control unit of the control unit 20-1. In addition, the second optical multiplexing/demultiplexing means 70-2 branches the downlink control signal output from the management control port b of the subscriber device management control unit of the control unit 20-2 and outputs it to the first optical multiplexing/demultiplexing means 70-1.

The subscriber device #k_1 outputs signal light including the uplink control signal only during a time slot permitted by the subscriber device management control unit 21 of the control unit 20-1. The subscriber device #k_1 stops outputting signal light during time slots other than the time slot permitted by the subscriber device management control unit 21 of the control unit 20-1. That is, the signal light including the uplink control signal is burst signal light.

The subscriber device management control unit 21 of the control unit 20-1 stores each round trip time (RTT) in the transfer of the signal light between each of the subscriber devices #k_1 (k = 1, 2, ···) and its own subscriber device management control unit 21, for example, in a storage medium (not shown) included in its own device. The subscriber device management control unit 21 performs control so that the uplink control signal transmitted from the subscriber device #k_1 which is burst signal light does not reach its own subscriber device management control unit 21 in the same time slot as the uplink control signal transmitted from the other subscriber device #k_1.

Specifically, the subscriber device management control unit 21 of the control unit 20-1 refers to, for example, the value of RTT stored in the above storage medium (not shown). The subscriber device management control unit 21 imparts permission to transmit the signal light including the uplink control signal to each subscriber device #k_1 at a timing determined on the basis of the value of the RTT.

The subscriber device management control unit 21 of the control unit 20-1 photoelectrically converts the signal light including the uplink control signal, and then specifies the subscriber device #k_1 which is a transmission source of the received uplink control signal on the basis of an identifier included in the uplink control signal. For example, as the identifier, an identifier (ID) assigned to the subscriber device #k_1 from the subscriber device management control unit 21 of the control unit 20-1, a media access control (MAC) address of the subscriber device #k_1, or the like can be used.

The signal light including the downlink control signal is signal light in which the downlink control signal addressed to each subscriber device #k_2 is time-multiplexed. The subscriber device #k_2 photoelectrically converts the signal light including the downlink control signal, and then selectively receives a downlink control signal addressed to its own device from the time-multiplexed downlink control signal on the basis of the identifier included in the downlink control signal. For example, as the identifier, an ID assigned to the subscriber device #k_2 from the subscriber device management control unit 21 of the control unit 20-2, a MAC address of the subscriber device #k_2, or the like can be used.

The wavelength of the signal light including the uplink control signal transmitted by each subscriber device #k_1 is a wavelength within a wavelength range transmitted from a port connected to the light distribution means 10-1 (the left port of the first optical multiplexing/demultiplexing means 70-1 connected to the light distribution means 10-1 in Fig. 3) to a port connected to the second optical multiplexing/demultiplexing means 70-2 (the upper right port of the first optical multiplexing/demultiplexing means 70-1 connected to the light distribution means 10-1 in Fig. 3) among the input/output ports of the first optical multiplexing/demultiplexing means 70-1. Meanwhile, the wavelengths of the signal light including the uplink control signal transmitted by each subscriber device #k_1 may all be the same wavelength, or may be different wavelengths from each other.

The wavelength of the signal light including the downlink control signal transmitted by the subscriber device management control unit 21 of the control unit 20-2 is a wavelength within a wavelength range transmitted from a port connected to the second optical multiplexing/demultiplexing means 70-2 (the upper left port of the first optical multiplexing/demultiplexing means 70-1 connected to the light distribution means 10-2 in Fig. 3) to a port connected to the light distribution means 10-2 (the right port of the first optical multiplexing/demultiplexing means 70-1 connected to the light distribution means 10-2 in Fig. 3) among the input/output ports of the first optical multiplexing/demultiplexing means 70-1.

Meanwhile, the optical communication system 1a illustrated in Fig. 3 has a configuration in which there is a section where signal light transferred from the left side to the right side (that is, from the subscriber device #k_1 side to the subscriber device #k_2 side) (hereinafter referred to as "rightward signal light") and signal light transferred from the right side to the left side (that is, rom the subscriber device #k_2 side to the subscriber device #k_1 side) (hereinafter referred to as "leftward signal light") in Fig. 3 flow through the same optical fiber core wire. However, the present invention is not limited to such a configuration, and it is also possible to have a configuration in which there is a section where the rightward signal light and the leftward signal light flow through different optical fiber core wires from each other.

In a case where there is a section where the rightward signal light and the leftward signal light flow through the same optical fiber core wire (for example, as shown in Fig. 3), the reflection of one signal light occurring in the optical fiber transmission line gives rise to a deterioration in the reception characteristics of the other signal light (signal light traveling in the opposite direction). In order to prevent such deterioration in the reception characteristics, for example, the subscriber device management control unit 21 imparts transmission permission to the subscriber device #k_1 and the subscriber device #k_2 so that the wavelength of the rightward signal light and the wavelength of the leftward signal are set to be different wavelengths from each other or the rightward signal light and the leftward signal light are transmitted at different timings from each other.

In the optical communication system 1a illustrated in Fig. 3, the wavelength of the signal light including the uplink control signal and the wavelength of the signal light including the downlink control signal are different wavelengths from each other. However, in a case where there is no section in which the rightward signal light and leftward signal light flow through the same optical fiber core wire as in the optical communication system 1a illustrated in Fig. 3, the wavelength of the signal light including the uplink control signal and the wavelength of the signal light including the downlink control signal can be made to be the same wavelength.

Meanwhile, in the optical communication system 1a shown in Fig. 3, a light distribution means (such as, for example, an optical switch) may be used instead of the second optical multiplexing/demultiplexing means 70-2 (such as, for example, an optical filter). In this case, for example, the connection relationship between the ports of the light distribution means need only be dynamically set in accordance with a timing at which the signal light including the uplink control signal from each subscriber device #k_1 reaches the light distribution means. The arrived signal light including the uplink control signal need only be received at the management control port b of the subscriber device management control unit 21 of the control unit 20-1.

### [Operation of optical communication system]

Hereinafter, an example of the operation of the optical communication system 1a will be described. Fig. 4 is a flowchart illustrating operations of the optical communication system 1a in the first embodiment of the present invention. The operation of the optical communication system 1a shown in the flowchart of Fig. 4 is started when a new subscriber device #k_1 is connected to a network.

In a case where the new subscriber device #k_1 is connected to the network, the subscriber device management control unit 21 of the control unit 20-1 detects the connection of the new subscriber device #k_1 to the network (step S101). In a case where the subscriber device management control unit 21 detects the connection of the new subscriber device #k_1 to the network, the light distribution control unit 22 changes the setting of the inter-port connection in the light distribution means 10-1 so that the management control port a of the subscriber device management control unit 21 and the new subscriber device #k_1 are communicatively connected to each other (step S102).

The subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port a. The subscriber device management control unit 21 instructs the new subscriber device #k_1 to set a wavelength, and allocates a wavelength to the subscriber device #k_1 (step S103).

When a wavelength is allocated to the new subscriber device #k_1, the light distribution control unit 22 changes the setting of inter-port connection in the light distribution means 10-1 again, so that the optical path is opened. At this time, the management control port b of the subscriber device management control unit 21 and the new subscriber device #k_1 are communicatively connected to each other (Step S104).

The subscriber device management control unit 21 of the control unit 20-1 refers to, for example, the value of RTT for each subscriber device #k_1 stored in advance in a storage medium (not shown) included in its own device. As described above, the RTT referred to here is the RTT of the signal light between the subscriber device management control unit 21 of the control unit 20-1 and each of the subscriber devices #k_1. The subscriber device management control unit 21 uses the management control port b to impart permission to transmit the uplink control signal to each subscriber device #k_1 on the basis of the value of RTT so that the uplink control signal which is burst signal light transmitted from each subscriber device #k_1 does not collide (step S105).

Each subscriber device #k_1 transmits the uplink control signal to the subscriber device management control unit 21 at each timing corresponding to the transmission permission notified of by the subscriber device management control unit 21 (step S106). The operation of the optical communication system 1a shown in the flowchart of Fig. 4 is completed as described above.

### [Addition of management control port b]

**In** a case where new subscriber devices #k_1 are successively connected to the optical communication system 1a, the number of subscriber devices #k_1 exceeding the number that can be accommodated by one management control port b of the subscriber device management control unit 21 can be considered. In such a case, for example, the management control port b of the subscriber device management control unit 21 of the control unit 20-1 need only be added.

Figs. 5 and 6 are diagrams illustrating a method of adding the management control port b of the subscriber device management control unit 21 in the first embodiment of the present invention. Meanwhile, Fig. 5 shows only a configuration in which the subscriber device management control unit 21 of the control unit 20-1 receives the uplink control signal, and does not show a configuration in which the subscriber device management control unit 21 of the control unit 20-2 transmits the downlink control signal.

Fig. 5 shows an example of the configuration of the optical communication system 1a in a case where the management control ports b having the same wavelength of signal light to be transmitted and received are added in parallel to the subscriber device management control unit 21. In Fig. 5, the wavelengths of the signal light including the uplink control signal transmitted from each subscriber device #k_1 are the same as each other. In a case where the management control port b is added, the second optical multiplexing/demultiplexing means 70-2 connected to the added management control port b is also added. In the optical communication system 1a shown in Fig. 5, it is determined in advance which subscriber device #k_1 transfers an uplink control signal to be transmitted to the subscriber device management control unit 21 through which second optical multiplexing/demultiplexing means 70-2.

Fig. 6 shows an example of the configuration of the optical communication system 1a in a case where the management control ports b having different wavelength of signal light to be transmitted and received are added in parallel to the subscriber device management control unit 21. As shown in Fig. 6, a wavelength multiplexing/demultiplexing means 30-3 is provided between the second optical multiplexing/demultiplexing means 70-2 and the control unit 20-1. In Fig. 6, the wavelengths of the signal light including the uplink control signal transmitted from the subscriber device #k_1 communicating with a different management control port b are different from each other.

The second optical multiplexing/demultiplexing means 70-2 multiplexes the signal light including the uplink control signal transmitted from each subscriber device #k_1 and outputs it to the wavelength multiplexing/demultiplexing means 30-3. The wavelength multiplexing/demultiplexing means 30-3 separates the multiplexed signal light for each wavelength, and transfers each piece of separated signal light (including the uplink control signal) to the management control port b (of the subscriber device management control unit 21) determined in advance for each wavelength.

In a case where the management control port b is added, as shown in Fig. 6, it need only be installed to add the output destination of the signal light from the wavelength multiplexing/demultiplexing means 30-3. Therefore, in this case, it is not necessary to add the second optical multiplexing/demultiplexing means 70-2 and the like in conjunction with the addition of the management control port b.

As described above, the optical communication system 1a in the first embodiment of the present invention includes the plurality of first optical multiplexing/demultiplexing means 70-1 and the plurality of second optical multiplexing/demultiplexing means 70-2. The subscriber device #k_1 outputs an uplink control signal addressed to the subscriber device management control unit 21 of the control unit 20-1 at a wavelength different from that of an optical carrier carrying the main signal. The subscriber device management control unit 21 of the control unit 20-2 outputs a downlink control signal addressed to the subscriber device #k_2 at a wavelength different from that of the optical carrier carrying the main signal. The first optical multiplexing/demultiplexing means 70-1 transfers the uplink control signal light from the subscriber device #k_1 to the subscriber device management control unit 21 of the control unit 20-1 to the second optical multiplexing/demultiplexing means 70-2 after the optical path is opened. **In** addition, the first optical multiplexing/demultiplexing means 70-1 wavelength-multiplexes the signal light of the downlink control signal from the subscriber device management control unit 21 of the control unit 20-2 to the subscriber device #k_2 with the signal light of the main signal after the optical path is opened. The second optical multiplexing/demultiplexing means 70-2 is connected to each of the plurality of first optical multiplexing/demultiplexing means 70-1, multiplexes the uplink control signal input from each of the plurality of first optical multiplexing/demultiplexing means 70-1, and outputs it to the management control port b of the subscriber device management control unit 21 of the control unit 20-1. In addition, the second optical multiplexing/demultiplexing means 70-2 branches the downlink control signal output from the management control port b of the subscriber device management control unit 21 of the control unit 20-2, and outputs it to each of the plurality of first optical multiplexing/demultiplexing means 70-1.

As described above, the subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the uplink control signal which is burst signal light transmitted from each subscriber device #k_1 does not collide.

With such a configuration, the optical communication system 1a in the first embodiment of the present invention can allow the management control port b of the subscriber device management control unit 21 to be shared between the plurality of subscriber devices #k_1. Thus, according to the optical communication system 1a, it is not necessary to provide the management control port b of the subscriber device management control unit 21 for each subscriber device #k_1. Thus, the optical communication system 1a in the first embodiment of the present invention can transmit and receive a control signal between the subscriber device management control unit 21 and the subscriber device #k_1 after the optical path is opened once with a simple configuration of the subscriber device management control unit 21.

### (First modification example of first embodiment)

Hereinafter, an optical communication system in a first modification example of the first embodiment of the present invention will be described. Fig. 7 is a diagram illustrating a configuration of the optical communication system in the first modification example of the first embodiment of the present invention. Meanwhile, Fig. 7 shows only a configuration in which the subscriber device management control unit 21 of the control unit 20-1 receives the uplink control signal, and does not show a configuration in which the subscriber device management control unit 21 of the control unit 20-2 transmits the downlink control signal.

Meanwhile, Fig. 7 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 7, the optical communication system in the first modification example of the first embodiment is configured to include a plurality of subscriber devices #k_1 (k = 1, 2, ···), a plurality of subscriber devices #k_2 (k = 1, 2, ···) (not shown), a light distribution means 10-1 and a light distribution means 10-2 (not shown), a control unit 20-1 and a control unit 20-2 (not shown), a wavelength multiplexing/demultiplexing means 30-1 and a wavelength multiplexing/demultiplexing means 30-2 (not shown), a plurality of optical fiber transmission lines 50, an optical communication network (NW) 60, a plurality of first optical multiplexing/demultiplexing means 70-1, and a plurality of second optical multiplexing/demultiplexing means 70-2. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The first optical multiplexing/demultiplexing means 70-1 and the second optical multiplexing/demultiplexing means 70-2 are constituted by using, for example, an optical coupler, an optical filter, or the like. The control unit 20-1 and the control unit 20-2 are constituted by using processors such as, for example, CPUs.

Meanwhile, in the following description, among components included in the optical communication system in the first modification example of the first embodiment shown in Fig. 7, components having the same configurations as the components included in the conventional optical communication system 1 shown in Fig. 1 described above, the components included in the conventional optical communication system 1' shown in Fig. 2 described above, and the components included in the optical communication system 1a in the first embodiment shown in Fig. 3 described above are denoted by the same reference numerals, and thus the description thereof will be omitted.

The configuration of the optical communication system in the first modification example of the first embodiment shown in Fig. 7 differs from the configuration of the optical communication system 1a in the first embodiment shown in Fig. 3 described above in that the subscriber device management control unit 21 further includes a management control port c.

The optical communication system in the first modification example of the first embodiment is used in a case where the main signal is processed in the vicinity of the control unit 20-1 and the control unit 20-2. The processing referred to here is, for example, reproduction relay processing, network function processing, service function processing, and the like. As shown in Fig. 7, in the optical communication system in the first modification example of the first embodiment, the subscriber device management control unit 21 imparts permission to transmit the uplink control signal and the main signal to each subscriber device #k_1 so as to time-multiplex the uplink control signal and the main signal on the same wavelength. After the above-described processing is completed, the subscriber device management control unit 21 transmits the signal light including the main signal to the subscriber device #k_2 (not shown) which is a communication partner.

With the above-described configuration, in the optical communication system in the first modification example of the first embodiment of the present invention, each subscriber device #k_1 can time-multiplex the uplink control signal and the main signal on the same wavelength and transmit these signals. **In** addition, with the above-described configuration, the optical communication system in the first modification example of the first embodiment can allow the management control port b of the subscriber device management control unit 21 to be shared between the plurality of subscriber devices #k_1. Thus, according to the optical communication system in the first modification example of the first embodiment, it is not necessary to provide the management control port b of the subscriber device management control unit 21 for each subscriber device #k_1. Thus, the optical communication system in the first modification example of the first embodiment of the present invention can transmit and receive a control signal between the subscriber device management control unit 21 and the subscriber device #k_1 after the optical path is opened once with a simple configuration of the subscriber device management control unit 21.

### (Second modification example of first embodiment)

Hereinafter, an optical communication system 1b in a second modification example of the first embodiment of the present invention will be described. In the optical communication system 1a in the above-described first embodiment, the first optical multiplexing/demultiplexing means 70-1 is configured to use, for example, a wavelength multiplexing/demultiplexing means having wavelength selectivity such as an optical filter. On the other hand, in the optical communication system 1b in the second modification example of the first embodiment, the first optical multiplexing/demultiplexing means 70-1 is configured to use, for example, an optical multiplexing/demultiplexing means having no wavelength selectivity such as an optical coupler.

Fig. 8 is a diagram illustrating a configuration of an optical communication system in the second modification example of the first embodiment of the present invention. As shown in Fig. 8, the optical communication system in the second modification example of the first embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of wavelength filters 40, a plurality of optical fiber transmission lines 50, an optical communication network (NW) 60, a plurality of first optical multiplexing/demultiplexing means 70-1, and a plurality of second optical multiplexing/demultiplexing means 70-2. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The second optical multiplexing/demultiplexing means 70-2 is constituted by using an optical multiplexing/demultiplexing means having no wavelength selectivity such as, for example, an optical coupler. The control unit 20-1 and the control unit 20-2 are constituted by using processors such as, for example, CPUs.

Meanwhile, Fig. 8 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

Meanwhile, in the following description, among components included in the optical communication system in the second modification example of the first embodiment shown in Fig. 8, components having the same configurations as the components included in the conventional optical communication system 1 shown in Fig. 1 described above, the components included in the conventional optical communication system 1' shown in Fig. 2 described above, and the components included in the optical communication system 1a in the first embodiment shown in Fig. 3 described above are denoted by the same reference numerals, and thus the description thereof will be omitted.

The configuration of the optical communication system 1b in the second modification example of the first embodiment shown in Fig. 8 differs from the configuration of the optical communication system 1a in the first embodiment shown in Fig. 3 described above in that the wavelength filter 40 is further included.

**In** the optical communication system 1b in the second modification example of the first embodiment, the wavelength filter 40 is further provided because, as described above, an optical multiplexing/demultiplexing means having no wavelength selectivity such as, for example, an optical coupler is used as the first optical multiplexing/demultiplexing means 70-1. The wavelength filter 40 blocks the wavelength of the signal light including the main signal and transmits the signal light including the uplink control signal. The first optical multiplexing/demultiplexing means 70-1 branches a portion of the signal light including the uplink control signal transferred from the subscriber device #k_1 to the subscriber device management control unit 21 of the control unit 20-1 after the optical path is opened, and transfers it to the second optical multiplexing/demultiplexing means 70-2.

In addition, the first optical multiplexing/demultiplexing means 70-1 wavelength-multiplexes the signal light including the downlink control signal and the signal light including the main signal transferred from the subscriber device management control unit 21 of the control unit 20-2 to the subscriber device #k_1 after the optical path is opened.

The signal light including the other uplink control signal branched by the first optical multiplexing/demultiplexing means 70-1 is also transferred to the wavelength multiplexing/demultiplexing means 30-1, but is blocked by the wavelength multiplexing/demultiplexing means 30-1 because the wavelength of the signal light including the uplink control signal and the wavelength of the signal light including the main signal are different from each other. As a result, the signal light including the uplink control signal transmitted from the subscriber device #k_1 is not transferred beyond the wavelength multiplexing/demultiplexing means 30-1.

Therefore, similarly to the optical communication system 1a in the first embodiment shown in Fig. 3 described above, in a case where there is no section in which the rightward signal light and leftward signal light flow through the same optical fiber core wire as in the optical communication system 1b illustrated in Fig. 8, the wavelength of the signal light including the uplink control signal and the wavelength of the signal light including the downlink control signal can be made to be the same wavelength.

With the above-described configuration, the optical communication system 1b in the second modification example of the first embodiment can use an optical multiplexing/demultiplexing means having no wavelength selectivity such as, for example, an optical coupler, as the first optical multiplexing/demultiplexing means 70-1. In addition, with the above-described configuration, the optical communication system 1b in the second modification example of the first embodiment can allow the management control port b of the subscriber device management control unit 21 to be shared between the plurality of subscriber devices #k_1. Thus, according to the optical communication system 1b, it is not necessary to provide the management control port b of the subscriber device management control unit 21 for each subscriber device #k_1. Thus, the optical communication system 1b in the second modification example of the first embodiment of the present invention can transmit and receive a control signal between the subscriber device management control unit 21 and the subscriber device #k_1 after the optical path is opened once with a simple configuration of the subscriber device management control unit 21.

### <Second embodiment>

Hereinafter, an optical communication system 1c in an second embodiment of the present invention will be described. Figs. 9 and 10 are diagrams illustrating a configuration of the optical communication system 1c in the second embodiment of the present invention. Fig. 9 shows the state of the optical communication system 1c before the optical path is opened for the subscriber device #k_1 (k = 1), and Fig. 10 shows the state of the optical communication system 1c after the optical path is opened for the subscriber device #k_1 (k = 1).

Meanwhile, Figs. 9 and 10 illustrate a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Figs. 9 and 10, the optical communication system 1c in the second embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of optical fiber transmission lines 50, an optical communication network (NW) 60, a plurality of first optical multiplexing/demultiplexing means 70-1, and a plurality of second optical multiplexing/demultiplexing means 70-2. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The first optical multiplexing/demultiplexing means 70-1 and the second optical multiplexing/demultiplexing means 70-2 are constituted by using, for example, an optical coupler, an optical filter, or the like. The control unit 20-1 and the control unit 20-2 are constituted by using processors such as, for example, CPUs.

Meanwhile, in the following description, among components included in the optical communication system 1c in the second embodiment shown in Figs. 9 and 10, components having the same configurations as the components included in the conventional optical communication system 1 shown in Fig. 1 described above, the components included in the conventional optical communication system 1' shown in Fig. 2 described above, and the components included in the optical communication system 1a in the first embodiment shown in Fig. 3 described above are denoted by the same reference numerals, and thus the description thereof will be omitted.

The configuration of the optical communication system 1c in the second embodiment shown in Figs. 9 and 10 differs from the configuration of the optical communication system 1a in the first embodiment shown in Fig. 3 described above in that, before and after the optical path is opened, the same management control port (the management control port c in Fig. 9) of the subscriber device management control unit 21 is used to receive the uplink control signal and to transmit the downlink control signal.

Specifically, in the optical communication system 1a in the first embodiment shown in Fig. 3 described above, the subscriber device management control unit 21 includes the management control port a for transmitting and receiving information required for registration, authentication, and optical path opening to and from the subscriber device #k_1 or the subscriber device #k_2 before the optical path is opened, and the management control port b for transmitting and receiving a control signal to and from the subscriber device #k_1 or the subscriber device #k_2 after the optical path is opened. On the other hand, in the optical communication system 1c in the second embodiment shown in Figs. 9 and 10, one management control port c of the subscriber device management control unit 21 transmits and receives a control signal to and from the subscriber device #k_1 or the subscriber device #k_2 regardless of before or after the optical path is opened.

Fig. 9 shows the state of the optical communication system 1c before the optical path is opened for the subscriber device #k_1 (k = 1). The management control port c of the subscriber device management control unit 21 of the control unit 20-1 transmits and receives a control signal to and from the subscriber device #k_1 before the optical path is opened through the second optical multiplexing/demultiplexing means 70-2 and the light distribution means 10-1. In addition, the management control port c of the subscriber device management control unit 21 of the control unit 20-1 transmits and receives a control signal to and from the subscriber device after the optical path is opened through the second optical multiplexing/demultiplexing means 70-2, the first optical multiplexing/demultiplexing means 70-1, and the light distribution means 10-1. In addition, the management control port c of the subscriber device management control unit 21 of the control unit 20-2 transmits and receives a control signal to and from the subscriber device #k_2 before the optical path is opened through the second optical multiplexing/demultiplexing means 70-2 and the light distribution means 10-2. In addition, the management control port c of the subscriber device management control unit 21 of the control unit 20-2 transmits and receives a control signal to and from the subscriber device after the optical path is opened through the second optical multiplexing/demultiplexing means 70-2, the first optical multiplexing/demultiplexing means 70-1, and the light distribution means 10-2.

When the subscriber device #k_1 is newly connected to the light distribution means 10-1, the light distribution control unit 22 sets the inter-port connection of the light distribution means 10-1 so that the subscriber device #k_1 communicates with the management control port c of the subscriber device management control unit 21 of the control unit 20-1 through the light distribution means 10-1 and the second optical multiplexing/demultiplexing means 70-2.

The subscriber device management control unit 21 of the control unit 20-1 transmits a signal (hereinafter referred to as a "search signal") for requesting the subscriber device #k_1 newly connected to the light distribution means 10-1 to return a response signal to its own subscriber device management control unit 21 from the management control port c. The response signal is a signal that the subscriber device #k_1 returns to the subscriber device management control unit 21 as a response when a search signal transmitted from the subscriber device management control unit 21 to the subscriber device #k_1 is received.

Meanwhile, the subscriber device management control unit 21 of the control unit 20-1 may be configured to periodically transmit the search signal to the subscriber device #k_1, or may be configured to transmit the search signal to the subscriber device #k_1 only when the connection of the new subscriber device #k_1 requesting the opening of the optical path is detected.

The subscriber device management control unit 21 of the control unit 20-1 measures the round trip time (RTT) of the control signal between the subscriber device #k_1 and its own subscriber device management control unit 21 through transmission and reception of a search signal, a response signal, and other subsequent control signals to and from the subscriber device #k_1.

The subscriber device management control unit 21 of the control unit 20-1 imparts permission to transmit the uplink control signal to each of the subscriber devices #k_1 in which the optical path has been opened before the optical path is opened for the newly connected subscriber device #k_1. In this case, during a period in which signal light including an uplink control signal including a response signal returned by the newly connected subscriber device #k_1 in response to the search signal transmitted from its own subscriber device management control unit 21 can reach its own subscriber device management control unit 21, permission to transmit the uplink control signal is imparted so that the signal light including the uplink control signal transmitted from the other subscriber device #k_1 in which the optical path has been opened does not reach its own subscriber device management control unit 21.

Specifically, the subscriber device management control unit 21 specifies the timing of transmission permission so that the uplink control signal does not reach its own subscriber device management control unit 21 at the same timing on the basis of the value of RTT of each control signal between each subscriber device #k_1 and its own subscriber device management control unit 21, and imparts permission to transmit the uplink control signal to each of the other subscriber devices #k_1 in which the optical path has been opened at the above specified timing.

Fig. 10 shows the state of the optical communication system 1c after the optical path is opened for the subscriber device #k_1 (k = 1). Upon completion of registration, authentication, wavelength setting, and the like of the newly connected subscriber device #k_1, the light distribution control unit 22 changes the setting of inter-port connection of the light distribution means 10-1 so that the signal light including the main signal transmitted from the subscriber device #k_1 is transferred to the subscriber device #k_2 serving as a communication partner, and the light distribution control unit 22 changes the setting of inter-port connection of the light distribution means 10-2. This allows a new optical path for directly connecting the subscriber device #k_1 and the subscriber device #k_2 to be opened.

Meanwhile, similarly to the optical communication system 1a in the first embodiment shown in Fig. 3 described above, in a case where there is no section in which the rightward signal light and leftward signal light flow through the same optical fiber core wire as in the optical communication system 1c illustrated in Fig. 9, the wavelength of the signal light including the uplink control signal and the wavelength of the signal light including the downlink control signal can be made to be the same wavelength.

Meanwhile, in the optical communication system 1c in the second embodiment illustrated in Fig. 9, a wavelength multiplexing/demultiplexing means having wavelength selectivity such as, for example, an optical filter is used as the first optical multiplexing/demultiplexing means 70-1. However, similarly to the optical communication system 1b in the second modification example of the first embodiment shown in Fig. 8 described above, an optical multiplexing/demultiplexing means having no wavelength selectivity such as, for example, an optical coupler may be used as the first optical multiplexing/demultiplexing means 70-1. Meanwhile, even in such a configuration in which the optical multiplexing/demultiplexing means having no wavelength selectivity is used, in a case where there is no section in which the rightward signal light and leftward signal light flow through the same optical fiber core wire as described above, the wavelength of the signal light including the uplink control signal and the wavelength of the signal light including the downlink control signal can be made to be the same wavelength.

Meanwhile, in the configuration of the optical communication system 1c in the second embodiment shown in Fig. 9, the light distribution means 10-1 and the light distribution means 10-2 are constituted by using, for example, fiber cross connect (FXC) for outputting light input from each port to another port (the connection relationship is set as a connection port corresponding to the input port) regardless of wavelength. For example, micro electro mechanical systems (MEMS), a spatial optical switch using a piezo actuator, or the like is used as the light distribution means 10-1 and the light distribution means 10-2.

### [Operation of optical communication system]

Hereinafter, an example of the operation of the optical communication system 1c will be described. Fig. 11 is a flowchart illustrating operations of the optical communication system 1c in the second embodiment of the present invention. The operation of the optical communication system 1c shown in the flowchart of Fig. 11 is started when the new subscriber device #k_1 is connected to the network.

In a case where the new subscriber device #k_1 is connected to the network, the subscriber device management control unit 21 of the control unit 20-1 detects the connection of the new subscriber device #k_1 to the network (step S201). In a case where the subscriber device management control unit 21 detects the connection of the new subscriber device #k_1 to the network, the light distribution control unit 22 changes the setting of the inter-port connection in the light distribution means 10-1 so that the management control port c of the subscriber device management control unit 21 and the new subscriber device #k_1 are communicatively connected to each other (through the second optical multiplexing/demultiplexing means 70-2 and the light distribution means 10-1) (step S202).

The subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port c. The subscriber device management control unit 21 instructs the new subscriber device #k_1 to set a wavelength, and allocates a wavelength to the subscriber device #k_1 (step S203).

In addition, the subscriber device management control unit 21 measures RTT of a control signal between the subscriber device #k_1 and its own subscriber device management control unit 21 through transmission and reception of management control information (for example, a search signal, a response signal, and other subsequent control signals) to and from the subscriber device #k_1 (step S204).

When a wavelength is allocated to the new subscriber device #k_1, the light distribution control unit 22 changes the setting of inter-port connection in the light distribution means 10-1 again, so that the optical path is opened. At this time, the management control port c of the subscriber device management control unit 21 and the new subscriber device #k_1 are communicatively connected to each other (through the second optical multiplexing/demultiplexing means 70-2, the first optical multiplexing/demultiplexing means 70-1, and the light distribution means 10-1) (Step S205).

The subscriber device management control unit 21 of the control unit 20-1 uses the management control port c to impart permission to transmit the uplink control signal to each subscriber device #k_1 on the basis of the value each RTT measured for each subscriber device #k_1 so that the uplink control signal which is burst signal light transmitted from each subscriber device #k_1 does not collide (step S206).

Each subscriber device #k_1 transmits the uplink control signal to the subscriber device management control unit 21 at each timing corresponding to the transmission permission notified of by the subscriber device management control unit 21 (step S207). The operation of the optical communication system 1c shown in the flowchart of Fig. 11 is completed as described above.

As described above, the optical communication system 1c in the second embodiment of the present invention includes the plurality of first optical multiplexing/demultiplexing means 70-1 and the plurality of second optical multiplexing/demultiplexing means 70-2. The subscriber device #k_1 outputs an uplink control signal addressed to the subscriber device management control unit 21 of the control unit 20-1 at a wavelength different from that of an optical carrier carrying the main signal. The subscriber device management control unit 21 of the control unit 20-2 outputs a downlink control signal addressed to the subscriber device #k_2 at a wavelength different from that of the optical carrier carrying the main signal. The first optical multiplexing/demultiplexing means 70-1 transfers the signal light of the uplink control signal from the subscriber device #k_1 to the subscriber device management control unit 21 of the control unit 20-1 to the second optical multiplexing/demultiplexing means 70-2 after the optical path is opened. In addition, the first optical multiplexing/demultiplexing means 70-1 wavelength-multiplexes the signal light of the downlink control signal from the subscriber device management control unit 21 of the control unit 20-2 to the subscriber device #k_2 with the signal light of the main signal after the optical path is opened. The second optical multiplexing/demultiplexing means 70-2 is connected to each of the plurality of first optical multiplexing/demultiplexing means 70-1, multiplexes the uplink control signal input from each of the plurality of first optical multiplexing/demultiplexing means 70-1, and outputs it to the management control port c of the subscriber device management control unit 21 of the control unit 20-1. In addition, the second optical multiplexing/demultiplexing means 70-2 branches the downlink control signal output from the management control port c of the subscriber device management control unit 21 of the control unit 20-2, and outputs it to each of the plurality of first optical multiplexing/demultiplexing means 70-1.

As described above, the subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the burst signal light transmitted from each subscriber device #k_1 does not collide.

Further, in the optical communication system 1c in the second embodiment, the same management control port c transmits and receives a control signal to and from the subscriber device #k_1 before and after the optical path is opened. The management control port c transmits and receives a control signal to and from the subscriber device #k_1 before the optical path is opened through the second optical multiplexing/demultiplexing means 70-2 and the light distribution means 10-1. In addition, the management control port c transmits and receives a control signal through the subscriber device #k_1 after the optical path is opened, the second optical multiplexing/demultiplexing means 70-2, the first optical multiplexing/demultiplexing means 70-1, and the light distribution means 10-1.

With the above-described configuration, the optical communication system 1c in the second embodiment of the present invention transmits and receive a control signal between the subscriber device management control unit 21 and the subscriber device #k_1 using the same management control port c before and after the optical path is opened, so that the subscriber device management control unit 21 can be configured more simply than the optical communication system 1a in the first embodiment. In addition, with the above-described configuration, the optical communication system 1c in the second embodiment can allow the management control port c of the subscriber device management control unit 21 to be shared between the plurality of subscriber devices #k_1. Thus, according to the optical communication system 1c, it is not necessary to provide the management control port c of the subscriber device management control unit 21 for each subscriber device #k_1. Thus, the optical communication system 1c in the second embodiment of the present invention can transmit and receive a control signal between the subscriber device management control unit 21 and the subscriber device #k_1 after the optical path is opened once with a simple configuration of the subscriber device management control unit 21.

### (First modification example of second embodiment)

Hereinafter, an optical communication system 1d in a first modification example of the second embodiment of the present invention will be described. Figs. 12 and 13 are diagrams illustrating a configuration of the optical communication system 1d in the first modification example of the second embodiment of the present invention. Fig. 12 shows the state of the optical communication system 1d before the optical path is opened for the subscriber device #k_1 (k = 1), and Fig. 13 shows the state of the optical communication system 1d after the optical path is opened for the subscriber device #k_1 (k = 1).

Meanwhile, Figs. 12 and 13 illustrate a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Figs. 12 and 13, the optical communication system 1d in the first modification example of the second embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of optical fiber transmission lines 50, an optical communication network (NW) 60, a plurality of first optical multiplexing/demultiplexing means 70-1, and a plurality of second optical multiplexing/demultiplexing means 70-2. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The first optical multiplexing/demultiplexing means 70-1 and the second optical multiplexing/demultiplexing means 70-2 are constituted by using, for example, an optical coupler, an optical filter, or the like. The control unit 20-1 and the control unit 20-2 are constituted by using processors such as, for example, CPUs.

Meanwhile, in the following description, among components included in the optical communication system 1d in the first modification example of the second embodiment shown in Figs. 12 and 13, components having the same configurations as the components included in the conventional optical communication system 1 shown in Fig. 1 described above, the components included in the conventional optical communication system 1' shown in Fig. 2 described above, and the components included in the optical communication system 1c in the second embodiment shown in Figs. 9 and 10 described above are denoted by the same reference numerals, and thus the description thereof will be omitted.

The configuration of the optical communication system 1d in the first modification example of the second embodiment shown in Figs. 12 and 13 differs from the configuration of the optical communication system 1c in the second embodiment shown in Figs. 9 and 10 described above in that the first optical multiplexing/demultiplexing means 70-1 in the optical communication system 1d is disposed at a different point.

Specifically, in the configuration of the optical communication system 1c in the second embodiment shown in Figs. 9 and 10 described above, the first optical multiplexing/demultiplexing means 70-1 is disposed between the light distribution means 10-1 and the wavelength multiplexing/demultiplexing means 30-1 and between the light distribution means 10-2 and the wavelength multiplexing/demultiplexing means 30-2, whereas in the configuration of the optical communication system 1d in the first modification example of the second embodiment shown in Figs. 12 and 13, the first optical multiplexing/demultiplexing means 70-1 is disposed between the light distribution means 10-1 and the subscriber device #k_1 and between the light distribution means 10-2 and the subscriber device #k_2.

The optical communication system 1d in the first modification example of the second embodiment is configured such that the wavelength multiplexing/demultiplexing means 30-1 and the wavelength multiplexing/demultiplexing means 30-2 wavelength-multiplex the signal light of each optical path. For example, the wavelength multiplexing/demultiplexing means 30-1 and the wavelength multiplexing/demultiplexing means 30-2 are constituted by using arrayed waveguide gratings (AWG), a wavelength selective switch (WSS), or the like.

With the above-described configuration, the optical communication system 1d in the first modification example of the second embodiment can be configured to dispose the first optical multiplexing/demultiplexing means 70-1 between the light distribution means 10-1 and the subscriber device #k_1 and between the light distribution means 10-2 and the subscriber device #k_2. In addition, with the above-described configuration, the optical communication system 1d in the first modification example of the second embodiment can allow the management control port c of the subscriber device management control unit 21 to be shared between the plurality of subscriber devices #k_1. Thus, according to the optical communication system 1d, it is not necessary to provide the management control port c of the subscriber device management control unit 21 for each subscriber device #k_1. Thus, the optical communication system 1d in the first modification example of the second embodiment of the present invention can transmit and receive a control signal between the subscriber device management control unit 21 and the subscriber device #k_1 after the optical path is opened once with a simple configuration of the subscriber device management control unit 21.

### (Second modification example of second embodiment)

Hereinafter, an optical communication system 1e in a second modification example of the second embodiment of the present invention will be described. Fig. 14 is a diagram illustrating a configuration of the optical communication system 1e in the second modification example of the second embodiment of the present invention.

Meanwhile, Fig. 14 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 14, the optical communication system 1e in the second modification example of the second embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a plurality of optical fiber transmission lines 50, an optical communication network (NW) 60, a plurality of first optical multiplexing/demultiplexing means 70-1, and a plurality of second optical multiplexing/demultiplexing means 70-2. The control unit 20-1 and the control unit 20-2 are each configured to include the subscriber device management control unit 21 and the light distribution control unit 22.

The first optical multiplexing/demultiplexing means 70-1 and the second optical multiplexing/demultiplexing means 70-2 are constituted by using, for example, an optical coupler, an optical filter, or the like. The control unit 20-1 and the control unit 20-2 are constituted by using processors such as, for example, CPUs.

Meanwhile, in the following description, among components included in the optical communication system 1e in the second modification example of the second embodiment shown in Fig. 14, components having the same configurations as the components included in the conventional optical communication system 1 shown in Fig. 1 described above, the components included in the conventional optical communication system 1' shown in Fig. 2 described above, and the components included in the optical communication system 1c in the second embodiment shown in Figs. 9 and 10 described above are denoted by the same reference numerals, and thus the description thereof will be omitted.

The configuration of the optical communication system 1e in the second modification example of the second embodiment shown in Fig. 14 differs from the configuration of the optical communication system 1d in the first modification example of the second embodiment shown in Figs. 12 and 13 described above in that the wavelength multiplexing/demultiplexing means 30-1 and the wavelength multiplexing/demultiplexing means 30-2 are not included.

In a case where the light distribution means 10-1 and the light distribution means 10-2 can set a transmission path for each wavelength, these means can be configured such that the wavelength multiplexing/demultiplexing means 30-1 and the wavelength multiplexing/demultiplexing means 30-2 are omitted as in the configuration of the optical communication system 1e in the second modification example of the second embodiment shown in Fig. 14. For example, WSS, a multicast switch (MCS), or the like can be used as the light distribution means 10-1 and the light distribution means 10-2 capable of setting such a transmission path for each wavelength.

With the above-described configuration, the optical communication system 1e in the second modification example of the second embodiment makes it possible to omit the installation of the wavelength multiplexing/demultiplexing means 30-1 and the wavelength multiplexing/demultiplexing means 30-2. In addition, with the above-described configuration, the optical communication system 1e in the second modification example of the second embodiment can allow the management control port c of the subscriber device management control unit 21 to be shared between the plurality of subscriber devices #k_1. Thus, according to the optical communication system 1e, it is not necessary to provide the management control port c of the subscriber device management control unit 21 for each subscriber device #k_1. Thus, the optical communication system 1e in the second modification example of the second embodiment of the present invention can transmit and receive a control signal between the subscriber device management control unit 21 and the subscriber device #k_1 after the optical path is opened once with a simple configuration of the subscriber device management control unit 21.

### <Third embodiment>

Hereinafter, an optical communication system 1f in a third embodiment of the present invention will be described. Figs. 15 and 16 are diagrams illustrating a configuration of the optical communication system 1f in the third embodiment of the present invention. Fig. 15 shows the state of the optical communication system 1c before the optical path is opened for the subscriber device #k_1 (k = 1), and Fig. 16 shows the state of the optical communication system 1c after the optical path is opened for the subscriber device #k_1 (k = 1).

Meanwhile, Figs. 15 and 16 illustrate a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Figs. 15 and 16, the optical communication system 1c in the third embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a wavelength multiplexing/demultiplexing means 30-1 and a wavelength multiplexing/demultiplexing means 30-2, a plurality of optical fiber transmission lines 50, an optical communication network (NW) 60, a plurality of first optical multiplexing/demultiplexing means 70-1, a plurality of second optical multiplexing/demultiplexing means 70-2, a plurality of dispersion compensation means 80-1, and a plurality of dispersion compensation means 80-2. The control unit 20-1 and the control unit 20-2 are each configured to include the subscriber device management control unit 21 and the light distribution control unit 22.

The light distribution means 10-1 and the light distribution means 10-2 are constituted by using, for example, optical switches or the like. The first optical multiplexing/demultiplexing means 70-1 and the second optical multiplexing/demultiplexing means 70-2 are constituted by using, for example, an optical coupler, an optical filter, or the like. The control unit 20-1 and the control unit 20-2 are constituted by using processors such as, for example, CPUs. The dispersion compensation means 80-1 and the dispersion compensation means 80-2 is constituted by using, for example, a dispersion-shifting fiber.

Meanwhile, in the following description, among components included in the optical communication system 1f in the third embodiment shown in Figs. 15 and 16, components having the same configurations as the components included in the conventional optical communication system 1 shown in Fig. 1 described above, the components included in the conventional optical communication system 1' shown in Fig. 2 described above, the components included in the optical communication system 1a in the first embodiment shown in Fig. 3 described above, and the components included in the optical communication system 1c in the second embodiment shown in Figs. 9 and 10 described above are denoted by the same reference numerals, and thus the description thereof will be omitted.

The configuration of the optical communication system 1f in the third embodiment shown in Figs. 15 and 16 differs from the configuration of the optical communication system 1c in the second embodiment shown in Figs. 9 and 10 described above in that the plurality of dispersion compensation means 80-1 are connected to the light distribution means 10-1, and that the plurality of dispersion compensation means 80-2 are connected to the light distribution means 10-2.

Meanwhile, the optical communication system 1f in the third embodiment is configured, as an example, such that the plurality of dispersion compensation means 80-1 and the plurality of dispersion compensation means 80-2 are added to the configuration of the optical communication system 1d in the first modification example of the second embodiment shown in Figs. 12 and 13 described above. However, the present invention is not limited to such a configuration, and, for example, the optical communication system 1f may be configured such that the plurality of dispersion compensation means 80-1 and the plurality of dispersion compensation means 80-2 are added to the configuration of the optical communication system 1a in the first embodiment shown in Fig. 3 described above or the configuration of the optical communication system 1c in the second embodiment shown in Figs. 9 and 10 described above.

The subscriber device management control units 21 of the control unit 20-1 and the control unit 20-2 determine whether wavelength dispersion compensation is necessary in the optical path when the optical path is opened. In addition, in a case where the wavelength dispersion compensation is necessary, the subscriber device management control unit 21 determines the amount of wavelength dispersion compensation. In a case where the subscriber device management control unit 21 determines that the wavelength dispersion compensation is necessary, the light distribution control unit 22 sets the connection relationship between the ports of the light distribution means 10-1 and the light distribution means 10-2 so as to passes through the dispersion compensation means 80-1 and the dispersion compensation means 80-2 for realizing the wavelength dispersion compensation of the necessary wavelength dispersion compensation amount.

The subscriber device management control unit 21 of the control unit 20-1 measures the RTT of a control signal between the subscriber device #k_1 and its own subscriber device management control unit 21 in a process of transmitting and receiving the control signal to and from the subscriber device #k_1 newly connected to the light distribution means 10-1 before the optical path is opened. The subscriber device management control unit 21 then multiplies the speed of light propagating through the optical fiber transmission line 50 by the measured RTT value to calculate the distance between its own subscriber device management control unit 21 and the newly connected subscriber device #k_1.

Here, in a case where the first optical multiplexing/demultiplexing means 70-1, the second optical multiplexing/demultiplexing means 70-2, the subscriber device management control unit 21 (the control unit 20-1), and the light distribution means 10-1 are disposed at locations close to each other, the subscriber device management control unit 21 of the control unit 20-1 can calculate the distance between the light distribution means 10-1 and the newly connected subscriber device #k_1.

Similarly, in a case where the first optical multiplexing/demultiplexing means 70-1, the second optical multiplexing/demultiplexing means 70-2, the subscriber device management control unit 21(the control unit 20-2), and the light distribution means 10-2 are disposed at locations close to each other, the subscriber device management control unit 21 of the control unit 20-2 can calculate the distance between the light distribution means 10-2 and the subscriber device #k_2 which is a communication partner of the newly connected subscriber device #k_1.

Thus, when the distance between the light distribution means 10-1 and the light distribution means 10-2 is known, the subscriber device management control unit 21 of the control unit 20-1 can calculate the distance between the subscriber devices serving as end points of the optical path to be opened (that is, between the newly connected subscriber device #k_1 and the subscriber device #k_2 which is a communication partner of the subscriber device #k_1).

The subscriber device management control units 21 of the control unit 20-1 and the control unit 20-2 calculate a cumulative wavelength dispersion amount when the optical path is opened using the wavelengths allocated to the newly connected subscriber device #k_1 and the subscriber device #k_2 and the calculated distance between the subscriber devices serving as end points of the optical path to be opened. In addition, the subscriber device management control unit 21 calculates an allowable wavelength dispersion amount for obtaining a predetermined reception quality on the basis of the characteristics (such as, for example, signal speed and modulation scheme) of an optical transceiver (not shown) in the newly connected subscriber device #k_1.

The light distribution control units 22 of the control unit 20-1 and the control unit 20-2 set the connection relationship between the ports of the light distribution means 10-1 and the light distribution means 10-2 so that the transmission line passes through the dispersion compensation means 80-1 and the dispersion compensation means 80-2 for compensating for the difference between the cumulative wavelength dispersion amount and the allowable wavelength dispersion amount calculated by the subscriber device management control unit 21.

Meanwhile, the optical communication system 1f in the third embodiment is configured such that the wavelength multiplexing/demultiplexing means 30-1 and the wavelength multiplexing/demultiplexing means 30-2 wavelength-multiplex the signal light of each optical path. For example, the wavelength multiplexing/demultiplexing means 30-1 and the wavelength multiplexing/demultiplexing means 30-2 are constituted by using AWG, WSS, or the like.

### [Operation of optical communication system]

Hereinafter, an example of the operation of the optical communication system 1f will be described. Fig. 17 is a flowchart illustrating operations of the optical communication system 1f in the third embodiment of the present invention. The operation of the optical communication system 1f shown in the flowchart of Fig. 17 is started when the new subscriber device #k_1 is connected to the network.

In a case where the new subscriber device #k_1 is connected to the network, the subscriber device management control unit 21 of the control unit 20-1 detects the connection of the new subscriber device #k_1 to the network (step S301). The subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port c. The subscriber device management control unit 21 instructs the new subscriber device #k_1 to set a wavelength, and allocates a wavelength to the subscriber device #k_1 (step S302).

In addition, the subscriber device management control unit 21 of the control unit 20-1 measures RTT of a control signal between the subscriber device #k_1 and its own subscriber device management control unit 21 through transmission and reception of management control information (for example, a search signal, a response signal, and other subsequent control signals) to and from the subscriber device #k_1 (step S303).

The subscriber device management control unit 21 of the control unit 20-1 multiplies the speed of light propagating through the optical fiber transmission line 50 by the measured RTT value to calculate the distance between its own subscriber device management control unit 21 and the newly connected subscriber device #k_1 (hereinafter also referred to as a "first distance") (step S304). Further, the subscriber device management control unit 21 calculates the distance between the newly connected subscriber device #k_1 and the subscriber device #k_2 which is a communication partner of the subscriber device #k_1 (hereinafter also referred to as a "second distance") on the basis of the first distance and the known distance between the light distribution means 10-1 and the light distribution means 10-2 (step S305).

The subscriber device management control unit 21 of the control unit 20-1 calculates the cumulative wavelength dispersion amount when the optical path is opened using the second distance and the wavelength allocated to the newly connected subscriber device #k_1. In addition, the subscriber device management control unit 21 calculates an allowable wavelength dispersion amount for obtaining a predetermined reception quality on the basis of the characteristics (such as, for example, signal speed and modulation scheme) of an optical transceiver (not shown) in the newly connected subscriber device #k_1 (step S306).

When a wavelength is allocated to the new subscriber device #k_1, the light distribution control units 22 of the control unit 20-1 and the control unit 20-2 set the connection relationship between the ports of the light distribution means 10-1 and the light distribution means 10-2 so that the optical path passes through the dispersion compensation means 80-1 and the dispersion compensation means 80-2 for compensating for the difference between the cumulative wavelength dispersion amount and the allowable wavelength dispersion amount calculated by the subscriber device management control unit 21 (step S307).

When the optical path is opened, the subscriber device management control unit 21 of the control unit 20-1 uses the management control port c to impart permission to transmit the uplink control signal each subscriber device #k_1 on the basis of the value each RTT measured for each subscriber device #k_1 so that the uplink control signal which is burst signal light transmitted from each subscriber device #k_1 does not collide (step S308).

Each subscriber device #k_1 transmits the uplink control signal to the subscriber device management control unit 21 at each timing corresponding to the transmission permission notified of by the subscriber device management control unit 21 (step S309).

Each of the dispersion compensation means 80-1 compensates for the wavelength dispersion of an appropriate wavelength dispersion compensation amount for the signal light including the main signal transmitted from the subscriber device #k_1, and transfers the signal light to the subscriber device #k_2 which is a communication partner (step S310). The operation of the optical communication system 1f shown in the flowchart of Fig. 17 is completed as described above.

As described above, the optical communication system 1f in the third embodiment of the present invention includes the plurality of first optical multiplexing/demultiplexing means 70-1 and the plurality of second optical multiplexing/demultiplexing means 70-2. The subscriber device #k_1 outputs an uplink control signal addressed to the subscriber device management control unit 21 of the control unit 20-1 at a wavelength different from that of an optical carrier carrying the main signal. The subscriber device management control unit 21 of the control unit 20-2 outputs a downlink control signal addressed to the subscriber device #k_2 at a wavelength different from that of the optical carrier carrying the main signal. The first optical multiplexing/demultiplexing means 70-1 transfers the uplink control signal light from the subscriber device #k_1 to the subscriber device management control unit 21 of the control unit 20-1 to the second optical multiplexing/demultiplexing means 70-2 after the optical path is opened. **In** addition, the first optical multiplexing/demultiplexing means 70-1 wavelength-multiplexes the signal light of the downlink control signal from the subscriber device management control unit 21 of the control unit 20-2 to the subscriber device #k_2 with the signal light of the main signal after the optical path is opened. The second optical multiplexing/demultiplexing means 70-2 is connected to each of the plurality of first optical multiplexing/demultiplexing means 70-1, multiplexes the uplink control signal input from each of the plurality of first optical multiplexing/demultiplexing means 70-1, and outputs it to the management control port c of the subscriber device management control unit 21 of the control unit 20-1. In addition, the second optical multiplexing/demultiplexing means 70-2 branches the downlink control signal output from the management control port c of the subscriber device management control unit 21 of the control unit 20-2, and outputs it to each of the plurality of first optical multiplexing/demultiplexing means 70-1.

As described above, the subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the burst signal light transmitted from each subscriber device #k_1 does not collide.

Further, the optical communication system 1f in the third embodiment includes the plurality of dispersion compensation means 80-1 and the plurality of dispersion compensation means 80-2. The subscriber device management control units 21 of the control unit 20-1 and the control unit 20-2 determine whether wavelength dispersion compensation is required when the optical path is opened, and calculates a necessary wavelength dispersion compensation amount in a case where the wavelength dispersion compensation is determined to be necessary. The light distribution control units 22 of the control unit 20-1 and the control unit 20-2 set the connection relationship between the ports of the light distribution means 10-1 and the light distribution means 10-2 so as to passes through the dispersion compensation means 80-1 and the dispersion compensation means 80-2 for satisfying the necessary wavelength dispersion compensation amount.

With such a configuration, the optical communication system 1f in the third embodiment measures the distance between the subscriber device management control unit 21 and the subscriber device #k_1 on the basis of the measurement result of the RTT of the control signal between the subscriber device management control unit 21 of the control unit 20-1 and the subscriber device #k_1. Thus, according to the optical communication system 1f, it is not necessary to add a function specialized for measuring the distance between the subscriber device management control unit 21 and the subscriber device #k_1. The optical communication system 1f includes the plurality of dispersion compensation means 80-1 and the plurality of dispersion compensation means 80-2, and can perform wavelength dispersion compensation required for each optical path on the basis of the measured distance. This makes it possible for the optical communication system 1f in the third embodiment to further lengthen the transmission distance of the main signal. In addition, the optical communication system 1f in the third embodiment of the present invention can allow the management control port c of the subscriber device management control unit 21 to be shared between the plurality of subscriber devices #k_1. Thus, according to the optical communication system 1f, it is not necessary to provide the management control port c of the subscriber device management control unit 21 for each subscriber device #k_1. Thus, the optical communication system 1f in the third embodiment of the present invention can transmit and receive a control signal between the subscriber device management control unit 21 and the subscriber device #k_1 after the optical path is opened once with a simple configuration of the subscriber device management control unit 21.

### (Modification example of third embodiment)

Hereinafter, an optical communication system 1g in a modification example of the third embodiment of the present invention will be described. Fig. 18 is a diagram illustrating a configuration of the optical communication system 1g in the modification example of the third embodiment of the present invention.

Meanwhile, Fig. 18 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 18, the optical communication system 1g in the modification example of the third embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a plurality of optical fiber transmission lines 50, an optical communication network (NW) 60, a plurality of first optical multiplexing/demultiplexing means 70-1, a plurality of second optical multiplexing/demultiplexing means 70-2, a plurality of dispersion compensation means 80-1, and a plurality of dispersion compensation means 80-2. The control unit 20-1 and the control unit 20-2 are each configured to include the subscriber device management control unit 21 and the light distribution control unit 22.

The first optical multiplexing/demultiplexing means 70-1 and the second optical multiplexing/demultiplexing means 70-2 are constituted by using, for example, an optical coupler, an optical filter, or the like. The control unit 20-1 and the control unit 20-2 are constituted by using processors such as, for example, CPUs. The dispersion compensation means 80-1 and the dispersion compensation means 80-2 is constituted by using, for example, a dispersion-shifting fiber.

Meanwhile, in the following description, among components included in the optical communication system 1g in the modification example of the third embodiment shown in Fig. 18, components having the same configurations as the components included in the conventional optical communication system 1 shown in Fig. 1 described above, the components included in the conventional optical communication system 1' shown in Fig. 2 described above, the components included in the optical communication system 1a in the first embodiment shown in Fig. 3 described above, the components included in the optical communication system 1c in the second embodiment shown in Figs. 9 and 10 described above, and the components included in the optical communication system 1f in the third embodiment shown in Figs. 15 and 16 described above are denoted by the same reference numerals, and thus the description thereof will be omitted.

The configuration of the optical communication system 1g in the modification example of the third embodiment shown in Figs. 15 and 16 differs from the configuration of the optical communication system 1f in the third embodiment shown in Figs. 15 and 16 described above in that the wavelength multiplexing/demultiplexing means 30-1 and the wavelength multiplexing/demultiplexing means 30-2 are not included.

In a case where the light distribution means 10-1 and the light distribution means 10-2 can set a transmission path for each wavelength, these means is configured such that the wavelength multiplexing/demultiplexing means 30-1 and the wavelength multiplexing/demultiplexing means 30-2 are omitted as in the configuration of the optical communication system 1g in the third embodiment shown in Fig. 18. Meanwhile, the same dispersion compensation means 80-1 and dispersion compensation means 80-2 can be shared between optical paths with the same required wavelength dispersion compensation amount.

For example, WSS, a multicast switch (MCS), or the like can be used as the light distribution means 10-1 and the light distribution means 10-2 capable of setting such a transmission path for each wavelength.

With the above-described configuration, the optical communication system 1g in the first modification example of the third embodiment makes it possible to omit the installation of the wavelength multiplexing/demultiplexing means 30-1 and the wavelength multiplexing/demultiplexing means 30-2. In addition, with the above-described configuration, the optical communication system 1g in the first modification example of the third embodiment can allow the management control port c of the subscriber device management control unit 21 to be shared between the plurality of subscriber devices #k_1. Thus, according to the optical communication system 1g, it is not necessary to provide the management control port c of the subscriber device management control unit 21 for each subscriber device #k_1. Thus, the optical communication system 1g in the first modification example of the second embodiment of the present invention can transmit and receive a control signal between the subscriber device management control unit 21 and the subscriber device #k_1 after the optical path is opened once with a simple configuration of the subscriber device management control unit 21.

As described above, the optical communication systems in the first to third embodiments and the modification examples of these embodiments all are systems in which the network configuration between the subscriber device #k_1 and the light distribution means 10-1 and the network configuration between the subscriber device #k_2 and the light distribution means 10-2 are set to be in a connection mode of point to point (P-P) connection, and the network configuration between the subscriber device #k_1 and the control unit 20-1 and the network configuration between the subscriber device #k_2 and the control unit 20-2 are set to be in a connection mode of point to multipoint (P-MP) connection.

On the other hand, the optical communication systems in the fourth to seventh embodiments to be described below and the modification examples of these embodiments all are systems in which the network configuration between the subscriber device #k_1 and the light distribution means 10-1, the network configuration between the subscriber device #k_2 and the light distribution means 10-2, the network configuration between the subscriber device #k_1 and the control unit 20-1, and the network configuration between the subscriber device #k_2 and the control unit 20-2 are set to be in a connection mode of point to multipoint (P-MP) connection.

In addition, the optical communication system in the fourth to seventh embodiments to be described below and the modification example of these embodiments are all configured such that, similarly to the optical communication systems in the above-described second to third embodiments and the modification examples of these embodiments, the same management control port c of the subscriber device management control unit 21 transmits and receives a control signal to and from the subscriber device #k_1 and the subscriber device #k_2 regardless of before or after the optical path is opened.

### <Fourth embodiment>

Hereinafter, an optical communication system 1h in a fourth embodiment of the present invention will be described. Fig. 19 is an overall configuration diagram of the optical communication system 1h in the fourth embodiment of the present invention.

As shown in Fig. 19, the optical communication system 1h in the fourth embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a plurality of optical fiber transmission lines 50, an optical communication network (NW) 60, a plurality of first optical multiplexing/demultiplexing means 70-1, and a plurality of second optical multiplexing/demultiplexing means 70-2.

Meanwhile, in the following description, among components included in the optical communication system 1h in the fourth embodiment shown in Fig. 19, components having the same configurations as the components included in the conventional optical communication system 1 shown in Fig. 1 described above, the components included in the conventional optical communication system 1' shown in Fig. 2 described above, and the components included in the optical communication system in each embodiment described above are denoted by the same reference numerals, and thus the description thereof may be omitted.

The light distribution means 10-1 is configured to include a path switching means 15-1 and a plurality of wavelength multiplexing/demultiplexing means 30-1. In addition, the light distribution means 10-2 is configured to include a path switching means 15-2 and a plurality of wavelength multiplexing/demultiplexing means 30-2. The control unit 20-1 and the control unit 20-2 are each configured to include the subscriber device management control unit 21 and the light distribution control unit 22.

As shown in Fig. 19, in the optical communication system 1h in the fourth embodiment, the first optical multiplexing/demultiplexing means 70-1 and the second optical multiplexing/demultiplexing means 70-2 are provided on the optical fiber transmission line 50 between the subscriber device #k_1 and the light distribution means 10-1 and the optical fiber transmission line 50 between the subscriber device #k_2 and the light distribution means 10-2.

The first optical multiplexing/demultiplexing means 70-1 is connected to the plurality of subscriber devices #k_1 or the plurality of subscriber devices #k_2. In addition, the first optical multiplexing/demultiplexing means 70-1 is connected to the port of the path switching means 15-1 of the light distribution means 10-1 or the port of the path switching means 15-2 of the light distribution means 10-2 through the second optical multiplexing/demultiplexing means 70-2.

The subscriber device #k_1 transmits the signal light carrying the uplink control signal to be transmitted to the control unit 20-1 at a wavelength different from a wavelength allocated as the signal light carrying the main signal. Here, it is assumed that the subscriber device #k_1 transmits the signal light carrying the uplink control signal at a wavelength λ_{C_UP}.

On the other hand, the subscriber device management control unit 21 transmits the signal light carrying the downlink control signal to be transmitted to the subscriber device #k_2 at a wavelength different from a wavelength allocated as the signal light carrying the main signal. Here, it is assumed that the subscriber device management control unit 21 transmits the signal light carrying the uplink control signal at a wavelength λ_{C_DOWN}.

Meanwhile, Fig. 19 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

The first optical multiplexing/demultiplexing means 70-1 multiplexes signal light carrying one or more main signals and signal light carrying an uplink control signal which are input from each subscriber device #k_1 to be connected, and outputs the multiplexed signal to the second optical multiplexing/demultiplexing means 70-2. In addition, the first optical multiplexing/demultiplexing means 70-1 branches the signal light obtained by multiplexing signal light carrying one or more main signals and signal light carrying an downlink control signal which are input from the second optical multiplexing/demultiplexing means 70-2, and outputs the branched signal light to each subscriber device #k_2 to be connected.

The first optical multiplexing/demultiplexing means 70-1 is constituted by using, for example, an optical coupler, an optical splitter, or the like.

The second optical multiplexing/demultiplexing means 70-2 separates the signal light input from the first optical multiplexing/demultiplexing means 70-1 into signal light carrying the main signal and signal light carrying the uplink control signal. The second optical multiplexing/demultiplexing means 70-2 then outputs the signal light carrying the main signal to the light distribution means 10-1, and outputs the signal light carrying the uplink control signal to the subscriber device management control unit 21. In addition, the second optical multiplexing/demultiplexing means 70-2 multiplexes the signal light carrying the main signal input from the light distribution means 10-2 and the signal light carrying the downlink control signal input from the subscriber device management control unit 21, and outputs the multiplexed signal light to the first optical multiplexing/demultiplexing means 70-1.

The second optical multiplexing/demultiplexing means is constituted by using, for example, a wavelength filter or the like.

The light distribution means 10-1 and the light distribution means 10-2 have an light distribution means for multiplexing the signal light input from the lower port in any combination to output the multiplexed signal light from any upper port and output the signal light input from the upper port from any lower port.

As shown in Fig. 19, the light distribution means 10-1 functions as a light distribution means by being configured to include the path switching means 15-1 and the plurality of wavelength multiplexing/demultiplexing means 30-1. In addition, the light distribution means 10-2 functions as a light distribution means by being configured to include the path switching means 15-2 and the plurality of wavelength multiplexing/demultiplexing means 30-2. The path switching means 15-1 is constituted by using, for example, a matrix switch or the like. In addition, the wavelength multiplexing/demultiplexing means 30-1 is constituted by using, for example, an optical coupler, a wavelength selective switch (WSS), or the like. Meanwhile, the configuration of the light distribution means 10-1 and the light distribution means 10-2 shown in Fig. 19 is an example.

As another configuration example, it is also possible to configure the light distribution means 10-1 functioning as a light distribution means by combining, for example, the path switching means 15-1 constituted by using a multicast switch constituted by a plurality of 1 × M optical switches and a plurality of N × 1 optical couplers (or splitters) with, for example, the wavelength multiplexing/demultiplexing means 30-1 constituted by using WSS having a plurality of input ports and a plurality of output ports. Similarly, it is also possible to configure the light distribution means 10-2 functioning as a light distribution means by combining, for example, the path switching means 15-2 constituted by using a multicast switch constituted by a plurality of 1 × M optical switches and a plurality of N × 1 optical couplers (or splitters) with, for example, the wavelength multiplexing/demultiplexing means 30-2 constituted by using WSS having a plurality of input ports and a plurality of output ports.

The subscriber device #k_1 outputs signal light including the uplink control signal only during a time slot permitted by the subscriber device management control unit 21 of the control unit 20-1. The subscriber device #k_1 stops outputting signal light during time slots other than the time slot permitted by the subscriber device management control unit 21 of the control unit 20-1. That is, the signal light including the uplink control signal is burst signal light.

The subscriber device management control unit 21 of the control unit 20-1 stores each round trip time (RTT) in the transfer of the signal light between each of the subscriber devices #k_1 (k = 1, 2, ···) and its own subscriber device management control unit 21, for example, in a storage medium (not shown) included in its own device. The subscriber device management control unit 21 performs control so that the uplink control signal transmitted from the subscriber device #k_1 which is burst signal light does not reach its own subscriber device management control unit 21 in the same time slot as the uplink control signal transmitted from the other subscriber device #k_1.

Specifically, the subscriber device management control unit 21 of the control unit 20-1 refers to, for example, the value of RTT stored in the above storage medium (not shown). The subscriber device management control unit 21 imparts permission to transmit the signal light including the uplink control signal to each subscriber device #k_1 at a timing determined on the basis of the value of the RTT.

The subscriber device management control unit 21 of the control unit 20-1 photoelectrically converts the signal light including the uplink control signal, and then specifies the subscriber device #k_1 which is a transmission source of the received uplink control signal on the basis of an identifier included in the uplink control signal. For example, as the identifier, an ID assigned to the subscriber device #k_1 from the subscriber device management control unit 21 of the control unit 20-1, a MAC address of the subscriber device #k_1, or the like can be used.

The signal light including the downlink control signal is signal light in which the downlink control signal addressed to each subscriber device #k_2 is time-multiplexed. The subscriber device #k_2 photoelectrically converts the signal light including the downlink control signal, and then selectively receives a downlink control signal addressed to its own device from the time-multiplexed downlink control signal on the basis of the identifier included in the downlink control signal. For example, as the identifier, an ID assigned to the subscriber device #k_2 from the subscriber device management control unit 21 of the control unit 20-2, a MAC address of the subscriber device #k_2, or the like can be used.

The wavelength λ_{C_UP} of the signal light including the uplink control signal transmitted by each subscriber device #k_1 is a wavelength within a wavelength range transmitted from a port connected to the first optical multiplexing/demultiplexing means 70-1 (the left port of the second optical multiplexing/demultiplexing means 70-2 connected to the first optical multiplexing/demultiplexing means 70-1 in Fig. 19) to a port connected to the subscriber device management control unit 21 (the upper port of the second optical multiplexing/demultiplexing means 70-2 connected to the subscriber device management control unit 21 in Fig. 19) among the input/output ports of the second optical multiplexing/demultiplexing means 70-2. Meanwhile, the wavelengths of the signal light including the uplink control signal transmitted by each subscriber device #k_1 may all be the same wavelength, or may be different wavelengths from each other.

The wavelength λ_{C_DOWN} of the signal light including the downlink control signal transmitted by the subscriber device management control unit 21 of the control unit 20-2 is a wavelength within a wavelength range transmitted from a port connected to the subscriber device management control unit 21 (the upper port of the second optical multiplexing/demultiplexing means 70-2 connected to the subscriber device management control unit 21 in Fig. 19) to a port connected to the first optical multiplexing/demultiplexing means 70-1 (the right port of the second optical multiplexing/demultiplexing means 70-2 connected to the first optical multiplexing/demultiplexing means 70-1 in Fig. 19) among the input/output ports of the second optical multiplexing/demultiplexing means 70-2.

Meanwhile, the optical communication system 1h illustrated in Fig. 19 has a configuration in which there is a section where rightward signal light transferred from the left side to the right side (that is, from the subscriber device #k_1 side to the subscriber device #k_2 side) and leftward signal light transferred from the right side to the left side (that is, from the subscriber device #k_2 side to the subscriber device #k_1 side) in Fig. 19 flow through the same optical fiber core wire. However, the present invention is not limited to such a configuration, and it is also possible to have a configuration in which there is a section where the rightward signal light and the leftward signal light flow through different optical fiber core wires from each other.

In a case where there is a section where the rightward signal light and the leftward signal light flow through the same optical fiber core wire (for example, as shown in Fig. 19), the reflection of one signal light occurring in the optical fiber transmission line gives rise to a deterioration in the reception characteristics of the other signal light (signal light traveling in the opposite direction). In order to prevent such deterioration in the reception characteristics, for example, the subscriber device management control unit 21 imparts transmission permission to the subscriber device #k_1 and the subscriber device #k_2 so that the wavelength of the rightward signal light and the wavelength of the leftward signal are set to be different wavelengths from each other or the rightward signal light and the leftward signal light are transmitted at different timings from each other.

In the optical communication system 1h illustrated in Fig. 19, the wavelength of the signal light including the uplink control signal and the wavelength of the signal light including the downlink control signal are different wavelengths from each other. However, in a case where there is no section in which the rightward signal light and leftward signal light flow through the same optical fiber core wire, the wavelength of the rightward signal light and the wavelength of the leftward signal can be made to be the same wavelength. For example, in this case, the wavelength of the signal light including the uplink control signal and the wavelength of the signal light including the downlink control signal can be made to be the same wavelength.

### [Operation of optical communication system]

Hereinafter, an example of the operation of the optical communication system 1h will be described. Fig. 20 is a flowchart illustrating operations of the optical communication system 1h in the fourth embodiment of the present invention. The operation of the optical communication system 1h shown in the flowchart of Fig. 20 is started when the new subscriber device #k_1 is connected to the network.

In a case where the new subscriber device #k_1 is connected to the network, the subscriber device management control unit 21 of the control unit 20-1 detects the connection of the new subscriber device #k_1 to the network (step S401).

In a case where the connection of the new subscriber device #k_1 to the network is detected, the subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port c. The subscriber device management control unit 21 instructs the new subscriber device #k_1 to set a wavelength, and allocates a wavelength to the subscriber device #k_1. This allows the optical path to be opened (step S402).

The subscriber device management control unit 21 of the control unit 20-1 uses the management control port c to impart permission to transmit the uplink control signal each subscriber device #k_1 on the basis of the value each RTT measured for each subscriber device #k_1 so that the uplink control signal which is burst signal light transmitted from each subscriber device #k_1 does not collide (step S403).

Each subscriber device #k_1 transmits the uplink control signal to the subscriber device management control unit 21 at each timing corresponding to the transmission permission notified of by the subscriber device management control unit 21 (step S404). The operation of the optical communication system 1h shown in the flowchart of Fig. 20 is completed as described above.

As described above, the optical communication system 1h in the fourth embodiment the present invention includes the plurality of first optical multiplexing/demultiplexing means 70-1 and the plurality of second optical multiplexing/demultiplexing means 70-2. The subscriber device #k_1 outputs the main signal and the uplink control signal addressed to the subscriber device management control unit 21 of the control unit 20-1 to the first optical multiplexing/demultiplexing means 70-1 at different wavelengths from each other. The first optical multiplexing/demultiplexing means 70-1 multiplexes the signals transmitted from the plurality of subscriber devices #k_1 and outputs the multiplexed signals to the second optical multiplexing/demultiplexing means 70-2. The second optical multiplexing/demultiplexing means 70-2 separates the multiplexed signal input from the first optical multiplexing/demultiplexing means 70-1 into a main signal and an uplink control signal, outputs the main signal to the light distribution means 10-1, and outputs the uplink control signal to the management control port c of the subscriber device management control unit 21 of the control unit 20-1. In addition, the subscriber device management control unit 21 of the control unit 20-2 outputs a downlink control signal addressed to the subscriber device #k_2 at a wavelength different from that of the optical carrier carrying the main signal. The second optical multiplexing/demultiplexing means 70-2 multiplexes the main signal input from the light distribution means 10-2 and the downlink control signal input from the management control port c of the subscriber device management control unit 21, and outputs the multiplexed signal to the first optical multiplexing/demultiplexing means 70-1. The first optical multiplexing/demultiplexing means 70-1 branches the signal input from the second optical multiplexing/demultiplexing means 70-2 and outputs it to the plurality of subscriber devices #k_2.

The subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the burst signal light transmitted from each subscriber device #k_1 does not collide.

Further, in the optical communication system 1h in the fourth embodiment, the same management control port c transmits and receives a control signal to and from the subscriber device #k_1 before and after the optical path is opened. The management control port c transmits and receives an uplink control signal to and from the subscriber device #k_1 before the optical path is opened through the second optical multiplexing/demultiplexing means 70-2 and the light distribution means 10-1. In addition, similarly, the management control port c transmits and receives the uplink control signal to and from the subscriber device #k_1 after the optical path is opened through the second optical multiplexing/demultiplexing means 70-2 and the first optical multiplexing/demultiplexing means 70-1.

With the above-described configuration, the optical communication system 1h in the fourth embodiment of the present invention transmits and receive a control signal between the subscriber device management control unit 21 and the subscriber device #k_1 using the same management control port c before and after the optical path is opened, so that the subscriber device management control unit 21 can be configured more simply than the optical communication system 1a in the first embodiment. In addition, with the above-described configuration, the optical communication system 1h in the fourth embodiment can allow the management control port c of the subscriber device management control unit 21 to be shared between the plurality of subscriber devices #k_1. Thus, according to the optical communication system 1h, it is not necessary to provide the management control port c of the subscriber device management control unit 21 for each subscriber device #k_1. Thus, the optical communication system 1h in the fourth embodiment of the present invention can transmit and receive a control signal between the subscriber device management control unit 21 and the subscriber device #k_1 after the optical path is opened once with a simple configuration of the subscriber device management control unit 21.

### <Fifth embodiment>

Hereinafter, an optical communication system 1i in a fifth embodiment of the present invention will be described. Fig. 21 is an overall configuration diagram of the optical communication system 1i in the fifth embodiment of the present invention.

As shown in Fig. 21, the optical communication system 1i in the fifth embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a plurality of optical fiber transmission lines 50, an optical communication network (NW) 60, a plurality of first optical multiplexing/demultiplexing means 70-1, a plurality of second optical multiplexing/demultiplexing means 70-2, a plurality of third optical multiplexing/demultiplexing means 70-3, a plurality of fourth optical multiplexing/demultiplexing means 70-4, and a plurality of optical amplification means 75.

Meanwhile, in the following description, among components included in the optical communication system 1i in the fifth embodiment shown in Fig. 21, components having the same configurations as the components included in the conventional optical communication system 1 shown in Fig. 1 described above, the components included in the conventional optical communication system 1' shown in Fig. 2 described above, and the components included in the optical communication system each embodiment described above are denoted by the same reference numerals, and thus the description thereof may be omitted.

The light distribution means 10-1 is configured to include the path switching means 15-1 and the plurality of wavelength multiplexing/demultiplexing means 30-1. The light distribution means 10-2 is configured to include the path switching means 15-2 and the plurality of wavelength multiplexing/demultiplexing means 30-2. The control unit 20-1 and the control unit 20-2 are each configured to include the subscriber device management control unit 21 and the light distribution control unit 22.

As shown in Fig. 21, in the optical communication system 1i in the fifth embodiment, similarly to the optical communication system 1h in the fourth embodiment shown in Fig. 19 described above, the first optical multiplexing/demultiplexing means 70-1 and the second optical multiplexing/demultiplexing means 70-2 are provided on the optical fiber transmission line 50 between the subscriber device #k_1 and the light distribution means 10-1 and the optical fiber transmission line 50 between the subscriber device #k_2 and the light distribution means 10-2.

Further, as shown in Fig. 21, in the optical communication system 1i in the fifth embodiment, the third optical multiplexing/demultiplexing means 70-3, the optical amplification means 75, and the second optical multiplexing/demultiplexing means 70-2 are provided on the optical fiber transmission line 50 between the first optical multiplexing/demultiplexing means 70-1 and the second optical multiplexing/demultiplexing means 70-2.

The first optical multiplexing/demultiplexing means 70-1 is connected to the plurality of subscriber devices #k_1 or the plurality of subscriber devices #k_2. In addition, the first optical multiplexing/demultiplexing means 70-1 is connected to the port of the light distribution means 10-1 or the light distribution means 10-2 through the third optical multiplexing/demultiplexing means 70-3, the optical amplification means 75, the fourth optical multiplexing/demultiplexing means 70-4, and the second optical multiplexing/demultiplexing means 70-2.

The subscriber device #k_1 transmits the signal light carrying the uplink control signal to be transmitted to the control unit 20-1 at a wavelength different from a wavelength allocated as the signal light carrying the main signal. Here, it is assumed that the subscriber device #k_1 transmits the signal light carrying the uplink control signal at a wavelength λ_{C_UP}.

On the other hand, the subscriber device management control unit 21 transmits the signal light carrying the downlink control signal to be transmitted to the subscriber device #k_2 at a wavelength different from a wavelength allocated as the signal light carrying the main signal. Here, it is assumed that the subscriber device management control unit 21 transmits the signal light carrying the uplink control signal at a wavelength λ_{C_DOWN}.

Meanwhile, Fig. 21 illustrates a case where signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

The first optical multiplexing/demultiplexing means 70-1 multiplexes signal light carrying one or more main signals and signal light carrying an uplink control signal which are input from each subscriber device #k_1 to be connected, and outputs the multiplexed signal to the third optical multiplexing/demultiplexing means 70-3. In addition, the first optical multiplexing/demultiplexing means 70-1 branches the signal light carrying one or more main signals and the signal light carrying an downlink control signal which are input from the third optical multiplexing/demultiplexing means 70-3, and outputs the branched signal light to each subscriber device #k_2 to be connected.

The first optical multiplexing/demultiplexing means 70-1 is constituted by using, for example, an optical coupler, a splitter, or the like. In a case where an optical coupler or a splitter is used as the first optical multiplexing/demultiplexing means 70-1, the signal light receives a branch loss when passing through the first optical multiplexing/demultiplexing means 70-1. The optical communication system 1i in the fifth embodiment includes the optical amplification means 75 between the first optical multiplexing/demultiplexing means 70-1 and the second optical multiplexing/demultiplexing means 70-2 in order to compensate for this branch loss.

In the optical communication system 1i in the fifth embodiment, in a case where the wavelength λ_{C_UP} of the signal light including the uplink control signal and the wavelength λ_{C_DOWN} of the signal light including the downlink control signal are wavelengths outside the wavelength band in which the optical amplification means 75 has a gain, as shown in Fig. 21, the third optical multiplexing/demultiplexing means 70-3 and the fourth optical multiplexing/demultiplexing means 70-4 cause the signal light including the uplink control signal and the signal light including the downlink control signal to be transferred bypassing the optical amplification means 75 without passing therethrough.

Meanwhile, for example, in order for the subscriber device management control unit 21 to receive an uplink control signal with a quality higher than a predetermined quality (for example, a code error rate lower than a predetermined value) and in order for the subscriber device #k_1 and the subscriber device #k_2 to receive a downlink control signal with a quality higher than a predetermined quality (for example, a code error rate lower than a predetermined value), in a case where the amplification of light intensity is required between the subscriber device management control unit 21 and, the subscriber device #k_1 and the subscriber device #k_2, an optical amplification means having a gain for the wavelength λ_{C_UP} of the signal light including the uplink control signal and an optical amplification means having a gain for the wavelength λ_{C_DOWN} of the signal light including the downlink control signal may be further in a bypass path between the third optical multiplexing/demultiplexing means 70-3 and the fourth optical multiplexing/demultiplexing means 70-4.

For the uplink control signal, the third optical multiplexing/demultiplexing means 70-3 separates the multiplexed signal light input from the first optical multiplexing/demultiplexing means 70-1 into signal light including a main signal and signal light including an uplink control signal. The third optical multiplexing/demultiplexing means 70-3 outputs the signal light including the main signal to the optical amplification means 75, and outputs the signal light including the uplink control signal to the fourth optical multiplexing/demultiplexing means 70-4 through a bypass path not passing through the optical amplification means 75.

For the uplink control signal, the fourth optical multiplexing/demultiplexing means 70-4 multiplexes the signal light including the main signal input from the optical amplification means 75 and the signal light including the uplink control signal input from the third optical multiplexing/demultiplexing means 70-3 through a bypass path not passing through the optical amplification means 75. The fourth optical multiplexing/demultiplexing means 70-4 outputs the multiplexed signal light to the second optical multiplexing/demultiplexing means 70-2.

For the downlink control signal, the fourth optical multiplexing/demultiplexing means 70-4 separates the multiplexed signal light input from the second optical multiplexing/demultiplexing means 70-2 into signal light including a main signal and signal light including a downlink control signal. The fourth optical multiplexing/demultiplexing means 70-4 outputs the signal light including the main signal to the optical amplification means 75, and outputs the signal light including the downlink control signal to the third optical multiplexing/demultiplexing means 70-3 through a bypass path not passing through the optical amplification means 75.

For the downlink control signal, the third optical multiplexing/demultiplexing means 70-3 multiplexes the signal light including the main signal input from the optical amplification means 75 and the signal light including the downlink control signal input from the fourth optical multiplexing/demultiplexing means 70-4 through a bypass path not passing through the optical amplification means 75. The fourth optical multiplexing/demultiplexing means 70-4 outputs the multiplexed signal light to the first optical multiplexing/demultiplexing means 70-1.

The third optical multiplexing/demultiplexing means 70-3 and the fourth optical multiplexing/demultiplexing means 70-4 are constituted by using, for example, a wavelength filter or the like.

As in the fourth embodiment, in the optical communication system 1i in the fifth embodiment, the signal light carrying the uplink control signal and the signal light carrying the downlink control signal are transmitted and received in a passive optical network (PON) system. Therefore, in the transmission and reception of the signal light carrying the uplink control signal and the signal light carrying the downlink control signal, an optical transceiver for PON which is technically matured and widely spread can be used.

For example, in Gigabit Ethernet-PON (GE-PON) and Gigabit-PON (G-PON) which are PONs with a communication speed of 1 [Gbit/s] class, the wavelength band of the signal light carrying the uplink control signal and the wavelength band of the signal light carrying the downlink control signal are within an original band (O band) (1290-1330 [nm]) and a short wavelength band (S band) (1480-1500 [nm]), respectively. On the other hand, the signal light carrying the main signal has a longer transmission distance than the wavelength band of the signal light carrying the uplink control signal and the signal light carrying the downlink control signal. Therefore, it is also expected that a conventional band (C band) having a low transmission loss in a general single-mode fiber will be used as the wavelength band of the signal light carrying the main signal.

For example, generally, the wavelength band used by a digital coherent transceiver for long-distance transmission is a C band. In this case, an optical filter for separating the signal light of the wavelength of the C band from the signal light of the wavelength of the wavelength band other than the C band is used as the third optical multiplexing/demultiplexing means 70-3 and the fourth optical multiplexing/demultiplexing means 70-4, and an erbium-doped fiber amplifier (EDFA), a semiconductor optical amplifier (SOA), or the like having a gain band in the C band is used as the optical amplification means 75, whereby the signal light carrying the uplink control signal and the signal light carrying the downlink control signal are bypassed so as not to pass through the optical amplification means 75, and then the signal intensity of the signal light carrying the main signal can be amplified by the optical amplification means 75.

### [Operation of optical communication system]

Hereinafter, an example of the operation of the optical communication system 1i will be described. Fig. 22 is a flowchart illustrating operations of the optical communication system 1i in the fifth embodiment of the present invention. The operation of the optical communication system 1i shown in the flowchart of Fig. 22 is started when the new subscriber device #k_1 is connected to the network.

In a case where the new subscriber device #k_1 is connected to the network, the subscriber device management control unit 21 of the control unit 20-1 detects the connection of the new subscriber device #k_1 to the network (step S501).

In a case where the connection of the new subscriber device #k_1 to the network is detected, the subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port c. The subscriber device management control unit 21 instructs the new subscriber device #k_1 to set a wavelength, and allocates a wavelength to the subscriber device #k_1. This allows the optical path to be opened (step S502).

The subscriber device management control unit 21 of the control unit 20-1 uses the management control port c to impart permission to transmit the uplink control signal each subscriber device #k_1 on the basis of the value each RTT measured for each subscriber device #k_1 so that the uplink control signal which is burst signal light transmitted from each subscriber device #k_1 does not collide (step S503).

Each subscriber device #k_1 transmits the uplink control signal to the subscriber device management control unit 21 at each timing corresponding to the transmission permission notified of by the subscriber device management control unit 21 (step S504). The operation of the optical communication system 1i shown in the flowchart of Fig. 22 is completed as described above.

As described above, the optical communication system 1i in the fifth embodiment of the present invention includes the plurality of first optical multiplexing/demultiplexing means 70-1 and the plurality of second optical multiplexing/demultiplexing means 70-2. The subscriber device #k_1 outputs the main signal and the uplink control signal addressed to the subscriber device management control unit 21 of the control unit 20-1 to the first optical multiplexing/demultiplexing means 70-1 at different wavelengths from each other. The first optical multiplexing/demultiplexing means 70-1 multiplexes the signals transmitted from the plurality of subscriber devices #k_1 and outputs the multiplexed signals to the second optical multiplexing/demultiplexing means 70-2. The second optical multiplexing/demultiplexing means 70-2 separates the multiplexed signal input from the first optical multiplexing/demultiplexing means 70-1 into a main signal and an uplink control signal, outputs the main signal to the light distribution means 10-1, and outputs the uplink control signal to the management control port c of the subscriber device management control unit 21 of the control unit 20-1. In addition, the subscriber device management control unit 21 of the control unit 20-2 outputs a downlink control signal addressed to the subscriber device #k_2 at a wavelength different from that of the optical carrier carrying the main signal. The second optical multiplexing/demultiplexing means 70-2 multiplexes the main signal input from the light distribution means 10-2 and the downlink control signal input from the management control port c of the subscriber device management control unit 21, and outputs the multiplexed signal to the first optical multiplexing/demultiplexing means 70-1. The first optical multiplexing/demultiplexing means 70-1 branches the signal input from the second optical multiplexing/demultiplexing means 70-2 and outputs it to the plurality of subscriber devices #k_2.

The subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the burst signal light transmitted from each subscriber device #k_1 does not collide.

Further, in the optical communication system 1i in the fifth embodiment, the same management control port c transmits and receives a control signal to and from the subscriber device #k_1 before and after the optical path is opened. The management control port c transmits and receives a control signal to and from the subscriber device #k_1 before the optical path is opened through the second optical multiplexing/demultiplexing means 70-2 and the light distribution means 10-1. In addition, the management control port c transmits and receives the control signal to and from the subscriber device #k_1 after the optical path is opened through the second optical multiplexing/demultiplexing means 70-2, and the first optical multiplexing/demultiplexing means 70-1.

With the above-described configuration, the optical communication system 1i in the fifth embodiment of the present invention transmits and receive a control signal between the subscriber device management control unit 21 and the subscriber device #k_1 using the same management control port c before and after the optical path is opened, so that the subscriber device management control unit 21 can be configured more simply than the optical communication system 1a in the first embodiment. In addition, with the above-described configuration, the optical communication system 1i in the fifth embodiment can allow the management control port c of the subscriber device management control unit 21 to be shared between the plurality of subscriber devices #k_1. Thus, according to the optical communication system 1i, it is not necessary to provide the management control port c of the subscriber device management control unit 21 for each subscriber device #k_1. Thus, the optical communication system 1i in the fifth embodiment of the present invention can transmit and receive a control signal between the subscriber device management control unit 21 and the subscriber device #k_1 after the optical path is opened once with a simple configuration of the subscriber device management control unit 21.

In addition, as described above, the optical communication system 1i in the fifth embodiment includes the optical amplification means 75 for amplifying the signal light carrying the main signal between the first optical multiplexing/demultiplexing means 70-1 and the second optical multiplexing/demultiplexing means 70-2. This makes it possible for the optical communication system 1i in the fifth embodiment to compensate for a branch loss occurring when the signal light carrying the main signal passes through the first optical multiplexing/demultiplexing means 70-1.

### (First modification example of fifth embodiment)

Hereinafter, an optical communication system j in a first modification example of the fifth embodiment of the present invention will be described. Fig. 23 is an overall configuration diagram of the optical communication system 1j in the first modification example of the fifth embodiment of the present invention.

As shown in Fig. 23, the optical communication system 1j in the first modification example of the fifth embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a plurality of optical fiber transmission lines 50, an optical communication network (NW) 60, a plurality of first optical multiplexing/demultiplexing means 70-1, a plurality of second optical multiplexing/demultiplexing means 70-2, a plurality of optical amplification means 75, a plurality of fourth optical multiplexing/demultiplexing means 70-4, and a plurality of fifth optical multiplexing/demultiplexing means 70-5.

Meanwhile, in the following description, among components included in the optical communication system 1j in the first modification example of the fifth embodiment shown in Fig. 23, components having the same configurations as the components included in the conventional optical communication system 1 shown in Fig. 1 described above, the components included in the conventional optical communication system 1' shown in Fig. 2 described above, and the components included in the optical communication system in each embodiment described above are denoted by the same reference numerals, and thus the description thereof may be omitted.

Meanwhile, Fig. 23 illustrates a case where a signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 23, the optical communication system 1j in the first modification example of the fifth embodiment includes a configuration for multiplexing the signal light carrying the main signal and the signal light carrying the uplink control signal at a stage after the signal light carrying the main signal passes through the optical amplification means 75, and a configuration for separating the signal light carrying the main signal from the signal light carrying the downlink control signal at a stage before the signal light carrying the main signal passes through the optical amplification means 75.

Specifically, as shown in Fig. 23, in the optical communication system 1j in the first modification example of the fifth embodiment, the first optical multiplexing/demultiplexing means 70-1 wavelength-multiplexes the signal light carrying the main signal transmitted from each of the plurality of subscriber devices #k_1. The first optical multiplexing/demultiplexing means 70-1 outputs the wavelength-multiplexed signal light to the optical amplification means 75. The optical amplification means 75 amplifies the signal light input from the first optical multiplexing/demultiplexing means 70-1. The optical amplification means 75 outputs the amplified signal light to the fourth optical multiplexing/demultiplexing means 70-4.

The fifth optical multiplexing/demultiplexing means 70-5 time-multiplexes the signal light carrying the uplink control signal transmitted from each of the subscriber devices #k_1. The fifth optical multiplexing/demultiplexing means 70-5 outputs the time-multiplexed signal light to the fourth optical multiplexing/demultiplexing means 70-4. The fourth optical multiplexing/demultiplexing means 70-4 multiplexes the signal light amplified by the above-described optical amplification means 75 and the signal light time-multiplexed by the fifth optical multiplexing/demultiplexing means 70-5, and outputs the multiplexed signal light to the second optical multiplexing/demultiplexing means 70-2.

In addition, specifically, as shown in Fig. 23, in the optical communication system 1j in the first modification example of the fifth embodiment, the fourth optical multiplexing/demultiplexing means 70-4 separates the signal light input from the second optical multiplexing/demultiplexing means 70-2 into signal light carrying a main signal and signal light carrying a downlink control signal light. The fourth optical multiplexing/demultiplexing means 70-4 outputs the signal light carrying the main signal to the optical amplification means 75, and outputs the signal light carrying the downlink control signal light to the fifth optical multiplexing/demultiplexing means 70-5.

The optical amplification means 75 amplifies the signal light carrying the main signal input from the fourth optical multiplexing/demultiplexing means 70-4. The optical amplification means 75 outputs the amplified signal light carrying the main signal to the first optical multiplexing/demultiplexing means 70-1. The first optical multiplexing/demultiplexing means 70-1 branches the signal light carrying the main signal input from the optical amplification means 75, and outputs it to the plurality of subscriber devices #k_2. The fifth optical multiplexing/demultiplexing means 70-5 branches the signal light carrying the downlink control signal light input from the fourth optical multiplexing/demultiplexing means 70-4, and outputs it to each of the plurality of subscriber devices #k_2.

As described above, the optical communication system 1j in the first modification example of the fifth embodiment includes the optical amplification means 75 for amplifying the signal light carrying the main signal between the first optical multiplexing/demultiplexing means 70-1 and the second optical multiplexing/demultiplexing means 70-2. This makes it possible for the optical communication system 1j in the first modification example of the fifth embodiment to compensate for a branch loss occurring when the signal light carrying the main signal passes through the first optical multiplexing/demultiplexing means 70-1.

### (Second modification example of fifth embodiment)

Hereinafter, an optical communication system 1k in a second modification example of the fifth embodiment of the present invention will be described. Fig. 24 is an overall configuration diagram of the optical communication system 1k in the second modification example of the fifth embodiment of the present invention.

As shown in Fig. 24, the optical communication system 1k in the second modification example of the fifth embodiment is configured to include a plurality of subscriber devices #k_1 (k = 1, 2, ···), a plurality of subscriber devices #k_2 (k = 1, 2, ···), a light distribution means 10-1 and a light distribution means 10-2, a control unit 20-1 and a control unit 20-2, a plurality of optical fiber transmission lines 50, an optical communication network (NW) 60, a plurality of first optical multiplexing/demultiplexing means 70-1, a plurality of second optical multiplexing/demultiplexing means 70-2, a plurality of third optical multiplexing/demultiplexing means 70-3, a plurality of optical amplification means 75, a plurality of optical amplification control devices 85, and a plurality of fourth optical multiplexing/demultiplexing means 70-4.

Meanwhile, in the following description, among components included in the optical communication system 1k in the fifth embodiment shown in Fig. 24, components having the same configurations as the components included in the conventional optical communication system 1 shown in Fig. 1 described above, the components included in the conventional optical communication system 1' shown in Fig. 2 described above, and the components included in the optical communication system in each embodiment described above are denoted by the same reference numerals, and thus the description thereof may be omitted.

Meanwhile, Fig. 24 illustrates a case where signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

As shown in Fig. 24, the optical communication system 1k in the second modification example of the fifth embodiment has a configuration in which the optical amplification control device 85 that controls the amplification factor or the like of amplification of signal light performed by the optical amplification means 75 is connected to the lower port of the first optical multiplexing/demultiplexing means 70-1 (that is, the port on the opposite side to the port on the optical communication network (NW) 60 side which is an upper port).

Similarly to the plurality of subscriber devices #k_1, the optical amplification control device 85 transmits the signal light carrying the uplink control signal addressed to the subscriber device management control unit 21 to the first optical multiplexing/demultiplexing means 70-1. In addition, the optical amplification control device 85 receives signal light in which the downlink control signal transmitted from the subscriber device management control unit 21 to the plurality of subscriber devices #k_2 and the optical amplification control device 85 (that is, its own device) is time-multiplexed.

The downlink control signal transmitted to the optical amplification control device 85 includes an instruction for setting the amplification factor or the like of amplification of the signal light for the optical amplification means 25. The optical amplification control device 85 controls the amplification factor or the like of amplification of the signal light performed by the optical amplification control device 85 in accordance with this setting instruction.

As described above, the optical communication system 1k in the second modification example of the fifth embodiment includes the optical amplification means 75 for amplifying the signal light carrying the main signal between the first optical multiplexing/demultiplexing means 70-1 and the second optical multiplexing/demultiplexing means 70-2. This makes it possible for the optical communication system 1k in the second modification example of the fifth embodiment to compensate for a branch loss occurring when the signal light carrying the main signal passes through the first optical multiplexing/demultiplexing means 70-1.

### <Sixth embodiment>

Hereinafter, an optical communication system 1l in a sixth embodiment of the present invention will be described. Fig. 25 is an overall configuration diagram of the optical communication system 1l in the sixth embodiment of the present invention.

As shown in Fig. 25, the optical communication system 1l in the sixth embodiment is configured to include a plurality of subscriber devices #k_1 (k = 1, 2, ···), a plurality of subscriber devices #k_2 (k = 1, 2, ···), a first light distribution means 10a-1 and a first light distribution means 10a-2, a second light distribution means 10b-1 and a second light distribution means 10b-2, a plurality of path control devices 86, a control unit 20-1 and a control unit 20-2, a plurality of optical fiber transmission lines 50, an optical communication network (NW) 60, and a plurality of second optical multiplexing/demultiplexing means 70-2.

Meanwhile, in the following description, among components included in the optical communication system 1l in the sixth embodiment shown in Fig. 25, components having the same configurations as the components included in the conventional optical communication system 1 shown in Fig. 1 described above, the components included in the conventional optical communication system 1' shown in Fig. 2 described above, and the components included in the optical communication system in each embodiment described above are denoted by the same reference numerals, and thus the description thereof may be omitted.

Meanwhile, Fig. 25 illustrates a case where signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

The first light distribution means 10a-1 is configured to include the path switching means 15-1 and the plurality of wavelength multiplexing/demultiplexing means 30-1. The first light distribution means 10a-2 is configured to include the path switching means 15-2 and the plurality of wavelength multiplexing/demultiplexing means 30-2. The control unit 20-1 and the control unit 20-2 are each configured to include the subscriber device management control unit 21 and the light distribution control unit 22.

The second light distribution means 10b-1 and the second light distribution means 10b-2 are multicast switches constituted by N pieces of 1 × M (1-to-M input/output) optical switches 17 and M pieces of N × 1 (N-to-1 input/output) optical couplers 16 (or, M pieces of N × 1 optical splitters). Meanwhile, the second light distribution means 10b-1 and the second light distribution means 10b-2 are not limited to such a configuration, and may be constituted by, for example, matrix switches and optical couplers (or optical splitters).

As shown in Fig. 25, the configuration of the optical communication system 1l in the sixth embodiment differs from the configuration of the optical communication system 1h in the fourth embodiment described above in that the second light distribution means 10b-1 and the second light distribution means 10b-2 are provided instead of the first optical multiplexing/demultiplexing means 70-1.

The second light distribution means 10b-1 and the second light distribution means 10b-2 multiplex the signal light input from the lower port (that is, the port on the opposite side to the port on the optical communication network (NW) 60 side which is an upper port) in any combination to output it from any upper port to the second optical multiplexing/demultiplexing means 70-2. In addition, the second light distribution means 10b-1 and the second light distribution means 10b-2 output the signal light input from the upper port (that is, the port on the optical communication network (NW) 60 side) from one or more optional lower ports to each of the plurality of subscriber devices #k_2 and the path control device 86.

In this way, in the optical communication system 1l in the sixth embodiment, the plurality of subscriber devices #k_1 and the path control device 86 are connected to the lower port of the second light distribution means 10b-1, and the plurality of subscriber devices #k_2 and the path control device 86 are connected to the lower port of the second light distribution means 10b-2. In addition, the lower port of the first light distribution means 10a-1 is connected to the upper port of the second light distribution means 10b-1 through the second optical multiplexing/demultiplexing means 70-2, and the lower port of the first light distribution means 10a-2 is connected to the upper port of the second light distribution means 10b-2 through the second optical multiplexing/demultiplexing means 70-2.

Meanwhile, the first light distribution means 10a-1 and the first light distribution means 10a-2 in the optical communication system 1l in the sixth embodiment function as functional units equivalent to the light distribution means 10-1 and the light distribution means 10-2 of the optical communication system 1h in the above-described fourth embodiment.

Similarly to the plurality of subscriber devices #k_1, the path control device 86 outputs the signal light carrying the uplink control signal transmitted to the subscriber device management control unit 21 to the second light distribution means 10b-1. In addition, the path control device 86 receives signal light in which the downlink control signal transmitted from the subscriber device management control unit 21 to the plurality of subscriber devices #k_2 and the path control device 86 (that is, its own device) is time-multiplexed.

The downlink control signal transmitted to the path control device 86 includes an instruction for setting inter-port connection to the second light distribution means 10b-2. The path control device 86 controls the setting of inter-port connection of the second light distribution means 10b-2 in accordance with the instruction for setting the inter-port connection.

The second light distribution means 10b-1 sets the inter-port connection so that signal light including one or more main signals and signal light including an uplink control signal which are input from the plurality of subscriber devices #k_1 and the path control device 86 that transmit and receive the signal light carrying the uplink control signal to and from the same management control port c of the subscriber device management control unit 21 to the lower port are output from the same upper port to the second optical multiplexing/demultiplexing means 70-2. As described above, the setting of the inter-port connection is performed in accordance with control based on the setting instruction from the path control device 86.

In addition, the second light distribution means 10b-2 sets the inter-port connection so that signal light in which signal light including one or more main signals and signal light including an downlink control signal are wavelength-multiplexed, input from the second optical multiplexing/demultiplexing means 70-2 to the upper port, is output from the lower port to the plurality of subscriber devices #k_2 and the path control device 86 that transmit and receive the signal light carrying the downlink control signal to and from the same management control port c of the subscriber device management control unit 21. As described above, the setting of the inter-port connection is performed in accordance with control based on the setting instruction from the path control device 86.

For example, in the configuration of the optical communication system 1l illustrated in Fig. 25, the subscriber device #1_1, the subscriber device #2_1, the subscriber device #3_1, and the path control device 86 transmit and receive the signal light of the uplink control signal to and from the management control port c#1 of the subscriber device management control unit 21. The second light distribution means 10b-1 wavelength-multiplexes signal light including main signals of a wavelength λ_{1_1}, a wavelength λ_{2_1}, and a wavelength λ_{3_1} and signal light of an uplink control signal of a wavelength λ_{C_UP} input from a port #1, a port #2, and a port #3 which are lower ports connected to the subscriber device #1_1, the subscriber device #2_1, the subscriber device #3_1, respectively, and signal light of an uplink control signal of a wavelength λ_{C_UP} input from a port #N which is a lower port connected to the path control device 86, and outputs the wavelength-multiplexed signal light from the port #1 which is an upper port.

In addition, the second light distribution means 10b-2 outputs signal light including main signals of a wavelength λ_{1_1}, a wavelength λ_{2_1}, and a wavelength λ_{3_1} input from the port #1 which is an upper port and signal light including an downlink control signal of a wavelength λ_{C_DOWN} from the port #1, the port #2, the port #3, and the port #N which are lower ports connected to the subscriber device #1_2, the subscriber device #2_2, the subscriber device #3_2, and the path control device 86, respectively.

The subscriber device #k_2 selectively receives the signal light including the main signal and the signal light including the downlink control signal transmitted from the subscriber device #k_1 which is a communication partner from the signal light including one or more wavelength-multiplexed main signals and the signal light including the downlink control signal which are input from the second light distribution means 10b-2. In addition, the path control device 86 selectively receives the signal light including the downlink control signal from the signal light including one or more wavelength-multiplexed main signals and the signal light including the downlink control signal which are input from the second light distribution means 10b-2.

Meanwhile, in order to compensate for the insertion loss of the second light distribution means 10b-1 and the second light distribution means 10b-2, similarly to the configuration of the optical communication system 1i in the above-described fifth embodiment, the optical communication system 11 in the present embodiment may also be configured such that the optical amplification means is further provided between the second light distribution means 10b-1 and the second optical multiplexing/demultiplexing means 70-2 and between the second light distribution means 10b-2 and the second optical multiplexing/demultiplexing means 70-2.

### [Operation of optical communication system]

Hereinafter, an example of the operation of the optical communication system 11 will be described. Fig. 26 is a flowchart illustrating operations of the optical communication system 11 in the sixth embodiment of the present invention. The operation of the optical communication system 11 shown in the flowchart of Fig. 26 is started when the new subscriber device #k_1 is connected to the network.

In a case where the new subscriber device #k_1 is connected to the network, the subscriber device management control unit 21 of the control unit 20-1 detects the connection of the new subscriber device #k_1 to the network (step S601).

In a case where the connection of the new subscriber device #k_1 to the network is detected, the subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port c. The subscriber device management control unit 21 instructs the new subscriber device #k_1 to set a wavelength, and allocates a wavelength to the subscriber device #k_1. This allows the optical path to be opened (step S602).

The subscriber device management control unit 21 of the control unit 20-1 uses the management control port c to impart permission to transmit the uplink control signal each subscriber device #k_1 on the basis of the value each RTT measured for each subscriber device #k_1 so that the uplink control signal which is burst signal light transmitted from each subscriber device #k_1 does not collide (step S603).

Each subscriber device #k_1 transmits the uplink control signal to the subscriber device management control unit 21 at each timing corresponding to the transmission permission notified of by the subscriber device management control unit 21 (step S604). The operation of the optical communication system 11 shown in the flowchart of Fig. 26 is completed as described above.

As described above, the optical communication system 11 in the sixth embodiment of the present invention includes the plurality of second light distribution means 10b-1 and 10b-2 and the plurality of second optical multiplexing/demultiplexing means 70-2. The subscriber device #k_1 outputs the main signal and the uplink control signal addressed to the subscriber device management control unit 21 of the control unit 20-1 to the second light distribution means 10b-1 at different wavelengths from each other. The second light distribution means 10b-1 multiplexes the signals transmitted from the plurality of subscriber devices #k_1 and outputs the multiplexed signals to the second optical multiplexing/demultiplexing means 70-2. The second optical multiplexing/demultiplexing means 70-2 separates the multiplexed signal output from the second light distribution means 10b-1 into a main signal and an uplink control signal, outputs the main signal to the light distribution means 10-1, and outputs the uplink control signal to the management control port c of the subscriber device management control unit 21 of the control unit 20-1. In addition, the subscriber device management control unit 21 of the control unit 20-2 outputs a downlink control signal addressed to the subscriber device #k_2 at a wavelength different from that of the optical carrier carrying the main signal. The second optical multiplexing/demultiplexing means 70-2 multiplexes the main signal input from the light distribution means 10-2 and the downlink control signal input from the management control port c of the subscriber device management control unit 21, and outputs the multiplexed signal to the second light distribution means 10b-2. The second light distribution means 10b-2 branches the signal output from the second optical multiplexing/demultiplexing means 70-2 and outputs it to the plurality of subscriber devices #k_2.

The subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the burst signal light transmitted from each subscriber device #k_1 does not collide.

Further, in the optical communication system 11 in the sixth embodiment, the same management control port c transmits and receives a control signal to and from the subscriber device #k_1 before and after the optical path is opened. The management control port c transmits and receives the control signal to and from the subscriber device #k_1 before the optical path is opened through the second optical multiplexing/demultiplexing means 70-2, the second light distribution means 10b-1, or the second light distribution means 10b-2. In addition, the management control port c transmits and receives the control signal to and from the subscriber device #k_1 after the optical path is opened through the second optical multiplexing/demultiplexing means 70-2, the second light distribution means 10b-1, or the second light distribution means 10b-2.

With the above-described configuration, the optical communication system 11 in the sixth embodiment of the present invention transmits and receive a control signal between the subscriber device management control unit 21 and the subscriber device #k_1 using the same management control port c before and after the optical path is opened, so that the subscriber device management control unit 21 can be configured more simply than the optical communication system 1a in the first embodiment. In addition, with the above-described configuration, the optical communication system 11 in the sixth embodiment can allow the management control port c of the subscriber device management control unit 21 to be shared between the plurality of subscriber devices #k_1. Thus, according to the optical communication system 11, it is not necessary to provide the management control port c of the subscriber device management control unit 21 for each subscriber device #k_1. Thus, the optical communication system 11 in the sixth embodiment of the present invention can transmit and receive a control signal between the subscriber device management control unit 21 and the subscriber device #k_1 after the optical path is opened once with a simple configuration of the subscriber device management control unit 21.

In addition, the optical communication system 11 in the sixth embodiment can also include the optical amplification means 75 for amplifying the signal light carrying the main signal between the second light distribution means 10b-1 and 10b-2 and the second optical multiplexing/demultiplexing means 70-2. This makes it possible for the optical communication system 11 in the sixth embodiment to compensate for a branch loss occurring when the signal light carrying the main signal passes through the first optical multiplexing/demultiplexing means 70-1.

### <Seventh embodiment>

Hereinafter, an optical communication system 1m in a seventh embodiment of the present invention will be described.

Fig. 27 is an overall configuration diagram of the optical communication system 1m in the seventh embodiment of the present invention.

As shown in Fig. 27, the optical communication system 1m in the seventh embodiment is configured to include a plurality of subscriber devices #k_1 (k = 1, 2, ···), a plurality of subscriber devices #k_2 (k = 1, 2, ···), a wavelength multiplexing/demultiplexing means 30-4 and a wavelength multiplexing/demultiplexing means 30-5, a plurality of path control devices 86, a plurality of second optical multiplexing/demultiplexing means 70-2, a light distribution means 10-1 and a light distribution means 10-2, a control unit 20-1 and a control unit 20-2, a plurality of optical fiber transmission lines 50, and an optical communication network (NW) 60.

Meanwhile, in the following description, among components included in the optical communication system 1m in the seventh embodiment shown in Fig. 27, components having the same configurations as the components included in the conventional optical communication system 1 shown in Fig. 1 described above, the components included in the conventional optical communication system 1' shown in Fig. 2 described above, and the components included in the optical communication system in each embodiment described above are denoted by the same reference numerals, and thus the description thereof may be omitted.

Meanwhile, Fig. 27 illustrates a case where signal is transferred from the subscriber device #k_1 (k = 1, 2, ···) to the subscriber device #k_2 (k = 1, 2, ···), but conversely, the configuration in which a signal is transferred from the subscriber device #k_2 (k = 1, 2, ···) to the subscriber device #k_1 (k = 1, 2, ···) is also the same as a configuration to be described below.

The light distribution means 10-1 is configured to include the path switching means 15-1 and the plurality of wavelength multiplexing/demultiplexing means 30-1. In addition, the light distribution means 10-2 is configured to include the path switching means 15-2 and the plurality of wavelength multiplexing/demultiplexing means 30-2. The control unit 20-1 and the control unit 20-2 are each configured to include the subscriber device management control unit 21 and the light distribution control unit 22.

As shown in Fig. 27, the configuration of the optical communication system 1m in the seventh embodiment differs from the configuration of the optical communication system 1h in the fourth embodiment described above in that the wavelength multiplexing/demultiplexing means 30-4 and the wavelength multiplexing/demultiplexing means 30-5 are provided instead of the first optical multiplexing/demultiplexing means 70-1.

The wavelength multiplexing/demultiplexing means 30-4 and the wavelength multiplexing/demultiplexing means 30-5 can set the wavelength transmitted between the ports in units of wavelengths.

As shown in Fig. 27, the lower port of the wavelength multiplexing/demultiplexing means 30-4 is connected to the plurality of subscriber devices #k_1 and the path control device 86, and the lower port of the wavelength multiplexing/demultiplexing means 30-5 is connected to the plurality of subscriber devices #k_2 and the path control device 86. In addition, as shown in Fig. 27, the upper port of the wavelength multiplexing/demultiplexing means 30-4 is connected to the lower port of the light distribution means 10-1 through the second optical multiplexing/demultiplexing means 70-2, and the upper port of the wavelength multiplexing/demultiplexing means 30-5 is connected to the lower port of the light distribution means 10-2 through the second optical multiplexing/demultiplexing means 70-2.

The wavelength multiplexing/demultiplexing means 30-4 and the wavelength multiplexing/demultiplexing means 30-5 are constituted by using, for example, a wavelength selective switch (WSS) or the like.

Meanwhile, in the configuration of the optical communication system 1m illustrated in Fig. 27, although the wavelength multiplexing/demultiplexing means 30-4 and the wavelength multiplexing/demultiplexing means 30-5 include a plurality of upper ports, the number of upper ports included in the wavelength multiplexing/demultiplexing means 30-4 and the wavelength multiplexing/demultiplexing means 30-5 may be one.

Similarly to the plurality of subscriber devices #k_1, the path control device 86 transmits the signal light carrying the uplink control signal addressed to the subscriber device management control unit 21 to the wavelength multiplexing/demultiplexing means 30-4. **In** addition, the path control device 86 receives, from the wavelength multiplexing/demultiplexing means 30-4, the signal light in which the downlink control signal transmitted from the subscriber device management control unit 21 to the plurality of subscriber devices #k_2 and the path control device 86 (that is its own device) is time-multiplexed.

The downlink control signal transmitted to the path control device 86 includes an instruction for setting the inter-port connection in units of wavelengths with respect to the wavelength multiplexing/demultiplexing means 30-5. The path control device 86 controls the setting of the inter-port connection of the wavelength multiplexing/demultiplexing means 30-5 in units of wavelengths in accordance with the instruction for setting the inter-port connection in units of wavelengths.

The wavelength multiplexing/demultiplexing means 30-4 sets the inter-port connection so that signal light including one or more main signals and signal light including an uplink control signal which are input from the plurality of subscriber devices #k_1 and the path control device 86 that transmit and receive the signal light carrying the uplink control signal to and from the same management control port c of the subscriber device management control unit 21 to the lower port are output from the same upper port to the second optical multiplexing/demultiplexing means 70-2. As described above, the setting of the inter-port connection is performed in accordance with control based on the setting instruction from the path control device 86.

**In** this case, the path control device 86 dynamically switches the setting of the inter-port connection of the wavelength multiplexing/demultiplexing means 30-4 so that the signal light of the uplink control signal which is a burst signal transmitted from each of the subscriber devices #k_1 and the path control device 86 in a period permitted from the subscriber device management control unit 21 is time-multiplexed with respect to the wavelength of the signal light carrying the uplink control signal and is output from the upper port connected to the second optical multiplexing/demultiplexing means 70-2.

**In** addition, the wavelength multiplexing/demultiplexing means 30-5 sets the inter-port connection of the wavelength multiplexing/demultiplexing means 30-5 in units of wavelengths so that signal light in which signal light including one or more main signals and signal light including an downlink control signal are wavelength-multiplexed, input from the second optical multiplexing/demultiplexing means 70-2 to the upper port, is distributed from the lower port, and is output to the plurality of subscriber devices #k_2 and the path control device 86 that transmit and receive the signal light carrying the downlink control signal to and from the same management control port c of the subscriber device management control unit 21. As described above, the setting of the inter-port connection in units of wavelengths is performed in accordance with control based on the setting instruction from the path control device 86.

**In** this case, in the path control device 86, the signal light including the wavelength-multiplexed main signal input from the second optical multiplexing/demultiplexing means 70-2 to the upper port is separated for each wavelength with respect to the wavelength of the signal light carrying the main signal, and the inter-port connection of the wavelength multiplexing/demultiplexing means 30-5 is set so that the signal light is output from the lower port to each of the plurality of subscriber devices #k_2.

**In** addition, in this case, the path control device 86 dynamically switches the setting of the inter-port connection of the wavelength multiplexing/demultiplexing means 30-5 so that the signal light carrying the downlink control signal is distributed and output from the lower port connected to the subscriber device #k_1 or the path control device 86 which is a destination for each destination of the downlink control signal with respect to the wavelength of the signal light carrying the downlink control signal.

For example, in the configuration of the optical communication system 1m illustrated in Fig. 27, the subscriber device #1_1, the subscriber device #2_1, the subscriber device #3_1, and the path control device 86 transmit and receive the signal light of the uplink control signal to and from the management control port c#1 of the subscriber device management control unit 21. The wavelength multiplexing/demultiplexing means 30-4 wavelength-multiplexes signal light including main signals of a wavelength λ_{1_1}, a wavelength λ_{1_1}, and a wavelength λ_{3_1} and signal light of an uplink control signal of a wavelength λ_{C_UP} input from a port #1, a port #2, and a port #3 which are lower ports connected to the subscriber device #1_1, the subscriber device #2_1, the subscriber device #3_1, respectively, and signal light of an uplink control signal of a wavelength λ_{C_UP} input from a port #N which is a lower port connected to the path control device 86, and outputs the wavelength-multiplexed signal light from the port #1 which is an upper port.

In addition, the wavelength multiplexing/demultiplexing means 30-5 separates signal light including main signals of a wavelength λ_{1_1}, a wavelength λ_{2_1}, and a wavelength λ_{3_1} input from the port #1 which is an upper port for each wavelength, and outputs them from the port #1, the port #2, and the port #3 which are lower ports connected to the subscriber device #1_2, the subscriber device #2_2, and the subscriber device #3_2, respectively. In addition, the wavelength multiplexing/demultiplexing means 30-5 outputs the signal light including the downlink control signal of a wavelength λ_{C_DOWN} input from the port #1 which is an upper port in order from the port #1, the port #2, the port #3, and the port #N which are lower ports connected to the subscriber device #1_2, the subscriber device #2_2, the subscriber device #3_2, and the path control device 86, respectively.

Meanwhile, in order to compensate for the insertion loss of the wavelength multiplexing/demultiplexing means 30-4 and the wavelength multiplexing/demultiplexing means 30-5, similarly to the configuration of the optical communication system 1i in the above-described fifth embodiment, the optical communication system 1m in the present embodiment may also be configured such that the optical amplification means is further provided between the wavelength multiplexing/demultiplexing means 30-4 and the second optical multiplexing/demultiplexing means 70-2 and between the wavelength multiplexing/demultiplexing means 30-5 and the second optical multiplexing/demultiplexing means 70-2.

### [Operation of optical communication system]

Hereinafter, an example of the operation of the optical communication system 1m will be described. Fig. 28 is a flowchart illustrating operations of the optical communication system 1m in the seventh embodiment of the present invention. The operation of the optical communication system 1m shown in the flowchart of Fig. 28 is started when the new subscriber device #k_1 is connected to the network.

In a case where the new subscriber device #k_1 is connected to the network, the subscriber device management control unit 21 of the control unit 20-1 detects the connection of the new subscriber device #k_1 to the network (step S701).

In a case where the connection of the new subscriber device #k_1 to the network is detected, the subscriber device management control unit 21 dispenses a wavelength allocated to the new subscriber device #k_1 from among the unused wavelengths. The subscriber device management control unit 21 transmits and receives management control information to and from the new subscriber device #k_1 using the management control port c. The subscriber device management control unit 21 instructs the new subscriber device #k_1 to set a wavelength, and allocates a wavelength to the subscriber device #k_1. This allows the optical path to be opened (step S702).

The subscriber device management control unit 21 of the control unit 20-1 uses the management control port c to impart permission to transmit the uplink control signal each subscriber device #k_1 on the basis of the value each RTT measured for each subscriber device #k_1 so that the uplink control signal which is burst signal light transmitted from each subscriber device #k_1 does not collide (step S703).

Each subscriber device #k_1 transmits the uplink control signal to the subscriber device management control unit 21 at each timing corresponding to the transmission permission notified of by the subscriber device management control unit 21 (step S704). The operation of the optical communication system 1m shown in the flowchart of Fig. 28 is completed as described above.

As described above, the optical communication system 1m in the seventh embodiment of the present invention includes the wavelength multiplexing/demultiplexing means 30-4, the wavelength multiplexing/demultiplexing means 30-5, and the plurality of second optical multiplexing/demultiplexing means 70-2. The subscriber device #k_1 outputs the main signal and the uplink control signal addressed to the subscriber device management control unit 21 of the control unit 20-1 to the wavelength multiplexing/demultiplexing means 30-4 at different wavelengths from each other. The wavelength multiplexing/demultiplexing means 30-4 multiplexes the signals transmitted from the plurality of subscriber devices #k_1 and outputs the multiplexes signals to the second optical multiplexing/demultiplexing means 70-2. The second optical multiplexing/demultiplexing means 70-2 separates the multiplexed signal output from the wavelength multiplexing/demultiplexing means 30-4 into a main signal and an uplink control signal, outputs the main signal to the light distribution means 10-1, and outputs the uplink control signal to the management control port c of the subscriber device management control unit 21 of the control unit 20-1. In addition, the subscriber device management control unit 21 of the control unit 20-2 outputs a downlink control signal addressed to the subscriber device #k_2 at a wavelength different from that of the optical carrier carrying the main signal. The second optical multiplexing/demultiplexing means 70-2 multiplexes the main signal input from the light distribution means 10-2 and the downlink control signal input from the management control port c of the subscriber device management control unit 21, and outputs the multiplexed signal to the wavelength multiplexing/demultiplexing means 30-5. The wavelength multiplexing/demultiplexing means 30-5 distributes and outputs the signal output from the second optical multiplexing/demultiplexing means 70-2 to the plurality of subscriber devices #k_2.

As described above, the subscriber device #k_1 outputs the signal light (burst signal light) of the uplink control signal including the uplink control signal to the subscriber device management control unit 21 of the control unit 20-1 only in the permitted time slot. The subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the burst signal light transmitted from each subscriber device #k_1 does not collide.

Further, in the optical communication system 1m in the seventh embodiment, the same management control port c transmits and receives a control signal to and from the subscriber device #k_1 before and after the optical path is opened. The management control port c transmits and receives the control signal to and from the subscriber device #k_1 before the optical path is opened through the second optical multiplexing/demultiplexing means 70-2, the wavelength multiplexing/demultiplexing means 30-4, or the wavelength multiplexing/demultiplexing means 30-5. In addition, the management control port c transmits and receives the control signal to and from the subscriber device #k_1 after the optical path is opened through the second optical multiplexing/demultiplexing means 70-2, the wavelength multiplexing/demultiplexing means 30-4, or the wavelength multiplexing/demultiplexing means 30-5.

With the above-described configuration, the optical communication system 1m in the seventh embodiment of the present invention transmits and receive a control signal between the subscriber device management control unit 21 and the subscriber device #k_1 using the same management control port c before and after the optical path is opened, so that the subscriber device management control unit 21 can be configured more simply than the optical communication system 1a in the first embodiment. In addition, with the above-described configuration, the optical communication system 1m in the seventh embodiment can allow the management control port c of the subscriber device management control unit 21 to be shared between the plurality of subscriber devices #k_1. Thus, according to the optical communication system 1m, it is not necessary to provide the management control port c of the subscriber device management control unit 21 for each subscriber device #k_1. Thus, the optical communication system 1m in the seventh embodiment of the present invention can transmit and receive a control signal between the subscriber device management control unit 21 and the subscriber device #k_1 after the optical path is opened once with a simple configuration of the subscriber device management control unit 21.

As described above, in the optical communication systems in each of the above-described embodiments and the modification example of each of the embodiments, the subscriber device management control unit 21 of the control unit 20-1 recognizes the round trip time (RTT) of the control signal between the subscriber device #k_1 and its own subscriber device management control unit 21 for each subscriber device #k_1, and imparts permission to transmit the uplink control signal to each subscriber device #k_1 on the basis of the value of RTT so that the uplink control signal which is burst signal light transmitted from each subscriber device #k_1 does not collide.

With such a configuration, the optical communication systems in each of the above-described embodiments and the modification example of each of the embodiments can share the management control port of the subscriber device management control unit 21 (the management control port c in the optical communication systems 1a to 1band the management control port c in the optical communication systems 1c to 1m) between the plurality of subscriber devices #k_1, and can transmit and receive the control signal between the subscriber device management control unit 21 and the subscriber device #k_1 after the optical path is opened once with a simple configuration of the subscriber device management control unit 21 while suppressing an increase in the scale of the configuration of the subscriber device management control unit.

In addition, according to the optical communication systems in the fourth to seventh embodiments described above, since the signal light carrying the uplink control signal is transferred to the management control port of the subscriber device management control unit 21 or the signal light carrying the downlink control signal is multiplexed with the signal light carrying the main signal, it is not necessary to provide the optical components by the number of optical paths.

In addition, in a case where a plurality of subscriber devices are installed in the same base or in the vicinity of the base, the first optical multiplexing/demultiplexing means 70-1 in the fourth and fifth embodiments, the second light distribution means 10b-1 and the second light distribution means 10b-2 in the sixth embodiment, and the wavelength multiplexing/demultiplexing means 30-4 and the wavelength multiplexing/demultiplexing means 30-5 in the seventh embodiment are provided in the base where the subscriber devices are installed or in the vicinity of the base, and these functional units have a configuration of line concentration. Therefore, the optical fiber transmission line between the line concentration point and the light distribution means is shared by the plurality of subscriber devices #k_1 and subscriber devices #k_2.

This makes it possible to mutually transmit and receive control signals between the subscriber device management control unit 21 and the subscriber device #k_1 after the optical path is opened once without providing optical fiber transmission lines equivalent to the number of subscriber devices. In addition, this makes it possible for the subscriber device management control unit 21 to increase the number of subscriber devices #k_1 and subscriber devices #k_2 capable of mutually transmitting and receiving control signals for a fixed number of ports of the light distribution means 10-1 and the light distribution means 10-2.

According to the above-described embodiment, an optical communication system includes a communication control unit(a communication controller) and an optical multiplexing/demultiplexing unit(an optical multiplexer/demultiplexer). For example, the optical communication system is the optical communication systems 1a to 1g in the embodiment, the communication control unit is the subscriber device management control unit 21 in the embodiment, and the optical multiplexing/demultiplexing unit is the first optical multiplexing/demultiplexing means 70-1 and the second optical multiplexing/demultiplexing means 70-2 in the embodiment. The above-described communication control unit controls opening of an optical path between any of a plurality of first communication devices and any of a plurality of second communication devices. For example, the plurality of first communication devices are the plurality of subscriber devices #k_1 (k = 1, 2, ···) in the embodiment, and the plurality of second communication devices are the plurality of subscriber devices #k_2 (k = 1, 2, ···) in the embodiment. The above-described optical multiplexing/demultiplexing unit multiplexes/demultiplexes signal light of a control signal transferred between each of the plurality of first communication devices and the communication control unit after the optical path is opened. For example, the signal light of the control signal is signal light including an uplink control signal and signal light including a downlink control signal in the embodiment.

The above-described communication control unit controls reception timings of an uplink control signal transmitted from each of the plurality of first communication devices to the communication control unit to be different from each other by permitting each of the plurality of first communication devices to transmit the uplink control signal on the basis of each round trip time (RTT) of signal light reciprocating between the communication control unit and each of the plurality of first communication devices. For example, the reciprocating signal light is signal light including a downlink control signal transmitted from the subscriber device management control unit 21 of the control unit 20-1 to the subscriber device #k_1 and signal light including an uplink control signal transmitted from the subscriber device #k_1 to the subscriber device management control unit 21 of the control unit 20-1 in the embodiment.

Meanwhile, in the above-described optical communication system, the communication control unit performs control so that the uplink control signal transmitted from each of the plurality of first communication devices to the communication control unit is time-division multiplexed and transmitted.

Meanwhile, in the above-described optical communication system, the optical multiplexing/demultiplexing unit may further multiplex/demultiplex the signal light of the control signal transferred between each of the plurality of first communication devices and the communication control unit before the optical path is opened. For example, the optical communication system is the optical communication systems 1d to 1g in the embodiment. That is, as in the configurations of the optical communication systems 1d to 1g shown in Figs. 12 to 16 and 18, the optical multiplexing/demultiplexing unit may be configured to multiplex/demultiplex not only the signal light of the control signal transmitted and received after the optical path is opened but also the signal light of the control signal transmitted and received before the optical path is opened. In this case, the communication control unit may perform control so that the uplink control signal transmitted from each of the plurality of first communication devices to the communication control unit and the main signal transmitted from each of the first communication devices to any of the second communication devices are time-division multiplexed and transmitted.

Meanwhile, in the above-described optical communication system, the communication control unit may transmit and receive the control signal using the same communication port before the optical path is opened and after the optical path is opened. For example, the optical communication system is the optical communication systems 1c to 1g in the embodiment, and the same communication port is the management control port c of the subscriber device management control unit 21 in the embodiment.

Meanwhile, the above-described optical communication system may further include a dispersion compensation unit(a dispersion compensator) that compensates for wavelength dispersion occurring in a transmission path of signal light between the first communication device and the second communication device. For example, the optical communication system is the optical communication systems 1f to 1g in the embodiment, the signal light is signal light including a main signal in the embodiment, and the dispersion compensation unit is the plurality of dispersion compensation means 80-1 and the plurality of dispersion compensation means 80-2 in the embodiment. In this case, the communication control unit may measure a first distance between the communication control unit and the first communication device on the basis of the round trip time (RTT) and the speed of light, calculate a second distance between the first communication device and the second communication device on the basis of the first distance, and calculate a necessary amount of wavelength dispersion compensation on the basis of the second distance and a wavelength of the signal light transmitted from the first communication device. In addition, in this case, the dispersion compensation unit may compensate for wavelength dispersion of the wavelength dispersion compensation amount calculated by the communication control unit. For example, the round trip time is the RTT of the control signal between the subscriber device management control unit 21 of the control unit 20-1 in the embodiment and a subscriber device #k_1 newly connected to a network, the first distance is a distance between the subscriber device management control unit 21 of the control unit 20-1 in the embodiment and a subscriber device #k_1 newly connected to the network, the second distance is a distance between a subscriber device #k_1 newly connected to the network in the embodiment and the subscriber device #k_2 which is a communication partner of the subscriber device #k_1, and the wavelength of the signal light transmitted from the first communication device is a wavelength of signal light including a main signal in the embodiment.

Meanwhile, in the above-described optical communication system, the optical multiplexing/demultiplexing unit may multiplex signal light in which signal light of a main signal and signal light of the uplink control signal, input from each of the plurality of first communication devices, are multiplexed, and demultiplex signal light in which the signal light of the main signal and signal light of a downlink control signal are multiplexed, and output the signal light to each of the plurality of second communication devices. **In** this case, for example, the optical multiplexing/demultiplexing unit is the first optical multiplexing/demultiplexing means 70-1 in the embodiment.

Meanwhile, in the above-described optical communication system, the optical multiplexing/demultiplexing unit may multiplex signal light of a main signal which is output from each of the plurality of first communication devices, multiplexed, and then amplified with signal light of the uplink control signal which is output from each of the plurality of first communication devices and multiplexed, demultiplex signal light in which the signal light of the main signal and signal light of a downlink control signal are multiplexed, output the signal light of the main signal to an amplifier, and output the signal light of the downlink control signal to the second communication device.

Meanwhile, the above-described optical communication system may further include a path control unit(a path controller). For example, the path control unit is the path control device 86 in the embodiment. The path control unit controls switching of a signal path performed by the optical multiplexing/demultiplexing unit. For example, the optical multiplexing/demultiplexing unit is the second light distribution means 10b-1 and the second light distribution means 10b-2 in the embodiment. The path control unit controls the optical multiplexing/demultiplexing unit so that signal light input from a lower port of the optical multiplexing/demultiplexing unit is multiplexed in any combination and output from an optional upper port, and that signal light input from the upper port of the optical multiplexing/demultiplexing unit is output from one or more optional lower ports.

Meanwhile, the above-described optical communication system may further include a path control unit. For example, the path control unit is the path control device 86 in the embodiment. The path control unit controls setting of a signal path performed by the optical multiplexing/demultiplexing unit. For example, the optical multiplexing/demultiplexing unit is the wavelength multiplexing/demultiplexing means 30-4 and the wavelength multiplexing/demultiplexing means 30-5 in the embodiment. The optical multiplexing/demultiplexing unit is configured to be capable of setting a wavelength transmitted between an upper port and a lower port in units of wavelengths. The path control unit controls the setting of the signal path of signal light of the uplink control signal and signal light of a downlink control signal by controlling inter-port connection of the optical multiplexing/demultiplexing unit in units of the wavelengths.

**In** addition, according to the above-described embodiment, a communication control device(apparatus) controls opening of an optical path between any of a plurality of first communication devices and any of a plurality of second communication devices. For example, the communication control device is a device including the control unit 20-1 and the control unit 20-2 in the embodiment, the plurality of first communication devices are the plurality of subscriber devices #k_1 (k = 1, 2, ···) in the embodiment, and the plurality of second communication devices are the plurality of subscriber devices #k_2 (k = 1, 2, ···) in the embodiment.

The above-described communication control device(apparatus) includes a control unit(a controller). For example, the control unit is the subscriber device management control unit 21 in the embodiment. The above control unit controls reception timings of an uplink control signal transmitted from each of the plurality of first communication devices to its own device to be different from each other by permitting each of the plurality of first communication devices to transmit the uplink control signal on the basis of each round trip time of signal light reciprocating between its own device and each of the plurality of first communication devices. For example, the reciprocating signal light is signal light including a downlink control signal transmitted from the subscriber device management control unit 21 of the control unit 20-1 to the subscriber device #k_1 and signal light including an uplink control signal transmitted from the subscriber device #k_1 to the subscriber device management control unit 21 of the control unit 20-1 in the embodiment.

Some of the components of the optical communication system 1a to the optical communication system 1g in the embodiments described above may be realized by a computer. In such a case, the program for realizing this function may be recorded on a computer-readable recording medium, and the program recorded on the recording medium may be read and executed by the computer system. Meanwhile, the "computer system" mentioned herein includes an OS and hardware such as peripheral equipment. In addition, the "computer-readable recording medium" refers to a portable medium such as a flexible disk, a magneto-optical disk, a ROM, or a CD-ROM or a storage device such as a hard disk that is built into the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside a computer system serving as a server or a client in that case. In addition, the foregoing program may be for implementing some of the functions described above, may be implemented in a combination of the functions described above and a program already recorded in a computer system, or may be implemented with a programmable logic device such as a field programmable gate array (FPGA).

Although the embodiment of the present invention has been described in detail with reference to the drawings, a specific configuration is not limited to this embodiment, and design within the scope of the gist of the present invention, and the like are included.

### Reference Signs List

1, 1', 1a to 1g Optical communication system
10-1, 10-2 Light distribution means
20-1, 20-2 Control unit
21 Subscriber device management control unit
22 Light distribution control unit
30-1, 30-2 Wavelength multiplexing/demultiplexing means
40 Wavelength filter
50 Optical fiber transmission line
60 Optical communication network (NW)
70 Optical multiplexing/demultiplexing means
80-1, 80-2 Dispersion compensation means
91-1, 91-2 Wavelength filter
92-1, 92-2 Photodiode (PD)
   93 Optical demultiplexing means

## Claims

1. An optical communication system comprising:
a communication control unit configured to control opening of an optical path between any of a plurality of first communication devices and any of a plurality of second communication devices; and
an optical multiplexing/demultiplexing unit configured to multiplex/demultiplex signal light of a control signal transferred between each of the plurality of first communication devices and the communication control unit after the optical path is opened,
wherein the communication control unit controls reception timings of an uplink control signal transmitted from each of the plurality of first communication devices to the communication control unit to be different from each other by permitting each of the plurality of first communication devices to transmit the uplink control signal on the basis of each round trip time of signal light reciprocating between the communication control unit and each of the plurality of first communication devices.

2. The optical communication system according to claim 1, wherein the communication control unit performs control so that the uplink control signal transmitted from each of the plurality of first communication devices to the communication control unit is time-division multiplexed and transmitted.

3. The optical communication system according to claim 1, wherein the communication control unit performs control so that the uplink control signal transmitted from each of the plurality of first communication devices to the communication control unit and a main signal transmitted from each of the first communication devices to any of the second communication devices are time-division multiplexed and transmitted.

4. The optical communication system according to claim 1, wherein the communication control unit transmits and receives the control signal using the same communication port before the optical path is opened and after the optical path is opened.

5. The optical communication system according to any one of claims 1 to 4, further comprising a dispersion compensation unit configured to compensate for wavelength dispersion occurring in a transmission path of signal light between the first communication device and the second communication device,
wherein the communication control unit measures a first distance between the communication control unit and the first communication device on the basis of the round trip time and the speed of light, calculates a second distance between the first communication device and the second communication device on the basis of the first distance, and calculates a necessary amount of wavelength dispersion compensation on the basis of the second distance and a wavelength of the signal light transmitted from the first communication device, and
the dispersion compensation unit compensates for wavelength dispersion of the wavelength dispersion compensation amount calculated by the communication control unit.

6. The optical communication system according to claim 1, wherein the optical multiplexing/demultiplexing unit multiplexes signal light in which signal light of a main signal and signal light of the uplink control signal, input from each of the plurality of first communication devices, are multiplexed, demultiplexes signal light in which the signal light of the main signal and signal light of a downlink control signal are multiplexed, and outputs the signal light to each of the plurality of second communication devices.

7. The optical communication system according to claim 1, wherein the optical multiplexing/demultiplexing unit multiplexes signal light of a main signal which is output from each of the plurality of first communication devices, multiplexed, and then amplified with signal light of the uplink control signal which is output from each of the plurality of first communication devices and multiplexed, demultiplexes signal light in which the signal light of the main signal and signal light of a downlink control signal are multiplexed, outputs the signal light of the main signal to an amplifier, and outputs the signal light of the downlink control signal to the second communication device.

8. The optical communication system according to claim 1, further comprising a path control unit configured to control switching of a signal path performed by the optical multiplexing/demultiplexing unit,
wherein the path control unit controls the optical multiplexing/demultiplexing unit so that signal light input from a lower port of the optical multiplexing/demultiplexing unit is multiplexed in any combination and output from an optional upper port, and that signal light input from the upper port of the optical multiplexing/demultiplexing unit is output from one or more optional lower ports.

9. The optical communication system according to claim 1, further comprising a path control unit configured to control setting of a signal path performed by the optical multiplexing/demultiplexing unit,
wherein the optical multiplexing/demultiplexing unit is configured to be capable of setting a wavelength transmitted between an upper port and a lower port in units of wavelengths, and
the path control unit controls the setting of the signal path of signal light of the uplink control signal and signal light of a downlink control signal by controlling inter-port connection of the optical multiplexing/demultiplexing unit in units of the wavelengths.

10. A communication control device configured to control opening of an optical path between any of a plurality of first communication devices and any of a plurality of second communication devices,
wherein the communication control device comprises a control unit configured to control reception timings of an uplink control signal transmitted from each of the plurality of first communication devices to its own device to be different from each other by permitting each of the plurality of first communication devices to transmit the uplink control signal on the basis of each round trip time of signal light reciprocating between its own device and each of the plurality of first communication devices.

11. An optical path opening method executed by a computer of an optical communication system having a communication control unit configured to control opening of an optical path between any of a plurality of first communication devices and any of a plurality of second communication devices, and an optical multiplexing/demultiplexing unit configured to multiplex/demultiplex signal light of a control signal transferred between each of the plurality of first communication devices and the communication control unit after the optical path is opened, the method comprising:
an acquisition step of acquiring information indicating each round trip time of signal light reciprocating between the communication control unit and each of the plurality of first communication devices; and
a control step of controlling reception timings of an uplink control signal transmitted from each of the plurality of first communication devices to the communication control unit to be different from each other by permitting each of the plurality of first communication devices to transmit the uplink control signal on the basis of the round trip time.

12. An optical path opening method executed by a computer of a communication control device configured to control opening of an optical path between any of a plurality of first communication devices and any of a plurality of second communication devices, the method comprising:
an acquisition step of acquiring information indicating each round trip time of signal light reciprocating between the communication control device and each of the plurality of first communication devices; and
a control step of controlling reception timings of an uplink control signal transmitted from each of the plurality of first communication devices to the communication control device to be different from each other by permitting each of the plurality of first communication devices to transmit the uplink control signal on the basis of the round trip time.
